(19) **Europäisches Patentamt European Patent Office Office européen des brevets**

(11) **EP 4 617 759 A1**

(12) **EUROPEAN PATENT APPLICATION**

(43) Date of publication:
**17.09.2025 Bulletin 2025/38**

(21) Application number: **25162706.3**

(22) Date of filing: **10.03.2025**

(51) International Patent Classification (IPC):
**G02B 15/14** (2006.01)       **G02B 15/167** (2006.01)
**G02B 15/20** (2006.01)

(52) Cooperative Patent Classification (CPC):
**G02B 15/1465; G02B 15/1461; G02B 15/167; G02B 15/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.03.2024 JP 2024039330**

(71) Applicant: **FUJIFILM Corporation Tokyo 106-8620 (JP)**

(72) Inventors:
- **TANAKA, Takuya Saitama, 331-9624 (JP)**
- **SHIMADA, Yasutaka Saitama, 331-9624 (JP)**
- **SHIMAZAKI, Kota Saitama, 331-9624 (JP)**

(74) Representative: **Klunker IP Patentanwälte PartG mbB Destouchesstraße 68 80796 München (DE)**

(54) **ZOOM LENS AND IMAGING APPARATUS**

(57)     A zoom lens includes: a first lens group having a positive refractive power that is disposed closest to an object side; a middle group that includes a plurality of lens groups; and a final lens group that is disposed closest to an image side. All of spacings between adjacent lens groups change during changing magnification. The first lens group includes two negative lenses consecutively arranged in order from a position closest to the object side to the image side, and among the two negative lenses, a negative lens closer to the object side is a meniscus lens that has a convex surface facing the object side. The zoom lens satisfies Conditional Expression of 0.1 < fw/f1 < 0.8 regarding a focal length f1 of the first lens group and a focal length fw of the zoom lens at a wide angle end.

FIG. 1

EXAMPLE 1

**Description**

BACKGROUND

Technical Field

The present disclosed technology relates to a zoom lens and an imaging apparatus.

Related Art

In the related art, as a zoom lens that can be used in an imaging apparatus such as a broadcasting camera or a film making camera, a zoom lens described in JP2019-078849A is known.

SUMMARY

There is a demand for a zoom lens that is configured with a large image circle, a wide angle, and a small size and that has favorable optical performance. The demand level is increasing year by year.

The present disclosure provides a zoom lens that is configured with a large image circle, a wide angle of view, and a small size and that has favorable optical performance, and an imaging apparatus comprising the zoom lens.

According to a first aspect of the present disclosure, there is provided a zoom lens comprising: a first lens group having a positive refractive power that is disposed closest to an object side; a middle group that includes a plurality of lens groups; and a final lens group that is disposed closest to an image side, in which all of spacings between adjacent lens groups change during changing magnification, the first lens group includes two negative lenses consecutively arranged in order from a position closest to the object side to the image side, among the two negative lenses, a negative lens closer to the object side is a meniscus lens that has a convex surface facing the object side, and Conditional Expression (1) represented by

$$0.1 < fw/f1 < 0.8 \quad (1)$$

is satisfied. Here, a focal length of a whole system in a state where an infinite distance object is in focus at a wide angle end is represented by fw. A focal length of the first lens group is represented by f1.

According to a second aspect of the present disclosure, in the zoom lens according to the first aspect, Conditional Expression (2) represented by

$$0.1 < H1f/Hft < 0.95 \quad (2)$$

is satisfied. Here, a distance on an optical axis from a lens surface closest to the object side in the first lens group to an object side principal point position of the first lens group in a state where the infinite distance object is in focus is represented by H1f. A distance on the optical axis from the lens surface closest to the object side in the first lens group to an object side principal point position of the whole system in a state where the infinite distance object is in focus at a telephoto end is represented by Hft. The object side is negative and the image side is positive regarding signs of H1f and Hft with reference to the lens surface closest to the object side in the first lens group.

According to a third aspect of the present disclosure, in the zoom lens according to the first aspect, an L1n lens having a negative refractive power is disposed adjacent to the image side of an L1p lens that is a positive lens closest to the object side among positive lenses in the first lens group.

According to a fourth aspect of the present disclosure, in the zoom lens according to the first aspect, Conditional Expression (2-1) represented by

$$0.28 < H1f/Hft < 0.7 \quad (2-1)$$

is satisfied. The definitions of the symbols of Conditional Expression (2-1) are the same as those of Conditional Expression (2) of the second aspect.

According to a fifth aspect of the present disclosure, in the zoom lens according to the first aspect, in a case where a spacing on an optical axis between an object side principal point position of the first lens group and an image side principal point position of the first lens group in a state where the infinite distance object is in focus is represented by HD1, Conditional Expression (3) represented by

$$1.4 < HD1/f1 < 2.16 \quad (3)$$

is satisfied.

According to a sixth aspect of the present disclosure, in the zoom lens according to the first aspect, the first lens group consists of a first a partial group, a first b partial group, and a first c partial group in order from the object side to the image side, and during focusing, a spacing between the first a partial group and the first b partial group changes and a spacing between the first b partial group and the first c partial group changes.

According to a seventh aspect of the present disclosure, in the zoom lens according to the sixth aspect, in a case where a focal length of the first b partial group is represented by f1b, Conditional Expression (4) represented by

$$0.3 < f1/f1b < 1 \quad (4)$$

is satisfied.

According to an eighth aspect of the present disclosure, in the zoom lens according to the sixth aspect, a lens closest to the image side in the first a partial group is a negative lens.

According to a ninth aspect of the present disclosure, in the zoom lens according to the eighth aspect, a positive lens is disposed adjacent to the object side of the negative lens closest to the image side in the first a partial group.

According to a tenth aspect of the present disclosure, in the zoom lens according to the sixth aspect, the first a partial group has a negative refractive power.

According to an eleventh aspect of the present disclosure, in the zoom lens according to the sixth aspect, the first b partial group has a positive refractive power.

According to a twelfth aspect of the present disclosure, in the zoom lens according to the sixth aspect, the first c partial group has a positive refractive power.

According to a thirteenth aspect of the present disclosure, in the zoom lens according to the sixth aspect, during focusing from the infinite distance object to a close distance object, the first a partial group and the first c partial group are fixed to an image plane and the first b partial group moves toward the image side.

According to a fourteenth aspect of the present disclosure, in the zoom lens of the first aspect, during changing magnification, the first lens group is fixed to an image plane.

According to a fifteenth aspect of the present disclosure, in the zoom lens of the first aspect, during changing magnification, the final lens group is fixed to an image plane.

According to a sixteenth aspect of the present disclosure, in the zoom lens of the first aspect, the first lens group includes six or more lenses.

According to a seventeenth aspect of the present disclosure, the zoom lens of the first aspect comprises an aperture stop that is fixed to an image plane during changing magnification.

According to an eighteenth aspect of the present disclosure, in the zoom lens of the first aspect, Conditional Expression (5) represented by

$$0.7 < H1r/f1 < 1.5 \quad (5)$$

is satisfied. Here, a distance on an optical axis from a lens surface closest to the image side in the first lens group to an image side principal point position of the first lens group in a state where the infinite distance object is in focus is represented by H1r. The object side is negative and the image side is positive regarding a sign of H1r with reference to the lens surface closest to the image side in the first lens group.

According to a nineteenth aspect of the present disclosure, in the zoom lens according to the first aspect, Conditional Expression (6) represented by

$$0.7 < H1f/f1 < 2 \quad (6)$$

is satisfied. Here, a distance on an optical axis from a lens surface closest to the object side in the first lens group to an object side principal point position of the first lens group in a state where the infinite distance object is in focus is represented by H1f. The object side is negative and the image side is positive regarding a sign of H1f with reference to the lens surface closest to the object side in the first lens group.

According to a twentieth aspect of the present disclosure, in the zoom lens according to the third aspect, in a case where a refractive index of the L1p lens with respect to a d line is represented by N1p, Conditional Expression (7) represented by

$$1.7 < N1p < 2.1 \quad (7)$$

is satisfied.

According to a twenty-first aspect of the present disclosure, in the zoom lens according to the third aspect, in a case where an Abbe number of the L1p lens with respect to a d line is represented by v1p, Conditional Expression (8) represented by

$$15 < v1p < 30 \quad (8)$$

is satisfied.

According to a twenty-second aspect of the present disclosure, in the zoom lens according to the third aspect, in a case where a refractive index of the L1n lens with respect to a d line is represented by N1n, Conditional Expression (9) represented by

$$1.43 < N1n < 1.85 \quad (9)$$

is satisfied.

According to a twenty-third aspect of the present disclosure, in the zoom lens according to the third aspect, in a case where an Abbe number of the L1n lens with respect to a d line is represented by v1n, Conditional Expression (10) represented by

$$30 < v1n < 60 \quad (10)$$

is satisfied.

According to a twenty-fourth aspect of the present disclosure, in the zoom lens according to the third aspect, in a case where an average value of Abbe numbers of all of negative lenses closer to the object side than the L1p lens with respect to a d line is represented by v1nave, Conditional Expression (11) represented by

$$35 < v1nave < 60 \quad (11)$$

is satisfied.

According to a twenty-fifth aspect of the present disclosure, in the zoom lens according to the third aspect, in a case where an average value of partial dispersion ratios between a g line and a F line in all of negative lenses closer to the object side than the L1p lens is represented by θ1nave, Conditional Expression (12) represented by

$$0.5 < \theta1nave < 0.6 \quad (12)$$

is satisfied.

According to a twenty-sixth aspect of the present disclosure, in the zoom lens according to the first aspect, in a case where a distance on an optical axis from a lens surface closest to the object side in the first lens group to a paraxial entrance pupil position in a state where the infinite distance object is in focus at the wide angle end is represented by Denw, Conditional Expression (13) represented by

$$2 < Denw/fw < 3.5 \quad (13)$$

is satisfied.

According to a twenty-seventh aspect of the present disclosure, in the zoom lens according to the sixth aspect, in a case where a focal length of the first a partial group is represented by f1a, Conditional Expression (14) represented by

$$-2 < f1/f1a < 0 \quad (14)$$

is satisfied.

According to a twenty-eighth aspect of the present disclosure, in the zoom lens according to the sixth aspect, in a case where a focal length of the first c partial group is represented by f1c, Conditional Expression (15) represented by

$$0.3 < f1/f1c < 0.8 \quad (15)$$

is satisfied.

According to a twenty-ninth aspect of the present disclosure, in the zoom lens according to the first aspect, in a case where a paraxial curvature radius of an image side surface of a lens closest to the object side in the first lens group is represented by R2, and a paraxial curvature radius of an object side surface of a second lens from the object side of the first lens group is R3, Conditional Expression (16) represented by

$$-3 < (R2 - R3)/(R2 + R3) < 0 \quad (16)$$

is satisfied.

According to a thirtieth aspect of the present disclosure, in the zoom lens according to the first aspect, in a case where an air spacing having a longest distance among air spacings on an optical axis in the final lens group in a state where the infinite distance object is in focus at the wide angle end is defined as a longest air spacing, an EX group that is inserted into an optical path of the longest air spacing to change a focal length of the zoom lens while keeping an imaging position constant is insertably and removably disposed.

According to a thirty-first aspect of the present disclosure, in the zoom lens according to the thirtieth aspect, the EX group is inserted and removed to change a maximum image height.

According to a thirty-second aspect of the present disclosure, in the zoom lens according to the first aspect, Conditional Expression (17) represented by

$$0.03 < d1R/IHw < 0.097 \quad (17)$$

is satisfied. Here, a distance on an optical axis from a lens surface closest to the image side in the first lens group to a lens surface adjacent to the image side of the lens surface closest to the image side in the first lens group in a state where the infinite distance object is in focus at the wide angle end is represented by d1R. A maximum image height in a state where the infinite distance object is in focus at the wide angle end is represented by IHw.

According to a thirty-third aspect of the present disclosure, there is provided an imaging apparatus comprising the zoom lens according to any one of the first to thirty-second aspects.

In the present specification, it should be noted that the terms "consisting of" and "consists of" mean that the lens may include not only the above-mentioned components but also lenses substantially having no refractive powers, optical elements other than lenses, such as a stop, a filter, and cover glass, and mechanism parts such as a lens flange, a lens barrel, an imaging element, and a camera shaking correction mechanism.

In the present specification, "group that has a positive refractive power" and "group has a positive refractive power" represents that the group as a whole has a positive refractive power. Likewise, "group that has a negative refractive power" and "group has a negative refractive power" represents that the group as a whole has a negative refractive power. The term "a lens that has a negative refractive power" and the term "negative lens" are synonymous. In the present specification, "lens group" and "focusing group" are not limited to a configuration consisting of a plurality of lenses, but may consist of only one lens.

A compound aspherical lens (in which a lens (for example, a spherical lens) and an aspherical film formed on the lens are integrally formed and function as one aspherical lens as a whole) is not regarded as a cemented lens, but the compound aspherical lens is regarded as one lens. Regarding a lens having an aspherical surface, a curvature radius, the sign of a refractive power, and a surface shape, those in a paraxial region are used unless otherwise specified. The sign of the curvature radius of a surface that is convex to the object side is positive, and the sign of the curvature radius of a that is convex to the image side is negative.

"Whole system" in the present specification means a zoom lens. "Back focus in terms of an air conversion distance" is an air conversion distance on the optical axis from a lens surface closest to the image side in the zoom lens to the image plane. The "focal length" used in a conditional expression is a paraxial focal length. Unless otherwise specified, the "distance on the optical axis" used in Conditional Expression is considered as a geometrical distance. The values used in the conditional expressions are values with respect to the d line in a state where the infinite distance object is in focus unless otherwise specified.

The "d line", "C line", "F line", and "g line" described in the present specification are emission lines. The wavelength of the d line is 587.56 nm (nanometers), the wavelength of the C line is 656.27 nm (nanometers), the wavelength of F line is 486.13 nm (nanometers), and the wavelength of g line is 435.84 nm (nanometers).

According to the present disclosure, it is possible to provide a zoom lens that is configured with a large image circle, a wide angle of view, and a small size and that has favorable optical performance, and an imaging apparatus comprising the zoom lens.

BRIEF DESCRIPTION OF THE DRAWINGS

Fig. 1 is a cross-sectional view showing a configuration of a zoom lens according to an embodiment and a diagram showing movement loci thereof, the zoom lens corresponding to a zoom lens according to Example 1.

Fig. 2 is a cross-sectional view of a configuration of a first lens group of the zoom lens of Fig. 1 and a diagram for describing symbols of conditional expressions.

Fig. 3 is a cross-sectional view of a configuration of a telephoto end state of the zoom lens of Fig. 1 and a diagram for describing symbols of conditional expressions.

Fig. 4 is a diagram showing insertion and removal of an EX group in a wide angle end state of the zoom lens of Fig. 1 and is a diagram for describing symbols of conditional expressions.

Fig. 5 is a diagram showing an effective radius.

Fig. 6 is a cross-sectional view showing a configuration of a zoom lens according to Example 1-1.

Fig. 7 shows each of aberration diagrams in the zoom lens according to Example 1.

Fig. 8 shows each of aberration diagrams in the zoom lens according to Example 1-1.

Fig. 9 is a cross-sectional view showing a configuration of a zoom lens according to Example 2 and a diagram showing movement loci thereof.

Fig. 10 shows each of aberration diagrams in the zoom lens according to Example 2.

Fig. 11 is a cross-sectional view showing a configuration of a wide angle end state of a zoom lens according to Example 2-1.

Fig. 12 shows each of aberration diagrams in the zoom lens according to Example 2-1.

Fig. 13 is a cross-sectional view showing a configuration of a zoom lens according to Example 3 and a diagram showing movement loci thereof.

Fig. 14 shows each of aberration diagrams in the zoom lens according to Example 3.

Fig. 15 is a cross-sectional view showing a configuration of a wide angle end state of a zoom lens according to Example 3-1.

Fig. 16 shows each of aberration diagrams in the zoom lens according to Example 3-1.

Fig. 17 is a cross-sectional view showing a configuration of a zoom lens according to Example 4 and a diagram showing movement loci thereof.

Fig. 18 shows each of aberration diagrams in the zoom lens according to Example 4.

Fig. 19 is a cross-sectional view showing a configuration of a wide angle end state of a zoom lens according to Example 4-1.

Fig. 20 shows each of aberration diagrams in the zoom lens according to Example 4-1.

Fig. 21 is a cross-sectional view showing a configuration of a zoom lens according to Example 5 and a diagram showing movement loci thereof.

Fig. 22 shows each of aberration diagrams in the zoom lens according to Example 5.

Fig. 23 is a cross-sectional view showing a configuration of a wide angle end state of a zoom lens according to Example 5-1.

Fig. 24 shows each of aberration diagrams in the zoom lens according to Example 5-1.

Fig. 25 is a cross-sectional view showing a configuration of a zoom lens according to Example 6 and a diagram showing movement loci thereof.

Fig. 26 shows each of aberration diagrams in the zoom lens according to Example 6.

Fig. 27 is a cross-sectional view showing a configuration of a wide angle end state of a zoom lens according to Example 6-1.

Fig. 28 shows each of aberration diagrams in the zoom lens according to Example 6-1.

Fig. 29 is a cross-sectional view showing a configuration of a zoom lens according to Example 7 and a diagram showing movement loci thereof.

Fig. 30 shows each of aberration diagrams in the zoom lens according to Example 7.

Fig. 31 is a cross-sectional view showing a configuration of a wide angle end state of a zoom lens according to Example 7-1.

Fig. 32 shows each of aberration diagrams in the zoom lens according to Example 7-1.

Fig. 33 is a cross-sectional view showing a configuration of a zoom lens according to Example 8 and a diagram showing movement loci thereof.

Fig. 34 shows each of aberration diagrams in the zoom lens according to Example 8.

Fig. 35 is a cross-sectional view showing a configuration of a wide angle end state of a zoom lens according to Example 8-1.

Fig. 36 shows each of aberration diagrams in the zoom lens according to Example 8-1.

Fig. 37 is a cross-sectional view showing a configuration of a zoom lens according to Example 9 and a diagram showing movement loci thereof.

Fig. 38 shows each of aberration diagrams in the zoom lens according to Example 9.

Fig. 39 is a cross-sectional view showing a configuration of a wide angle end state of a zoom lens according to Example 9-1.

Fig. 40 shows each of aberration diagrams in the zoom lens according to Example 9-1.

Fig. 41 is a cross-sectional view showing a configuration of a zoom lens according to Example 10 and a diagram showing movement loci thereof.

Fig. 42 shows each of aberration diagrams in the zoom lens according to Example 10.

Fig. 43 is a cross-sectional view showing a configuration of a wide angle end state of a zoom lens according to Example 10-1.

Fig. 44 shows each of aberration diagrams in the zoom lens according to Example 10-1.

Fig. 45 is a schematic configuration diagram showing an imaging apparatus according to an embodiment.

## DETAILED DESCRIPTION

Hereinafter, embodiments of the present disclosure will be described with reference to the accompanying drawings.

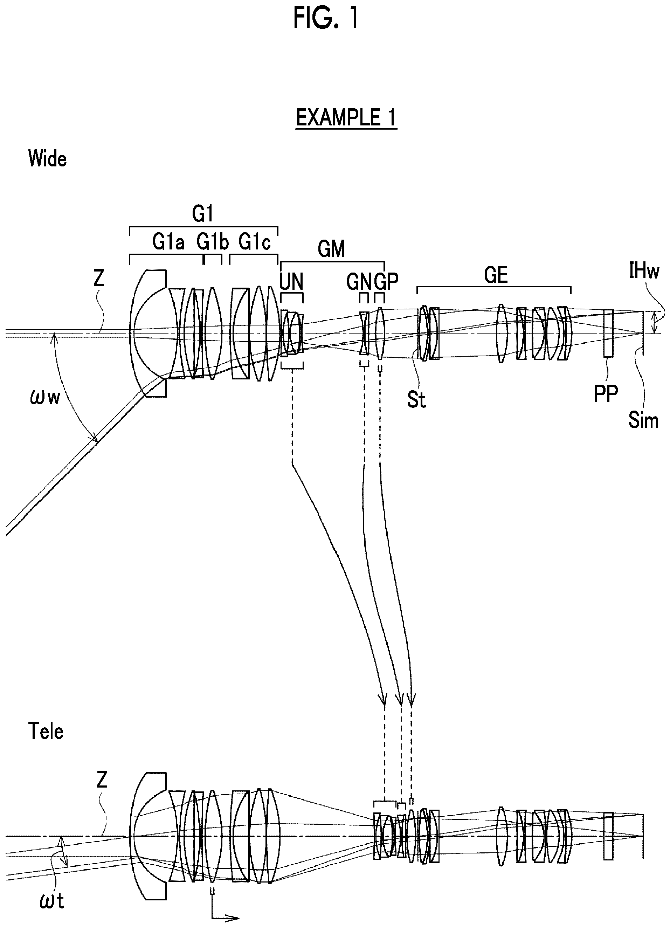

Fig. 1 is a cross-sectional view showing a configuration of a zoom lens according to an embodiment of the present disclosure and luminous fluxes, and movement loci thereof. Fig. 1 shows a state where an infinite distance object is in focus, in which the left side is an object side and the right side is an image side. In Fig. 1, the upper part to which "Wide" is added shows a wide angle end state, and the lower part to which "Tele" is added shows a telephoto end state. As luminous fluxes, Fig. 1 shows an on-axis luminous flux and a luminous flux having a maximum half angle of view $\omega w$ at a wide angle end, and an on-axis luminous flux and a luminous flux having a maximum half angle of view $\omega t$ at a telephoto end. The example of Fig. 1 corresponds to a zoom lens according to Example 1 below.

Fig. 1 shows an example in which, assuming that a zoom lens is applied to an imaging apparatus, an optical member PP having a parallel plate shape is disposed between the zoom lens and an image plane Sim. The optical member PP is a member assumed to include, for example, various filters and/or cover glass. The various filters include a low pass filter, an infrared cut filter, and/or a filter that cuts a specific wavelength range. The optical member PP is a member that has no refractive power. The imaging apparatus can also be configured without providing the optical member PP.

The zoom lens according to the present disclosure includes: a first lens group G1 having a positive refractive power that is disposed closest to the object side; a middle group GM that includes a plurality of lens groups; and a final lens group GE that is disposed closest to the image side. All of spacings between adjacent lens groups change during changing magnification. The first lens group G1 includes two negative lenses consecutively arranged in order from a position closest to the object side to the image side. Among the two negative lenses of the first lens group G1, a negative lens closer to the object side is a meniscus lens that has a convex surface facing the object side. With the above-described configuration, while maintaining a zoom ratio, a wide image circle can be obtained, which is advantageous in reducing the size e while ensuring a wide angle of view.

As described below in detail, the middle group GM may be configured to include at least one of a negative group UN, an N lens group GN, or a P lens group GP.

The negative group UN is a group that is disposed adjacent to the image side of the first lens group G1, consists of two or less lens groups below, and has a negative refractive power as a whole. The negative group UN is disposed, which is advantageous in increasing the zoom ratio.

The N lens group GN is a lens group having a negative refractive power that is disposed closer to the image side than the negative group UN. This N lens group GN is advantageous in reducing the size while increasing the angle of view.

The P lens group GP is a lens group having a positive refractive power that is disposed closer to the image side than the negative group UN and is disposed closer to the object side than the final lens group GE. This P lens group GP is advantageous in suppressing fluctuations in aberrations during changing magnification.

For example, the middle group GM of Fig. 1 consists of the negative group UN, the N lens group GN, and the P lens group GP in order from the object side to the image side.

In the example of Fig. 1, during changing magnification, the first lens group G1 and the final lens group GE are fixed to the image plane Sim, and the negative group UN, the N lens group GN, and the P lens group GP move along an optical axis Z while changing spacings between adjacent lens groups. In Fig. 1, arrows of solid lines between the upper part and the lower part indicate schematic movement loci of the lens groups that move during changing magnification from the wide angle end to the telephoto end.

In the present specification, one lens group is a group of which a spacing to an adjacent group in the optical axis direction changes during changing magnification. During changing magnification, a spacing between adjacent lenses does not change in one lens group. In the present specification, "the first lens group G1", "the N lens group GN" and "the P lens group GP" in the middle group GM, and "the final lens group GE" are components of the zoom lens, and are components each of which includes at least one lens divided by an air spacing that changes during changing magnification. During changing magnification, each of the lens group units moves or is fixed, and a mutual spacing between the lenses in each of the lens groups does not change. "Lens group" may include components having no refractive power other than the lenses, for example, an aperture stop St.

In the zoom lens according to the present disclosure, it is preferable that the first lens group G1 is fixed to the image plane Sim during changing magnification. In this case, movement of the centroid during changing magnification can be suppressed.

It is preferable that the first lens group G1 includes six or more lenses. In this case, this configuration is advantageous in suppressing aberrations. In order to more favorably suppress aberrations, it is preferable that the first lens group G1 includes eight or more lenses. For example, the configuration where the first lens group G1 consists of nine lenses is advantageous in more favorably suppressing aberrations.

It is preferable that a negative lens is disposed adjacent to the image side of a positive lens closest to the object side among the positive lenses in the first lens group G1. In this case, the refractive power of the negative lens closer to the image side in the first lens group G1 can be suppressed, which is advantageous in reducing the weight and is advantageous in correcting axial chromatic aberration at the telephoto end.

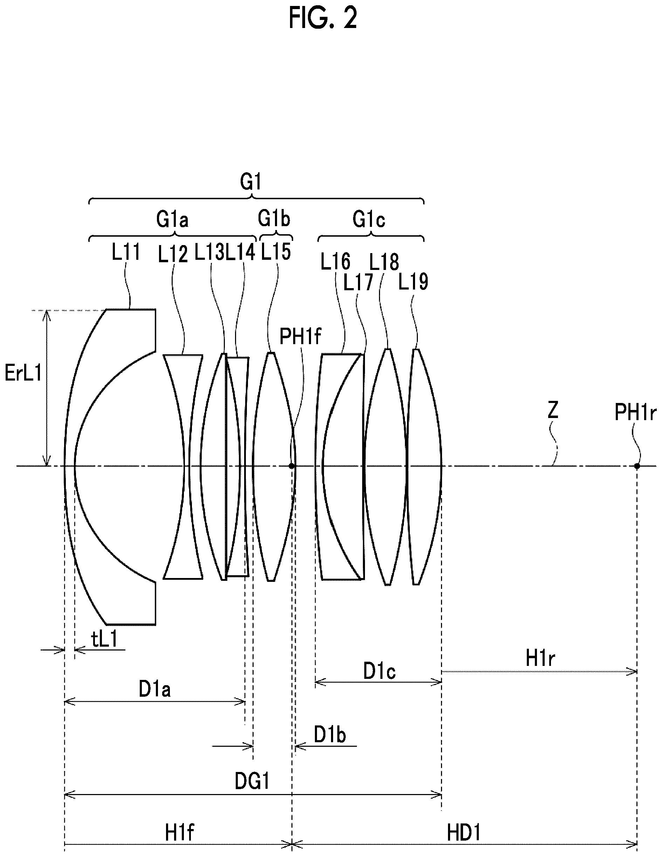

Hereinafter, among the positive lenses in the first lens group G1, the positive lens closest to the object side will be referred to as an L1p lens, and the negative lens that is disposed adjacent to the image side of the L1p lens will be referred to as an L1n lens. Fig. 2 shows the first lens group G1 of the zoom lens of Fig. 1. The first lens group G1 of Fig. 2 consists of lenses L11 to L19 in order from the object side to the image side. In the example of Fig. 2, the lens L13 corresponds to the L1p lens, and the lens L14 corresponds to the L1n lens.

It is preferable that the image side surface of the L1n lens has a concave shape. In this case, this configuration is advantageous in suppressing fluctuations in astigmatism during focusing.

The first lens group G1 consists of a first a partial group G1a, a first b partial group G1b, and a first c partial group G1c in order from the object side to the image side, and is configured such that a spacing between the first a partial group G1a and the first b partial group G1b changes and a spacing between the first b partial group G1b and the first c partial group G1c changes during focusing. In this case, this configuration is advantageous in suppressing fluctuations in aberrations during focusing while simplifying the driving mechanism.

For example, in the example of Fig. 2, in order from the object side to the image side, the first a partial group G1a consists of lenses L11 to L14, the first b partial group G1b consists of a lens L15, and the first c partial group G1c consists of lenses L16 to L19.

During focusing from the infinite distance object to a close distance object, the first a partial group G1a and the first c partial group G1c may be fixed to the image plane Sim, and the first b partial group G1b may move toward the image side. In this case, the amount of movement of the first b partial group G1b during focusing can be reduced.

Hereinafter, the groups that move along the optical axis Z during focusing will be referred to as a focusing group. Focusing is performed by moving the focusing group. In the example of Fig. 1, the focusing group consists of the first b partial group G1b. In Fig. 1, an arrow indicating a direction in which the focusing group moves during focusing from the infinite distance object to the close distance object is added to a portion below the focusing group in the lower part of the drawing. The focusing group functions throughout the entire zoom range including the wide angle end state. In Fig. 1, the arrow is added only in the lower part of the drawing in order to avoid complication of the drawing.

It is preferable that the first a partial group G1a has a negative refractive power. In this case, this configuration is advantageous in increasing the angle of view. It is preferable that the first b partial group G1b has a positive refractive power. In this case, the amount of movement of the group that moves during focusing can be reduced. It is preferable that the first c partial group G1c has a positive refractive power. In this case, this configuration is advantageous in suppressing spherical aberration.

The first a partial group G1a may be configured to include the L1p lens. In this case, this configuration is advantageous in suppressing lateral chromatic aberration.

The number of positive lenses in the first a partial group G1a may be configured to be only one. In this case, this configuration is advantageous in reducing the weight of the first a partial group G1a. In a case where the number of positive lenses in the first a partial group G1a is only one, the positive lens may be configured to be the L1p lens.

A configuration where a lens closest to the image side in the first a partial group G1a is a negative lens and this negative lens is the L1n lens may be adopted. In this case, the refractive power of the negative lens closer to the image side in the first lens group G1 can be suppressed, which is advantageous in reducing the weight, is advantageous in correcting axial chromatic aberration at the telephoto end, and is advantageous in correcting fluctuations in aberrations during focusing.

In a case where the lens closest to the image side in the first a partial group G1a is a negative lens, it is preferable that a positive lens is disposed adjacent to the object side of the negative lens. More specifically, it is preferable that the first a partial group G1a includes the L1n lens and the L1p lens consecutively arranged in order from a position closest to the image side to the object side. In this case, this configuration is advantageous in suppressing fluctuations in chromatic aberration during focusing.

It is preferable that the first a partial group G1a includes at least one aspherical lens surface. In this case, this configuration is advantageous in suppressing distortion.

It is preferable that the first b partial group G1b includes a positive lens. In this case, this configuration is advantageous in suppressing fluctuations in spherical aberration during focusing.

The first b partial group G1b may be configured to consist of only one positive lens. In this case, this configuration is advantageous in reducing the weight of the focusing group.

It is preferable that the positive lens in the first b partial group G1b includes at least one aspherical lens surface. In this case, this configuration is advantageous in suppressing fluctuations in field curvature during focusing.

It is preferable that the first c partial group G1c includes three or more positive lenses. In this case, this configuration is advantageous in suppressing axial chromatic aberration.

It is preferable that the first c partial group G1c includes at least one aspherical lens surface. In this case, this configuration is advantageous in suppressing spherical aberration.

It is preferable that the final lens group GE is fixed to the image plane Sim during changing magnification. In this case, fluctuations in F-number during changing magnification can be easily suppressed.

It is preferable that a lens closest to the image side in the final lens group GE is a positive lens. In this case, a lens system having a smaller F-number can be easily obtained.

It is preferable that the zoom lens according to the present disclosure includes an aperture stop St that is fixed to the image plane Sim during changing magnification. In this case, the mechanical mechanism can be simplified, which is advantageous in reducing the weight. In the example of Fig. 1, the aperture stop St is disposed closest to the object side in the final lens group GE.

Next, preferable and possible configurations about conditional expressions of the zoom lens according to the present disclosure will be described. In the following description relating to the conditional expressions, factors having the same definition will be represented by the same symbols, and a part of the description thereof will not be repeated. Further, hereinafter, "the zoom lens according to the embodiment of the present disclosure" will also be simply referred to as "the zoom lens" in order to avoid redundant description.

It is preferable that the zoom lens satisfies Conditional Expression (1). Here, a focal length of the whole system in a state where the infinite distance object is in focus at the wide angle end is represented by fw. A focal length of the first lens group G1 is represented by f1. By setting the corresponding value of Conditional Expression (1) not to be the lower limit value or less, the refractive power of the first lens group G1 can be increased, which is advantageous in reducing the total length of the lens system. By setting the corresponding value of Conditional Expression (1) not to be the upper limit value or more, the refractive power of the first lens group G1 is not excessively strong, which is advantageous in increasing the angle of view while suppressing aberrations.

$$0.1 < \mathrm{fw/f1} < 0.8 \quad (1)$$

In order to obtain more favorable characteristics, the lower limit value of Conditional Expression (1) is more preferably 0.15, still more preferably 0.2, still more preferably 0.23, and still more preferably 0.25. In order to obtain more favorable characteristics, the upper limit value of Conditional Expression (1) is more preferably 0.5, still more preferably 0.45, still more preferably 0.42, and still more preferably 0.4.

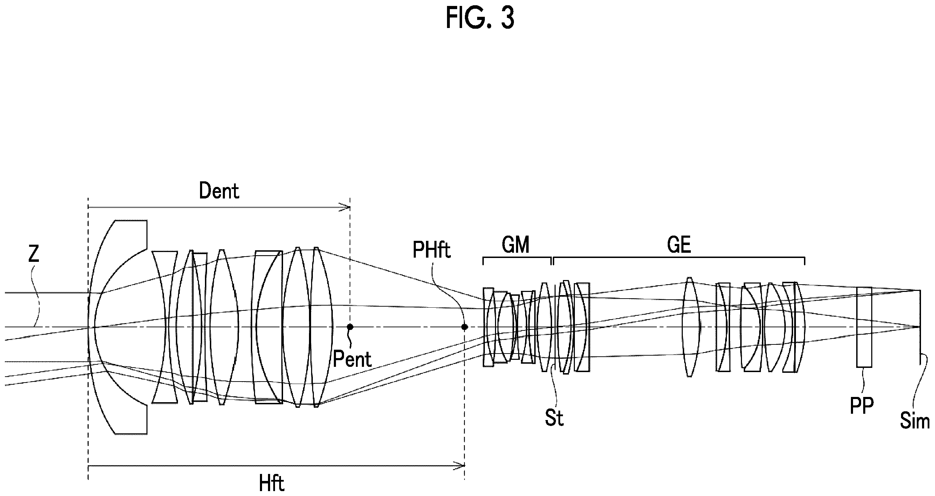

It is preferable that the zoom lens satisfies Conditional Expression (2). Here, a distance on the optical axis from a lens surface closest to the object side in the first lens group G1 to an object side principal point position PH1f of the first lens group G1 in a state where the infinite distance object is in focus is represented by H1f. A distance on the optical axis from the lens surface closest to the object side in the first lens group G1 to an object side principal point position PHft of the whole system in a state where the infinite distance object is in focus at the telephoto end is represented by Hft. The object side is negative and the image side is positive regarding signs of H1f and Hft with reference to the lens surface closest to the object side in the first lens group G1. For example, Fig. 2 shows the object side principal point position PHIF of the first lens group G1 and the distance H1f. In addition, Fig. 3 shows a telephoto end state of the zoom lens of Fig. 1. For example, Fig. 3 shows the object side principal point position PHft of the whole system and the distance Hft. By setting the corresponding value of Conditional Expression (2) not to be the lower limit value or less, this configuration is advantageous in suppressing various aberrations regarding an off-axis luminous flux. By setting the corresponding value of Conditional Expression (2) not to be the upper limit value or more, this configuration is advantageous in reducing the total length of the lens system while maintaining the zoom ratio.

$$0.1 < \mathrm{H1f/Hft} < 0.95 \quad (2)$$

In order to obtain more favorable characteristics, the lower limit value of Conditional Expression (2) is more preferably 0.28, still more preferably 0.3, still more preferably 0.33, and still more preferably 0.37. In order to obtain more favorable characteristics, the upper limit value of Conditional Expression (2) is more preferably 0.7, still more preferably 0.6, and still more preferably 0.5. For example, it is more preferable that the zoom lens satisfies Conditional Expression (2-1).

$$0.28 < H1f/Hft < 0.7 \quad (2\text{-}1)$$

It is preferable that the zoom lens satisfies Conditional Expression (3). Here, a spacing on the optical axis between the object side principal point position PH1f of the first lens group G1 and an image side principal point position $PHI_R$ of the first lens group G1 in a state where the infinite distance object is in focus is represented by HD1. For example, Fig. 2 shows the image side principal point position PH1r of the first lens group G1 and the spacing HD1. By setting the corresponding value of Conditional Expression (3) not to be the lower limit value or less, this configuration is advantageous in suppressing fluctuations in aberrations during changing magnification. By setting the corresponding value of Conditional Expression (3) not to be the upper limit value or more, the total length of the first lens group G1 can be easily reduced, which is advantageous in reducing the weight.

$$1.4 < HD1/f1 < 2.16 \quad (3)$$

In order to obtain more favorable characteristics, the lower limit value of Conditional Expression (3) is more preferably 1.5 and still more preferably 1.6. In order to obtain more favorable characteristics, the upper limit value of Conditional Expression (3) is more preferably 2.15, still more preferably 2.1, and still more preferably 2.05.

It is preferable that the zoom lens satisfies Conditional Expression (5). Here, a distance on the optical axis from a lens surface closest to the image side in the first lens group G1 to the image side principal point position PH1r of the first lens group G1 in a state where the infinite distance object is in focus is represented by H1r. The object side is negative and the image side is positive regarding a sign of H1r with reference to the lens surface closest to the image side in the first lens group G1. For example, Fig. 2 shows the distance H1r. By setting the corresponding value of Conditional Expression (5) not to be the lower limit value or less, this configuration is advantageous in suppressing various aberrations regarding an on-axis luminous flux. By setting the corresponding value of Conditional Expression (5) not to be the upper limit value or more, this configuration is advantageous in increasing the zoom ratio.

$$0.7 < H1r/f1 < 1.5 \quad (5)$$

In order to obtain more favorable characteristics, the lower limit value of Conditional Expression (5) is more preferably 0.75, still more preferably 0.8, and still more preferably 0.85. In order to obtain more favorable characteristics, the upper limit value of Conditional Expression (5) is more preferably 1.4, still more preferably 1.3, and still more preferably 1.25.

It is preferable that the zoom lens satisfies Conditional Expression (6). By setting the corresponding value of Conditional Expression (6) not to be the lower limit value or less, this configuration is advantageous in suppressing various aberrations regarding an off-axis luminous flux. By setting the corresponding value of Conditional Expression (6) not to be the upper limit value or more, this configuration is advantageous in reducing the diameter of the first lens group G1 while maintaining an increase in angle of view.

$$0.7 < H1f/f1 < 2 \quad (6)$$

In order to obtain more favorable characteristics, the lower limit value of Conditional Expression (6) is more preferably 0.8, still more preferably 0.9, and still more preferably 1. In order to obtain more favorable characteristics, the upper limit value of Conditional Expression (6) is more preferably 1.7, still more preferably 1.6, and still more preferably 1.5.

In a case where a refractive index of the L1p lens with respect to the d line is represented by N1p, It is preferable that the zoom lens satisfies Conditional Expression (7). By setting the corresponding value of Conditional Expression (7) not to be the lower limit value or less, this configuration is advantageous in suppressing fluctuations in spherical aberration during changing magnification. By setting the corresponding value of Conditional Expression (7) not to be the upper limit value or more, the range of an Abbe number that can be selected is widened, which is advantageous in correcting axial chromatic aberration at the telephoto end.

$$1.7 < N1p < 2.1 \quad (7)$$

In order to obtain more favorable characteristics, the lower limit value of Conditional Expression (7) is more preferably 1.75 and still more preferably 1.8. In order to obtain more favorable characteristics, the upper limit value of Conditional Expression (7) is more preferably 2.05 and still more preferably 2.

In a case where an Abbe number of the L1p lens with respect to the d line is represented by $v1p$, it is preferable that the zoom lens satisfies Conditional Expression (8). By setting the corresponding value of Conditional Expression (8) not to be the lower limit value or less, this configuration is advantageous in suppressing lateral chromatic aberration at the wide angle end. By setting the corresponding value of Conditional Expression (8) not to be the upper limit value or more, this configuration is advantageous in correcting axial chromatic aberration at the telephoto end.

$$15 < v1p < 30 \quad (8)$$

In order to obtain more favorable characteristics, the lower limit value of Conditional Expression (8) is more preferably 16 and still more preferably 17. In order to obtain more favorable characteristics, the upper limit value of Conditional Expression (8) is more preferably 28, still more preferably 25, and still more preferably 24.

In a case where a refractive index of the L1n lens with respect to a d line is represented by N1n, it is preferable that the zoom lens satisfies Conditional Expression (9). By setting the corresponding value of Conditional Expression (9) not to be the lower limit value or less, this configuration is advantageous in suppressing fluctuations in spherical aberration during changing magnification. By setting the corresponding value of Conditional Expression (9) not to be the upper limit value or more, the range of an Abbe number that can be selected is widened, which is advantageous in correcting axial chromatic aberration at the telephoto end.

$$1.43 < N1n < 1.85 \quad (9)$$

In order to obtain more favorable characteristics, the lower limit value of Conditional Expression (9) is more preferably 1.5, still more preferably 1.55, and still more preferably 1.6. In order to obtain more favorable characteristics, it is more preferable that the upper limit value of Conditional Expression (9) is 1.8.

In a case where an Abbe number of the L1n lens with respect to the d line is represented by $v1n$, it is preferable that the zoom lens satisfies Conditional Expression (10). By setting the corresponding value of Conditional Expression (10) not to be the lower limit value or less, this configuration is advantageous in suppressing lateral chromatic aberration at the wide angle end. By setting the corresponding value of Conditional Expression (10) not to be the upper limit value or more, this configuration is advantageous in correcting axial chromatic aberration at the telephoto end.

$$30 < v1n < 60 \quad (10)$$

In order to obtain more favorable characteristics, the lower limit value of Conditional Expression (10) is more preferably 35, still more preferably 37, and still more preferably 38. In order to obtain more favorable characteristics, the upper limit value of Conditional Expression (10) is more preferably 59 and still more preferably 58.5.

In a case where an average value of Abbe numbers of all of negative lenses closer to the object side than the L1p lens with respect to the d line is represented by $v1nave$, it is preferable that the zoom lens satisfies Conditional Expression (11). By setting the corresponding value of Conditional Expression (11) not to be the lower limit value or less, this configuration is advantageous in suppressing lateral chromatic aberration at the wide angle end. By setting the corresponding value of Conditional Expression (11) not to be the upper limit value or more, this configuration is advantageous in correcting axial chromatic aberration at the telephoto end.

$$35 < v1nave < 60 \quad (11)$$

In order to obtain more favorable characteristics, the lower limit value of Conditional Expression (11) is more preferably 40 and still more preferably 40.4. In order to obtain more favorable characteristics, the upper limit value of Conditional Expression (11) is more preferably 59 and still more preferably 58.1.

In a case where an average value of partial dispersion ratios between the g line and the F line in all of negative lenses closer to the object side than the L1p lens is represented by $\theta1nave$, it is preferable that the zoom lens satisfies Conditional Expression (12). By setting the corresponding value of Conditional Expression (12) not to be the lower limit value or less, a material having a smaller specific gravity can be selected, which is advantageous in reducing the weight. By setting the corresponding value of Conditional Expression (12) not to be the upper limit value or more, this configuration is advantageous in suppressing secondary lateral chromatic aberration.

$$0.5 < \theta 1 nave < 0.6 \quad (12)$$

In order to obtain more favorable characteristics, the lower limit value of Conditional Expression (12) is more preferably 0.53, still more preferably 0.54, and still more preferably 0.55.

In a case where refractive indices of one lens with respect to the g line, the F line, and the C line are represented by Ng, NF, and NC, respectively, and a partial dispersion ratio between the g line and the F line in the lens is represented by $\theta g, F$, $\theta g, F$ is defined by the following expression.

$$\theta g, F = (Ng - NF)/(NF - NC)$$

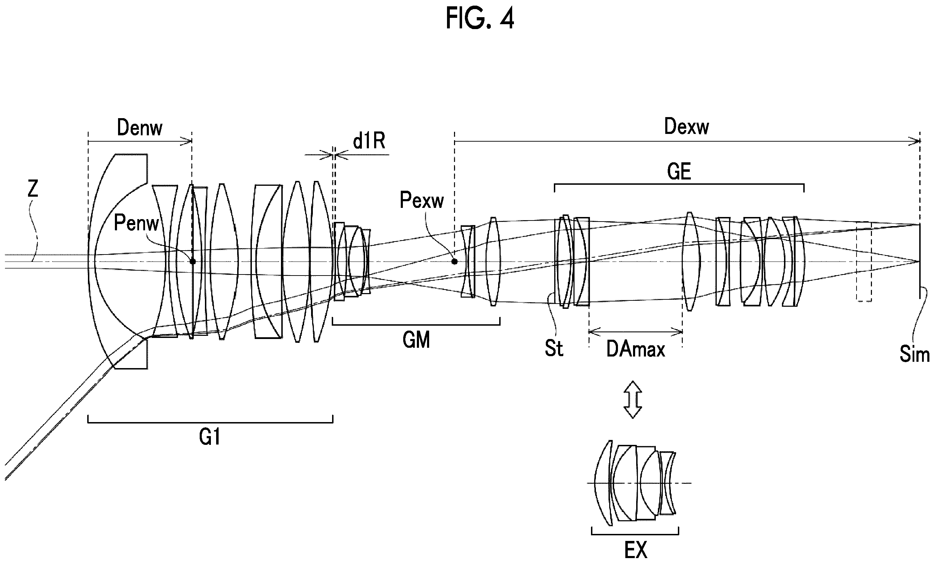

It is preferable that the zoom lens satisfies Conditional Expression (13). Here, a distance on the optical axis from a lens surface closest to the object side in the first lens group G1 to a paraxial entrance pupil position Penw in a state where the infinite distance object is in focus at the wide angle end is represented by Denw. Fig. 4 shows a wide angle end state of the zoom lens of Fig. 1. For example, Fig. 4 shows the paraxial entrance pupil position Penw and the distance Denw. By setting the corresponding value of Conditional Expression (13) not to be the lower limit value or less, the distance on the optical axis from the lens surface closest to the object side in the first lens group G1 on the wide angle side to the paraxial entrance pupil position can be increased, which is advantageous in suppressing fluctuations in field curvature during changing magnification. By setting the corresponding value of Conditional Expression (13) not to be the upper limit value or more, the distance on the optical axis from the lens surface closest to the object side in the first lens group G1 on the wide angle side to the paraxial entrance pupil position can be reduced, which is advantageous in increasing the angle of view.

$$2 < Denw/fw < 3.5 \quad (13)$$

In order to obtain more favorable characteristics, the lower limit value of Conditional Expression (13) is more preferably 2.1, still more preferably 2.2, and still more preferably 2.3. In order to obtain more favorable characteristics, the upper limit value of Conditional Expression (13) is more preferably 3.3, still more preferably 3.2, and still more preferably 3.

It is preferable that the zoom lens satisfies Conditional Expression (16). Here, a paraxial curvature radius of an image side surface of a lens closest to the object side in the first lens group G1 is represented by R2. A paraxial curvature radius of an object side surface of a second lens from the object side of the first lens group G1 is R3. By setting the corresponding value of Conditional Expression (16) not to be the lower limit value or less, the refractive power of an air lens formed between the lens closest to the object side in the zoom lens and the second lens from the object side of the zoom lens can be shifted to the negative refractive power, which is advantageous in suppressing distortion. By setting the corresponding value of Conditional Expression (16) not to be the upper limit value or more, an absolute value of a curvature radius of the image side surface of the lens closest to the object side in the zoom lens is not excessively small, which is advantageous in suppressing ghosting.

$$-3 < (R2 - R3)/(R2 + R3) < 0 \quad (16)$$

In order to obtain more favorable characteristics, the lower limit value of Conditional Expression (16) is more preferably -2.5, still more preferably -2.7, and still more preferably -2.8. In order to obtain more favorable characteristics, the upper limit value of Conditional Expression (16) is more preferably -0.5 and still more preferably -1.

It is preferable that the zoom lens satisfies Conditional Expression (17). Here, a distance on the optical axis from a lens surface closest to the image side in the first lens group G1 to a lens surface adjacent to the image side of the lens surface closest to the image side in the first lens group G1 in a state where the infinite distance object is in focus at the wide angle end is represented by d1R. A maximum image height in a state where the infinite distance object is in focus at the wide angle end is represented by IHw. For example, Fig. 4 shows the distance d1R, and Fig. 1 shows the maximum image height IHw. By setting the corresponding value of Conditional Expression (17) not to be the lower limit value or less, this configuration is advantageous in disposing the drive mechanism. By setting the corresponding value of Conditional Expression (17) not to be the upper limit value or more, this configuration is advantageous in reducing the size and increasing the zoom ratio.

$$0.03 < d1R/IHw < 0.097 \quad (17)$$

In order to obtain more favorable characteristics, the lower limit value of Conditional Expression (17) is more preferably 0.04, still more preferably 0.045, and still more preferably 0.052. In order to obtain more favorable characteristics, the upper limit value of Conditional Expression (17) is more preferably 0.092, still more preferably 0.085, and still more preferably 0.079.

It is preferable that the zoom lens satisfies Conditional Expression (18). By setting the corresponding value of Conditional Expression (18) not to be the lower limit value or less, the refractive power of the first lens group G1 can be increased, which is advantageous in reducing the total length of the lens system. By setting the corresponding value of Conditional Expression (18) not to be the upper limit value or more, the entrance pupil position can be positioned closer to the object side, which is advantageous in reducing the diameter of the first lens group G1.

$$0.5 < Denw/f1 < 1.5 \quad (18)$$

In order to obtain more favorable characteristics, the lower limit value of Conditional Expression (18) is more preferably 0.6 and still more preferably 0.7. In order to obtain more favorable characteristics, the upper limit value of Conditional Expression (18) is more preferably 1.4, still more preferably 1.3, and still more preferably 1.2.

It is preferable that the zoom lens satisfies Conditional Expression (19). Here, a distance on the optical axis from a lens surface closest to the object side in the first lens group G1 to a paraxial entrance pupil position Pent in a state where the infinite distance object at the telephoto end is in focus is represented by Dent. For example, Fig. 3 shows the paraxial entrance pupil position Pent and the distance Dent. By setting the corresponding value of Conditional Expression (19) not to be the lower limit value or less, this configuration is advantageous in suppressing various aberrations regarding an off-axis luminous flux at the telephoto end. By setting the corresponding value of Conditional Expression (19) not to be the upper limit value or more, this configuration is advantageous in suppressing various aberrations regarding an on-axis luminous flux at the telephoto end.

$$1 < Dent/f1 < 3 \quad (19)$$

In order to obtain more favorable characteristics, the lower limit value of Conditional Expression (19) is more preferably 1.3, still more preferably 1.5, and still more preferably 1.7. In order to obtain more favorable characteristics, it is more preferable that the upper limit value of Conditional Expression (19) is 2.5.

In a case where a thickness of the first lens group G1 on the optical axis is denoted by DG1, it is preferable that the zoom lens satisfies Conditional Expression (20). For example, Fig. 2 shows the thickness DG1. By setting the corresponding value of Conditional Expression (20) not to be the lower limit value or less, this configuration is advantageous in correcting various aberrations. By setting the corresponding value of Conditional Expression (20) not to be the upper limit value or more, this configuration is advantageous in reducing the size.

$$0.6 < HD1/DG1 < 1.5 \quad (20)$$

In order to obtain more favorable characteristics, the lower limit value of Conditional Expression (20) is more preferably 0.65, still more preferably 0.7, and still more preferably 0.75. In order to obtain more favorable characteristics, the upper limit value of Conditional Expression (20) is more preferably 1.3, still more preferably 1.2, and still more preferably 1.1.

It is preferable that the zoom lens satisfies Conditional Expression (21). Here, a F-number in a state where the infinite distance object is in focus at the telephoto end is represented by Fnot. A maximum half angle of view in a state where the infinite distance object is in focus at the telephoto end is $\omega t$. The unit of $\omega t$ is degree. For example, Fig. 1 shows $\omega t$. By setting the corresponding value of Conditional Expression (21) not to be the lower limit value or less, the lens barrel diameter is not excessively large, which is advantageous in reducing the size and the weight. By setting the corresponding value of Conditional Expression (21) not to be the upper limit value or more, this configuration is advantageous in maintaining a relatively small F-number up to the telephoto end to obtain a bright optical system.

$$25 < Fnot \times \omega t < 35 \quad (21)$$

In order to obtain more favorable characteristics, the lower limit value of Conditional Expression (21) is more preferably 27, still more preferably 28, and still more preferably 29. In order to obtain more favorable characteristics, the upper limit value of Conditional Expression (21) is more preferably 34, still more preferably 33, and still more preferably 32.

It is preferable that the zoom lens satisfies Conditional Expression (22). By setting the corresponding value of Conditional Expression (22) not to be the lower limit value or less, the distance on the optical axis from the lens surface closest to the object side in the first lens group G1 on the wide angle side to the paraxial entrance pupil position can be increased, which is advantageous in suppressing fluctuations in field curvature during changing magnification. By setting the corresponding value of Conditional Expression (22) not to be the upper limit value or more, the distance on the optical axis from the lens surface closest to the object side in the first lens group G1 on the wide angle side to the paraxial entrance pupil position can be reduced, which is advantageous in increasing the angle of view.

$$2 < Denw/IHw < 3.5 \quad (22)$$

In order to obtain more favorable characteristics, the lower limit value of Conditional Expression (22) is more preferably 2.2, still more preferably 2.3, and still more preferably 2.4. In order to obtain more favorable characteristics, it is more preferable that the upper limit value of Conditional Expression (22) is 3.4.

It is preferable that the zoom lens satisfies Conditional Expression (23). Here, a back focus in terms of an air conversion distance in a state where the infinite distance object is in focus at the wide angle end is Bfw. By setting the corresponding value of Conditional Expression (23) not to be the lower limit value or less, this configuration is advantageous in ensuring the amount of ambient light. By setting the corresponding value of Conditional Expression (23) not to be the upper limit value or more, this configuration is advantageous in reducing the total length of the lens system.

$$2 < Bfw/IHw < 3.5 \quad (23)$$

In order to obtain more favorable characteristics, the lower limit value of Conditional Expression (23) is more preferably 2.2, still more preferably 2.3, and still more preferably 2.4. In order to obtain more favorable characteristics, it is more preferable that the upper limit value of Conditional Expression (23) is 3.4.

In a case where a maximum half angle of view in a state where the infinite distance object is in focus at the wide angle end is ωw, it is preferable that the zoom lens satisfies Conditional Expression (24). The unit of ωw is degree. For example, Fig. 1 shows ωw. By setting the corresponding value of Conditional Expression (24) not to be the lower limit value or less, this configuration is advantageous in increasing the angle of view. By setting the corresponding value of Conditional Expression (24) not to be the upper limit value or more, this configuration is advantageous in reducing the size.

$$40 < ωw < 55 \quad (24)$$

In order to obtain more favorable characteristics, the lower limit value of Conditional Expression (24) is more preferably 41 and still more preferably 42. In order to obtain more favorable characteristics, the upper limit value of Conditional Expression (24) is more preferably 54 and still more preferably 53.

In a case where a focal length of the whole system in a state where the infinite distance object is in focus at the telephoto end is represented by ft, it is preferable that the zoom lens satisfies Conditional Expression (25). By setting the corresponding value of Conditional Expression (25) not to be the lower limit value or less, this configuration is advantageous in suppressing fluctuations in aberrations during changing magnification. By setting the corresponding value of Conditional Expression (25) not to be the upper limit value or more, this configuration is advantageous in increasing the zoom ratio.

$$0.1 < fw/ft < 0.3 \quad (25)$$

In order to obtain more favorable characteristics, the lower limit value of Conditional Expression (25) is more preferably 0.11, still more preferably 0.12, and still more preferably 0.13. In order to obtain more favorable characteristics, the upper limit value of Conditional Expression (25) is more preferably 0.25, still more preferably 0.23, and still more preferably 0.21.

It is preferable that the zoom lens satisfies Conditional Expression (26). Here, a distance on the optical axis from a paraxial exit pupil position Pexw to the image plane Sim in a state where the infinite distance object is in focus at the wide angle end is represented by Dexw. However, in a case where an optical member having no refractive power is disposed between the paraxial exit pupil position and the image plane Sim, the Dexw of the optical member is calculated using an air conversion distance. For example, Fig. 4 shows the paraxial exit pupil position Pexw and schematically shows the distance Dexw. In Fig. 4, an optical member having a parallel plate shape and having no refractive power to be calculated using the air conversion distance is indicated by a broken line. By setting the corresponding value of Conditional Expression (26) not to be the lower limit value or less, the total length of the lens system can be reduced, which is advantageous in reducing the size. By setting the corresponding value of Conditional Expression (26) not to be the upper limit value or more, an incidence angle of an off-axis principal ray into the image plane Sim can be reduced, which is advantageous in ensuring the amount of ambient light.

$$0.02 < IHw/Dexw < 0.2 \quad (26)$$

In order to obtain more favorable characteristics, the lower limit value of Conditional Expression (26) is more preferably 0.025, still more preferably 0.03, and still more preferably 0.032. In order to obtain more favorable characteristics, the upper limit value of Conditional Expression (26) is more preferably 0.15, still more preferably 0.13, and still more preferably 0.11.

It is preferable that the zoom lens satisfies Conditional Expression (31). Here, a center thickness of the lens closest to the object side in the first lens group G1 is represented by tL1. An effective radius of an object side surface of the lens closest to the object side in the first lens group G1 is represented by ErL1. For example, Fig. 2 shows the center thickness tL1 and the effective radius ErL1. By setting the corresponding value of Conditional Expression (31) not to be the lower limit value or less, this configuration is advantageous in improving the robustness of the lens closest to the object side in the first lens group G1. By setting the corresponding value of Conditional Expression (31) not to be the upper limit value or more, this configuration is advantageous in reducing the weight.

$$0.015 < tL1/ErL1 < 0.1 \quad (31)$$

In order to obtain more favorable characteristics, the lower limit value of Conditional Expression (31) is more preferably 0.02, still more preferably 0.025, and still more preferably 0.03. In order to obtain more favorable characteristics, the upper limit value of Conditional Expression (31) is more preferably 0.09 and still more preferably 0.08.

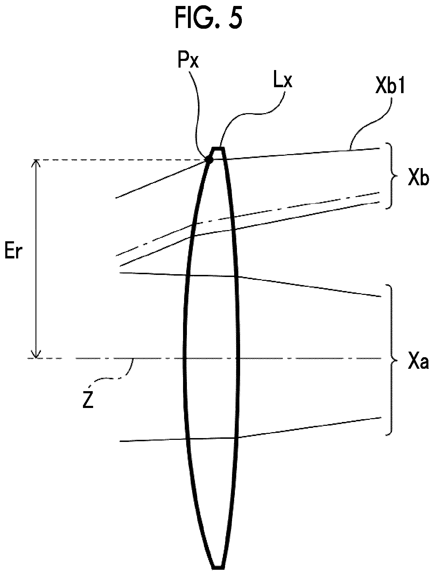

Here, "effective radius" will be described with reference to Fig. 5. Fig. 5 is a diagram for description. In Fig. 5, the left side is the object side, and the right side is the image side. Fig. 5 shows an on-axis luminous flux Xa and an off-axis luminous flux Xb passing through a lens Lx. In the example of Fig. 5, a ray Xb1 that is the upper ray of the off-axis luminous flux Xb is a ray passing through the outermost side. "The outer side" described herein is the radially outside with respect to the optical axis Z, that is, the side away from the optical axis Z. A position of an intersection between the ray passing through the outermost side and a lens surface is a position Px of the maximum effective diameter. In addition, a distance from the position Px of the maximum effective diameter to the optical axis Z is an effective radius Er of the object side surface of the lens Lx. In the example of Fig. 5, the upper ray of the off-axis luminous flux Xb is a ray passing through the outermost side, but which ray is the ray passing through the outermost side depends on the lens system.

In the configuration where the first lens group G1 consists of the first a partial group G1a, the first b partial group G1b, and the first c partial group G1c and, during focusing, the spacing between the first a partial group G1a and the first b partial group G1b changes and the spacing between the first b partial group G1b and the first c partial group G1c changes, it is preferable that the zoom lens satisfies at least one of Conditional Expression (4), (14), (15), (28), (29), or (30) described below.

In Conditional Expression (4), a focal length of the first b partial group G1b is represented by f1b. By setting the corresponding value of Conditional Expression (4) not to be the lower limit value or less, the amount of movement of the group that moves during focusing can be reduced, which is advantageous in reducing the size. By setting the corresponding value of Conditional Expression (4) not to be the upper limit value or more, this configuration is advantageous in suppressing fluctuations in spherical aberration during focusing.

$$0.3 < f1/f1b < 1 \quad (4)$$

In order to obtain more favorable characteristics, the lower limit value of Conditional Expression (4) is more preferably 0.35 and still more preferably 0.4. **In** order to obtain more favorable characteristics, the upper limit value of Conditional Expression (4) is more preferably 0.8, still more preferably 0.7, and still more preferably 0.65.

In Conditional Expression (14), a focal length of the first a partial group G1a is represented by f1a. By setting the corresponding value of Conditional Expression (14) not to be the lower limit value or less, the emittance of the on-axis luminous flux by the first a partial group G1a can be weakened, which is advantageous in reducing the diameter of the first b partial group G1b. By setting the corresponding value of Conditional Expression (14) not to be the upper limit value or more, the negative refractive power of the first a partial group G1a can be increased. Therefore, by increasing the positive refractive power on the image side of the first b partial group G1b and the first b partial group G1b, the amount of change in spacing during focusing can be reduced, which is advantageous in reducing the total length of the lens system.

$$-2 < f1/f1a < 0 \quad (14)$$

In order to obtain more favorable characteristics, the lower limit value of Conditional Expression (14) is more preferably -1.8 and still more preferably -1.7. In order to obtain more favorable characteristics, the upper limit value of Conditional Expression (14) is more preferably -0.5, still more preferably -0.7, and still more preferably -1.

In Conditional Expression (15), a focal length of the first c partial group G1c is represented by flc. By setting the corresponding value of Conditional Expression (15) not to be the lower limit value or less, this configuration is advantageous in reducing the total length of the first lens group G1. By setting the corresponding value of Conditional Expression (15) not to be the upper limit value or more, this configuration is advantageous in suppressing various aberrations at the telephoto end.

$$0.3 < f1/f1c < 0.8 \quad (15)$$

In order to obtain more favorable characteristics, the lower limit value of Conditional Expression (15) is more preferably 0.4, still more preferably 0.5, and still more preferably 0.55. In order to obtain more favorable characteristics, the upper limit value of Conditional Expression (15) is more preferably 0.75 and still more preferably 0.7.

In Conditional Expression (28), a thickness of the first a partial group G1a on the optical axis is represented by D1a. For example, Fig. 2 shows the thickness D1a. By setting the corresponding value of Conditional Expression (28) not to be the lower limit value or less, this configuration is advantageous in suppressing fluctuations in aberrations during focusing of an on-axis luminous flux at the telephoto end. By setting the corresponding value of Conditional Expression (28) not to be the upper limit value or more, this configuration is advantageous in reducing the weight.

$$0.2 < D1a/DG1 < 0.7 \quad (28)$$

In order to obtain more favorable characteristics, the lower limit value of Conditional Expression (28) is more preferably 0.3, still more preferably 0.35, and still more preferably 0.4. In order to obtain more favorable characteristics, the upper limit value of Conditional Expression (28) is more preferably 0.65, still more preferably 0.6, and still more preferably 0.55.

In Conditional Expression (29), a thickness of the first b partial group G1b on the optical axis is represented by D1b. For example, Fig. 2 shows the thickness D1b. By setting the corresponding value of Conditional Expression (29) not to be the lower limit value or less, this configuration is advantageous in suppressing fluctuations in spherical aberration during focusing. By setting the corresponding value of Conditional Expression (29) not to be the upper limit value or more, this configuration is advantageous in reducing the weight.

$$0.05 < D1b/DG1 < 0.2 \quad (29)$$

In order to obtain more favorable characteristics, the lower limit value of Conditional Expression (29) is more preferably 0.06, still more preferably 0.07, and still more preferably 0.09. In order to obtain more favorable characteristics, the upper limit value of Conditional Expression (29) is more preferably 0.15, still more preferably 0.13, and still more preferably 0.12.

In Conditional Expression (30), a thickness of the first c partial group G1c on the optical axis is represented by D1c. For example, Fig. 2 shows the thickness D1c. By setting the corresponding value of Conditional Expression (30) not to be the lower limit value or less, this configuration is advantageous in suppressing fluctuations in spherical aberration during focusing. By setting the corresponding value of Conditional Expression (30) not to be the upper limit value or more, this configuration is advantageous in reducing the weight.

$$0.2 < D1c/DG1 < 0.7 \quad (30)$$

In order to obtain more favorable characteristics, it is more preferable that the lower limit value of Conditional Expression (30) is 0.3. In order to obtain more favorable characteristics, the upper limit value of Conditional Expression (30) is more preferably 0.6, still more preferably 0.5, and still more preferably 0.4.

In the configuration where the zoom lens includes the N lens group GN, it is preferable that the zoom lens satisfies Conditional Expression (36). Here, a focal length of the N lens group GN is represented by fN. By setting the corresponding value of Conditional Expression (36) not to be the lower limit value or less, the refractive power of the first lens group G1 can be suppressed, which is advantageous in suppressing fluctuations in aberrations during changing magnification. By setting the corresponding value of Conditional Expression (36) not to be the upper limit value or more, the refractive power of the N lens group GN can be suppressed, which is advantageous in suppressing fluctuations in aberrations during changing magnification.

$$-2.3 < fN/f1 < -0.6 \quad (36)$$

In order to obtain more favorable characteristics, the lower limit value of Conditional Expression (36) is more preferably -2.1, still more preferably -1.95, and still more preferably -1.84. In order to obtain more favorable characteristics, the upper limit value of Conditional Expression (36) is more preferably -0.8, still more preferably -1, and still more preferably -1.13.

In the configuration where the zoom lens includes the negative group UN, it is preferable that the zoom lens satisfies Conditional Expression (37). Here, a focal length of the negative group UN in a state where the infinite distance object is in focus at the wide angle end is represented by fUN. By setting the corresponding value of Conditional Expression (37) not to be the lower limit value or less, the refractive power of the negative group UN can be increased. Therefore, the amount of movement of the negative group UN during changing magnification can be further reduced, which is advantageous in reducing the total length of the lens system. By setting the corresponding value of Conditional Expression (37) not to be the upper limit value or more, the refractive power of the first lens group G1 can be increased, which is advantageous in reducing the diameter and the weight of the negative group UN.

$$-1 < fUN/f1 < -0.2 \quad (37)$$

In order to obtain more favorable characteristics, the lower limit value of Conditional Expression (37) is more preferably -0.9, still more preferably -0.75, and still more preferably -0.65. In order to obtain more favorable characteristics, the upper limit value of Conditional Expression (37) is more preferably -0.3, still more preferably -0.35, and still more preferably -0.44.

In the configuration where the zoom lens includes the negative group UN, it is preferable that the zoom lens satisfies Conditional Expression (38). By setting the corresponding value of Conditional Expression (38) not to be the lower limit value or less, the refractive power of the negative group UN is not excessively strong, which is advantageous in suppressing fluctuations in aberrations during changing magnification. By setting the corresponding value of Conditional Expression (38) not to be the upper limit value or more, the refractive power of the negative group UN is not excessively weak, which is advantageous in reducing the size.

$$-1 < fw/fUN < -0.25 \quad (38)$$

In order to obtain more favorable characteristics, the lower limit value of Conditional Expression (38) is more preferably -0.9, still more preferably -0.8, and still more preferably -0.7. In order to obtain more favorable characteristics, the upper limit value of Conditional Expression (38) is more preferably -0.35, still more preferably -0.45, and still more preferably -0.52.

In a case where a focal length of the final lens group GE is represented by fE, it is preferable that the zoom lens satisfies Conditional Expression (39). By setting the corresponding value of Conditional Expression (39) not to be the lower limit value or less, this configuration is advantageous in reducing the size. By setting the corresponding value of Conditional Expression (39) not to be the upper limit value or more, this configuration is advantageous in suppressing various aberrations.

$$0.03 < fw/fE < 0.75 \quad (39)$$

In order to obtain more favorable characteristics, the lower limit value of Conditional Expression (39) is more preferably 0.07, still more preferably 0.1, and still more preferably 0.14. In order to obtain more favorable characteristics, the upper limit value of Conditional Expression (39) is more preferably -0.63, still more preferably -0.5, and still more preferably -0.42.

In the configuration where the zoom lens includes the P lens group GP, it is preferable that the zoom lens satisfies Conditional Expression (40). Here, a focal length of the P lens group GP is represented by fP. By setting the corresponding value of Conditional Expression (40) not to be the lower limit value or less, this configuration is advantageous in increasing the zoom ratio. By setting the corresponding value of Conditional Expression (40) not to be the upper limit value or more, this configuration is advantageous in suppressing fluctuations in aberrations during changing magnification.

$$0.1 < fw/fP < 0.6 \quad (40)$$

In order to obtain more favorable characteristics, the lower limit value of Conditional Expression (40) is more preferably 0.15, still more preferably 0.2, and still more preferably 0.25. In order to obtain more favorable characteristics, the upper limit value of Conditional Expression (40) is more preferably 0.5, still more preferably 0.42, and still more preferably 0.35.

The zoom lens according to the present disclosure may be configured to include an EX group EX that is inserted into and removed from an optical path to change a focal length of the zoom lens. In the present specification, an air spacing having a longest distance among air spacings on the optical axis in the final lens group GE in a state where the infinite distance object is in focus at the wide angle end will be referred to as a longest air spacing DAmax. The EX group EX that is inserted into an optical path of the longest air spacing DAmax to change a focal length of the zoom lens while keeping an imaging position constant may be configured to be insertably and removably disposed. In this case, a zoom lens where the focal length can be changed can be obtained.

For example, Fig. 4 shows the longest air spacing DAmax and the EX group EX. In the example of Fig. 4, the longest air spacing DAmax may be configured between the fourth lens and the fifth lens from the object side of the final lens group GE. The EX group EX of Fig. 4 consists of seven lenses.

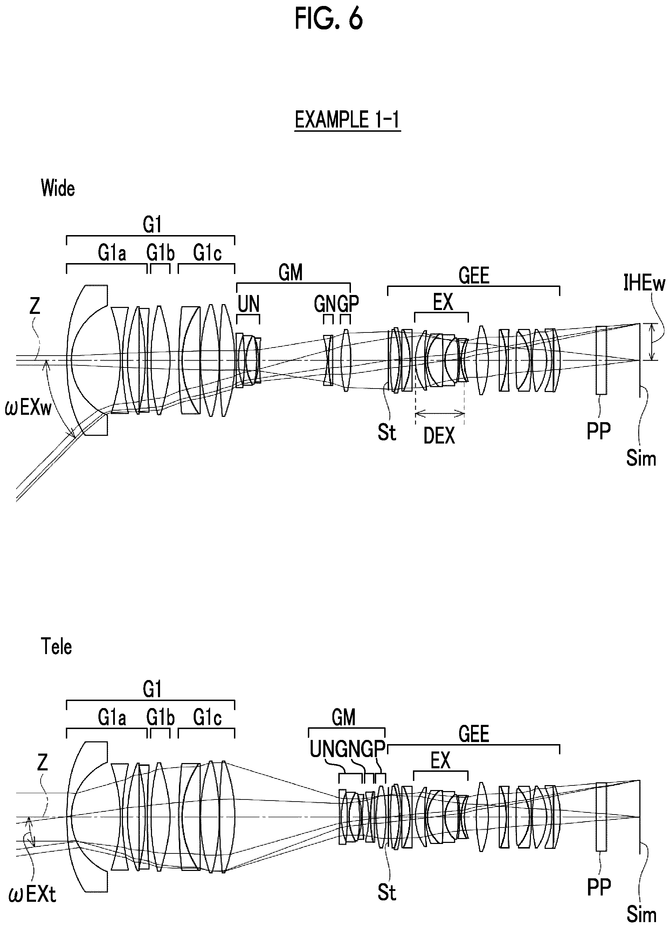

Fig. 6 shows, Example 1-1, a cross-sectional view showing a configuration of the zoom lens and luminous fluxes in a case where the EX group EX of Fig. 4 is inserted into the zoom lens of Fig. 1. A final lens group GEE of Fig. 6 has a configuration where the EX group EX is inserted into the final lens group GE of Fig. 1, and the example of Fig. 6 is different from the example of Fig. 1 in this point. The other lens groups and the configurations of the groups in the example of Fig. 6 are the same as those of Fig. 1. Fig. 6 shows a state where an infinite distance object is in focus, in which the left side is an object side and the right side is an image side. In Fig. 6, the upper part to which "Wide" is added shows a wide angle end state, and the lower part to which "Tele" is added shows a telephoto end state. As luminous fluxes, Fig. 6 shows an on-axis luminous flux and a luminous flux having a maximum half angle of view $\omega$Exw at a wide angle end, and an on-axis luminous flux and a luminous flux having a maximum half angle of view $\omega$Ext at a telephoto end.

In a case where the zoom lens includes the EX group EX, the EX group EX may be configured to be inserted and removed to change a maximum image height. For example, in the wide angle end state, a maximum image height IHEw of the example shown in Fig. 6 is expanded as compared to the maximum image height IHw of the example shown in Fig. 1 where the EX group EX is not inserted. With this configuration, a zoom lens in a state where a wider image circle is provided while maintaining the angle of view can be obtained.

It is preferable that the zoom lens satisfies Conditional Expression (27). Here, a combined lateral magnification of all lenses closer to the image side than the longest air spacing DAmax in a state where the infinite distance object is in focus at the wide angle end is represented by $\beta$AmaxR. By setting the corresponding value of Conditional Expression (27) not to be the lower limit value or less, this configuration is advantageous in reducing the diameter of the group consisting of all of the lenses closer to the image side than the longest air spacing DAmax. By setting the corresponding value of Conditional Expression (27) not to be the upper limit value or more, this configuration is advantageous in suppressing fluctuations in aberrations in a case where the longest air spacing DAmax changes due to error.

$$0.1 < \beta\text{AmaxR} < 0.3 \quad (27)$$

In order to obtain more favorable characteristics, the lower limit value of Conditional Expression (27) is more preferably 0.13, still more preferably 0.15, and still more preferably 0.17. In order to obtain more favorable characteristics, the upper limit value of Conditional Expression (27) is more preferably 0.27, still more preferably 0.25, and still more preferably 0.23.

It is preferable that the zoom lens satisfies Conditional Expression (32). Here, a focal length of the zoom lens in a state where the EX group EX is not inserted and where the infinite distance object is in focus at the telephoto end is represented by ft. A maximum half angle of view in a state where the EX group EX is not inserted and where the infinite distance object is in focus at the telephoto end is represented by $\omega$t. A focal length of the zoom lens in a state where the EX group EX is inserted and where the infinite distance object is in focus at the telephoto end is represented by fEXt. A maximum half angle of view in a state where the EX group EX is inserted and where the infinite distance object is in focus at the telephoto end is represented by $\omega$EXt. tan represents a tangent. By setting the corresponding value of Conditional Expression (32) not to be the lower limit value or less, this configuration is advantageous in simultaneously suppressing various aberrations in a state where the EX group EX is not inserted and various aberrations in a state where the EX group EX is inserted. By setting the corresponding value of Conditional Expression (32) not to be the upper limit value or more, an image size required in a state where the EX group EX is inserted can be easily obtained.

$$0.3 < (\text{ft} \times \tan\omega\text{t})/(\text{fEXt} \times \tan\omega\text{EXt}) < 0.9 \quad (32)$$

In order to obtain more favorable characteristics, the lower limit value of Conditional Expression (32) is more preferably 0.5, still more preferably 0.6, and still more preferably 0.65. In order to obtain more favorable characteristics, the upper limit value of Conditional Expression (32) is more preferably 0.85, still more preferably 0.8, and still more preferably 0.75.

It is preferable that the zoom lens satisfies Conditional Expression (33). Here, the sum of a distance on the optical axis from a lens surface closest to the object side in the first lens group G1 and a lens surface closest to the image side in the final lens group GE and a back focus in terms of an air conversion distance in a state where the infinite distance object is in focus at the wide angle end is represented by TLw. A thickness of the EX group EX on the optical axis is represented by DEX. For example, Fig. 6 shows the thickness DEX. By setting the corresponding value of Conditional Expression (33) not to be the lower limit value or less, this configuration is advantageous in suppressing aberrations occurring in the EX group EX. By setting the corresponding value of Conditional Expression (33) not to be the upper limit value or more, this configuration is advantageous in reducing the weight of the EX group EX.

$$0.07 < DEX/TLw < 0.15 \quad (33)$$

In order to obtain more favorable characteristics, the lower limit value of Conditional Expression (33) is more preferably 0.075, still more preferably 0.08, and still more preferably 0.085. In order to obtain more favorable characteristics, the upper limit value of Conditional Expression (33) is more preferably 0.13, still more preferably 0.12, and still more preferably 0.11.

It is preferable that the zoom lens satisfies Conditional Expression (34). Here, a focal length of a lens component closest to the image side in the EX group EX is represented by fLEXe. It should be noted that one lens component means one single lens or one cemented lens. The single lens is one uncemented lens. By setting the corresponding value of Conditional Expression (34) not to be the lower limit value or less, excessive correction of distortion occurring in the EX group EX can be suppressed. By setting the corresponding value of Conditional Expression (34) not to be the upper limit value or more, this configuration is advantageous in correcting distortion occurring in the EX group EX.

$$-1.5 < Bfw/fLEXe < -0.9 \quad (34)$$

In order to obtain more favorable characteristics, it is more preferable that the lower limit value of Conditional Expression (34) is -1.45. In order to obtain more favorable characteristics, the upper limit value of Conditional Expression (34) is more preferably -0.92, still more preferably -0.93, and still more preferably -0.94.

It is preferable that the zoom lens satisfies Conditional Expression (35). Here, a refractive index of a lens closest to the object side in the EX group EX with respect to the d line is represented by NEX1. By setting the corresponding value of Conditional Expression (35) not to be the lower limit value or less, this configuration is advantageous in suppressing spherical aberration occurring in the EX group EX. By setting the corresponding value of Conditional Expression (35) not to be the upper limit value or more, this configuration is advantageous in suppressing axial chromatic aberration occurring in the EX group EX.

$$1.43 < NEX1 < 1.8 \quad (35)$$

In order to obtain more favorable characteristics, the lower limit value of Conditional Expression (35) is more preferably 1.47 and still more preferably 1.5. In order to obtain more favorable characteristics, the upper limit value of Conditional Expression (35) is more preferably 1.76, still more preferably 1.73, and still more preferably 1.7.

The example shown in Fig. 1 is merely exemplary, and various modifications can be made without departing from the scope of the present disclosed technology. For example, lens groups composing the middle group GM may be different from those of the example of Fig. 1. The number of lens groups in the middle group GM and the number of lens groups in the negative group UN may be different from those of the example of Fig. 1. The numbers of lenses in the first lens group G1, the negative group UN, the N lens group GN, the P lens group GP, the final lens group GE, and the focusing group may be different from those of the example of Fig. 1. The positions of the focusing group and the aperture stop St and the lens groups that move during changing magnification may be configured to be different from those of the example of Fig. 1.

The above-described preferable configurations and available configurations can be freely combined within a range where they do not contradict each other, and it is preferable to appropriately selectively adopt the combination according to required specifications.

For example, in a preferable aspect of the present disclosure, there is provided a zoom lens including: a first lens group G1 having a positive refractive power that is disposed closest to the object side; a middle group GM that includes a plurality of lens groups; and a final lens group GE that is disposed closest to the image side, in which all of spacings between adjacent lens groups change during changing magnification, the first lens group G1 includes two negative lenses consecutively arranged in order from a position closest to the object side to the image side, among the two negative lenses, a negative lens closer to the object side is a negative meniscus lens that has a convex surface facing the object side, and Conditional Expression (1) is satisfied.

Next, examples of the zoom lens according to the present disclosure will be described with reference to the drawings. The reference numerals added to the groups in the cross-sectional views of each example are used independently for each example in order to avoid complication of description and drawings due to an increase in number of digits of the reference numerals. Therefore, even in a case where common reference numerals are added in the drawings of different examples, components do not necessarily have a common configuration.

Example 1

Fig. 1 shows a configuration of a zoom lens according to Example 1 and movement loci thereof, and an illustration method and a configuration thereof are as described above. Therefore, some description is not repeated herein. The zoom lens according to Example 1 consists of a first lens group G1 having a positive refractive power, a middle group GM, and a final lens group GE having a positive refractive power in order from an object side to an image side. The middle group GM consists of a negative group UN, an N lens group GN having a negative refractive power, and a P lens group GP having a positive refractive power in order from the object side to the image side. The negative group UN consists of one lens group having a negative refractive power.

During changing magnification from the wide angle end to the telephoto end, the first lens group G1 and the final lens group GE are fixed to the image plane Sim, and the negative group UN, the N lens group GN, and the P lens group GP move along an optical axis Z while changing spacings between adjacent lens groups.

The first lens group G1 consists of a first a partial group G1a having a negative refractive power, a first b partial group G1b having a positive refractive power, and a first c partial group G1c having a positive refractive power in order from the object side to the image side. The focusing group consists of the first b partial group G1b. The first b partial group G1b consists of one lens that is the fifth lens from the object side. During focusing from the infinite distance object to the close distance object, the first a partial group G1a and the first c partial group G1c are fixed to the image plane Sim, and the first b partial group G1b moves toward the image side.

Regarding the zoom lens according to Example 1, Tables 1A and 1B show basic lens data, Table 2 shows specifications and variable surface spacings, and Table 3 shows aspherical coefficients. Here, the basic lens data is shown to be divided into two tables in order to avoid an increase in the length of one table.

The table of the basic lens data is described as follows. The "Sn" column shows surface numbers in a case where the surface closest to the object side is the first surface and the number is increased one by one toward the image side. The "R" column shows a curvature radius of each surface. The "D" column shows a surface spacing between each surface and the surface adjacent to the image side on the optical axis. The "Nd" column shows a refractive index of each component with respect to the d line. The "vd" column shows an Abbe number of each component with respect to the d line. The "θg,F" column shows a partial dispersion ratio between the g line and the F line in each of the components.

In the table of the basic lens data, the sign of the curvature radius of a surface that is convex to the object side is positive, and the sign of the curvature radius of a surface that is convex to the image side is negative. Table 1 also shows the aperture stop St and the optical member PP. In the fields of the surface number of the surface corresponding to the aperture stop St, the surface number and the expression (St) are shown. A value in the lowermost field of the column of D in the table is a spacing between a surface closest to the image side in the table and the image plane Sim. A symbol DD[ ] is used for a variable surface spacing during changing magnification. A surface number on the object side of the spacing is shown inside [ ] and is described in the column D.

Table 2 shows a zoom ratio Zr, a focal length f, an open F-number FNo., a maximum total angle of view 2ω, and a variable surface spacing with respect to the d line. The zoom ratio is synonymous with the zoom magnification. [°] in the fields of 2ω indicates that the unit thereof is degree. In Table 2, the values in the wide angle end state, the middle focal length state, and the telephoto end state are respectively shown in the columns of "Wide", "Middle", and "Tele".

In the basic lens data, a reference sign * is added to surface numbers of aspherical surfaces, and values of paraxial curvature radius are shown in the fields of the curvature radius of the aspherical surface. In Table 3, the Sn row shows surface numbers of the aspherical surfaces, and the KA and Am rows show numerical values of the aspherical coefficients for each aspherical surface. Here, m of Am represents an integer of 3 or more and varies depending on the surface. For example, on the first surface of Example 1, m = 4, 6, 8, 10, 12, 14, 16, 18, and 20. The "E ± n" (n: an integer) in the numerical values of the aspherical coefficients of Table 3 indicates "×10^{+n}". KA and Am represent the aspherical coefficients in an aspheric equation represented by the following expression.

$$Zd = C \times h^2/\{1 + (1 - KA \times C^2 \times h^2)^{1/2}\} + \Sigma Am \times h^m$$

Zd is an aspherical surface depth (a length of a perpendicular from a point on an aspherical surface at a height h to a plane that is perpendicular to the optical axis Z and in contact with the aspherical surface apex),
h is a height (a distance from the optical axis Z to the lens surface),

C is a reciprocal of the paraxial curvature radius,

KA and Am are aspherical coefficients, and

Σ in the aspheric equation represents the total sum regarding m.

In the data of each of the tables, degrees are used as the unit of an angle, and millimeters are used as the unit of a length. However, appropriate different units may be used because the optical system can be used even in a case where the system is enlarged or reduced in proportion. In addition, each of the following tables shows numerical values rounded off to predetermined decimal places.

Table 1A

| Example 1 | | | | | |
|------|-----------|--------|---------|-------|---------|
| Sn | R | D | Nd | vd | θg,F |
| *1 | 138.1092 | 2.5200 | 1.80100 | 34.97 | 0.58642 |
| 2 | 33.5611 | 27.2580 | | | |
| 3 | -88.4606 | 1.2500 | 1.51633 | 64.14 | 0.53531 |
| 4 | 133.0521 | 2.8370 | | | |
| 5 | 88.1172 | 6.3500 | 1.89286 | 20.36 | 0.63944 |
| 6 | ∞ | 3.4483 | | | |
| 7 | -123.6689 | 1.2200 | 1.69680 | 55.53 | 0.54341 |
| 8 | 476.3220 | 2.0090 | | | |
| 9 | 125.2708 | 10.5640 | 1.53775 | 74.70 | 0.53936 |
| *10 | -72.3378 | 4.9400 | | | |
| 11 | 269.0872 | 1.8750 | 1.85451 | 25.15 | 0.61031 |
| 12 | 53.1897 | 9.8790 | 1.43875 | 94.66 | 0.53402 |
| 13 | 1737.3611 | 0.3010 | | | |
| 14 | 96.6172 | 10.5320 | 1.43875 | 94.66 | 0.53402 |
| 15 | -122.1869 | 0.1200 | | | |
| 16 | 310.2448 | 8.5290 | 1.69680 | 55.46 | 0.54260 |
| *17 | -87.8845 | DD[17] | | | |
| *18 | -259.2363 | 0.9750 | 1.77250 | 49.60 | 0.55212 |
| 19 | 38.1444 | 3.4025 | | | |
| 20 | -112.2999 | 0.8800 | 1.72916. | 54.09 | 0.54490 |
| 21 | 27.8171 | 5.9370 | 1.73037 | 32.23 | 0.58996 |
| 22 | -66.6854 | 1.0680 | | | |
| 23 | -38.3118 | 0.5000 | 1.60300 | 65.44 | 0.54022 |
| 24 | 117.3507 | DD[24] | | | |
| 25 | -45.8768 | 0.8650 | 1.75500 | 52.32 | 0.54757 |
| 26 | 69.9166 | 2.3360 | 1.80518 | 25.42 | 0.61616 |
| 27 | ∞ | DD[27] | | | |
| *28 | 64.2518 | 5.5100 | 1.76600 | 49.80 | 0.55442 |
| 29 | -78.7635 | DD[29] | | | |

Table 1B

| Example 1 | | | | | |
|---|---|---|---|---|---|
| Sn | R | D | Nd | vd | θg,F |
| 30(St) | ∞ | 1.0010 | | | |
| 31 | 128.7732 | 5.0970 | 1.60300 | 65.44 | 0.54022 |
| 32 | -55.4103 | 1.1100 | 1.60562 | 43.71 | 0.57214 |
| 33 | -79.8681 | 0.2170 | | | |
| 34 | ∞ | 4.6400 | 1.59522 | 67.73 | 0.54426. |
| 35 | -41.3256 | 1.0950 | 1.91650 | 31.60 | 0.59117 |
| 36 | ∞ | 35.7860 | | | |
| 37 | 91.7706 | 6.6860 | 1.57135 | 52.95 | 0.55544 |
| 38 | -59.3617 | 6.0520 | | | |
| 39 | ∞ | 3.9660 | 1.80809 | 22.76 | 0.63073 |
| 40 | -49.3745 | 1.0730 | 1.95375 | 32.32 | 0.59056 |
| 41 | 551.1444 | 4.2890 | | | |
| 42 | 244.3134 | 7.5710 | 1.43875 | 94.66 | 0.53402 |
| 43 | -24.2145 | 0.9800 | 2.00100 | 29.14 | 0.59974 |
| 44 | -145.0129 | 0.6590 | | | |
| 45 | 88.2532 | 7.8700 | 1.43875 | 94.66 | 0.53402 |
| 46 | -31.4129 | 2.9130 | | | |
| 47 | -38.3860 | 0.9940 | 1.85150 | 40.78 | 0.56958 |
| 48 | -535.0390 | 3.7430 | 1.80809 | 22.16 | 063073 |
| 49 | -51.1645 | 20.0000 | | | |
| 50 | ∞ | 5.7000 | 1.51633 | 64.14 | 0.53531 |
| 51 | ∞ | 18.6506 | | | |

Table 2

| Example 1 | | | |
|---|---|---|---|
| | Wide | Middle | Tele |
| Zr | 1.0 | 3.4 | 6.9 |
| f | 14.51 | 49.51 | 99.83 |
| FNo. | 2.75 | 2.75 | 3.70 |
| 2ω[°] | 93.2 | 31.0 | 15.8 |
| DD[17] | 0.9930 | 44.0637 | 58.2537 |
| DD[24] | 37.6090 | 4.0745 | 3.5548 |
| DD[27] | 4.4560 | 8.9091 | 0.7926 |
| DD[29] | 20.9460 | 6.9567 | 1.4029 |

Table 3

| Example 1 | | | |
|---|---|---|---|
| Sn | 1 | 10 | 17 |
| KA | -1.2467824E+01 | 6.8204949E-01 | 9.4113950E-01 |

(continued)

| Example 1 | | | |
|---|---|---|---|
| Sn | 1 | 10 | 17 |
| A4 | 1.7945385E-06 | 1.6860203E-06 | -1.0363050E-07 |
| A6 | 2.2508089E-10 | 1.1868582E-10 | 2.4037647E-10 |
| A8 | -2.1163574E-12 | -2.2115337E-12 | 1.9960100E-13 |
| A10 | 5.6353507E-15 | 6.9329389E-15 | -4.2367573E-16 |
| A12 | -8.3758863E-18 | -1.3567652E-17 | -4.2965945E-19 |
| A14 | 7.4823811E-21 | 1.6509506E-20 | 2.2673227E-21 |
| A16 | -3.9769365E-24 | -1.2117663E-23 | -3.0991253E-24 |
| A18 | 1.1600164E-27 | 4.8682911E-27 | 1.9312693E-27 |
| A20 | -1.4300966E-31 | -8.0954137E-31 | -4.7011018E-31 |
| | 18 | 28 | |
| KA | -5.7378953E+01 | -6.6691112E-02 | |
| A4 | 2.4213204E-06 | -2.9562172E-06 | |
| A6 | 1.5047176E-08 | -3.8065747E-09 | |
| A8 | -4.6771876E-10 | 1.0457313E-10 | |
| A10 | 7.6281725E-12 | -1.1954763E-12 | |
| A12 | -7.6537025E-14 | 8.5648386E-15 | |
| A14 | 4.7605607E-16 | -3.9148418E-17 | |
| A16 | -1.7711684E-18 | 1.1082413E-19 | |
| A18 | 3.5802062E-21 | -1.7727965E-22 | |
| A20 | -2.9995583E-24 | 1.2263147E-25 | |

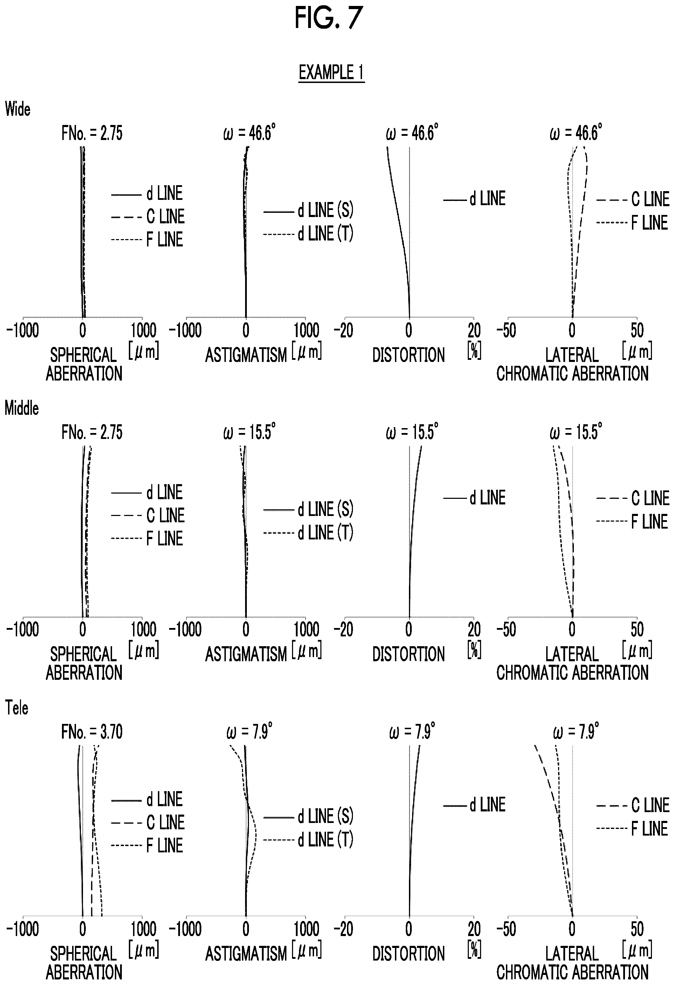

Fig. 7 shows each of aberration diagrams of the zoom lens according to Example 1 in a state where the infinite distance object is in focus. Fig. 7 shows spherical aberration, astigmatism, distortion, and lateral chromatic aberration in order from the left side. In Fig. 7, the upper part to which "Wide" is added shows aberrations in the wide angle end state, the middle part to which "Middle" is added shows aberrations in the middle focal length state, and the lower part to which "TELE" is added shows aberrations in the telephoto end state. In the spherical aberration diagram, aberrations with respect to the d line, the C line, and the F line are indicated by a solid line, a long broken line, and a short broken line, respectively. In the astigmatism diagram, aberration in the sagittal direction with respect to the d line is indicated by a solid line, and aberration in the tangential direction with respect to the d line is indicated by a short broken line. In the distortion diagram, aberration with respect to the d line is indicated by a solid line. In the lateral chromatic aberration diagram, aberrations with respect to the C line, and the F line are indicated by a long broken line and a short broken line, respectively. In the spherical aberration diagram, the value of the open F-number is shown after FNo. =. In other aberration diagrams, the value of the maximum half angle of view is shown after ω =.

Symbols, meanings, description methods, and illustration methods of the respective data pieces according to Example 1 are basically similar to those in the following examples unless otherwise specified. Therefore, hereinafter, repeated description will not be given.

Example 1-1

Example 1-1 is an example in which the EX group EX is inserted into the zoom lens according to Example 1. Fig. 6 is a cross-sectional view showing a configuration of the zoom lens according to Example 1-1 and luminous fluxes. The zoom lens according to Example 1-1 includes the final lens group GEE in which the EX group EX is inserted into the final lens group GE according to Example 1, instead of the final lens group GE according to Example 1. The other lens groups and the configurations of the groups in Example 1-1 are the same as those of the zoom lens according to Example 1.

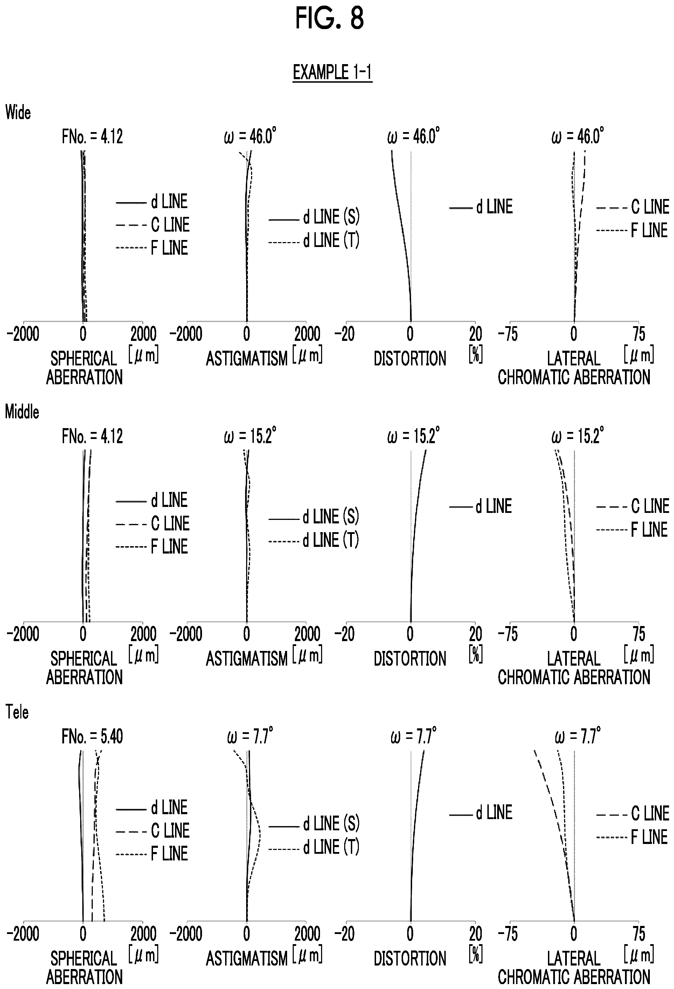

Regarding the zoom lens according to Example 1-1, Tables 4A and 4B show basic lens data, Table 5 shows specifications and variable surface spacings, Table 6 shows aspherical coefficients, and Fig. 8 shows each of the aberration diagrams.

Table 4A

| Example 1-1 | | | | | |
|---|---|---|---|---|---|
| Sn | R | D | Nd | vd | θg,F |
| *1 | 138.1092 | 2.5200 | 1.80100 | 34.97 | 0.58642 |
| 2 | 33.5611 | 27.2580 | | | |
| 3 | -88.4606 | 1.2500 | 1.51633 | 64.14 | 0.53531 |
| 4 | 133.0521 | 2.8370 | | | |
| 5 | 88.1172 | 6.3500 | 1.89286 | 20.36 | 0.63944 |
| 6 | ∞ | 3.4483 | | | |
| 7 | -123.6689 | 1.2200 | 1.69680 | 55.53 | 0.54341 |
| 8 | 476.3220 | 2.0090 | | | |
| 9 | 125.2708 | 10.5640 | 1.53775 | 74.70 | 0.53936 |
| *10 | -72.3378 | 4.9400 | | | |
| 11 | 269.0872 | 1.8750 | 1.85451 | 25.15 | 0.61031 |
| 12 | 53.1897 | 9.8790 | 1.43875 | 94.66 | 0.53402 |
| 13 | 1737.3611 | 0.3010 | | | |
| 14 | 96.6172 | 10.5320 | 1.43875 | 94.66 | 0.53402 |
| 15 | -122.1869 | 0.1200 | | | |
| 16 | 310.2448 | 8.5290 | 1.69680 | 55.46 | 0.54260 |
| *17 | -87.8845 | DD[17] | | | |
| *18 | -259.2363 | 0.9750 | 1.77250 | 49.60 | 0.55212 |
| 19 | 38.1444 | 3.4025 | | | |
| 20 | -112.2999 | 0.8800 | 1.72916 | 54.09 | 0.54490 |
| 21 | 27.8171 | 5.9370 | 1.73037 | 32.23 | 0.58996 |
| 22 | -66.6854 | 1.0680 | | | |
| 23 | -38.3118 | 0.5000 | 1.60300 | 65.44 | 0.54022 |
| 24 | 117.3507 | DD[24] | | | |
| 25 | -45.8768 | 0.8650 | 1.75500 | 52.32 | 0.54757 |
| 26 | 69.9166 | 2.3360 | 1.80518 | 25.42 | 0.61616 |
| 27 | ∞ | DD[27] | | | |
| *28 | 64.2518 | 5.5100 | 1.76600 | 49.80 | 0.55442 |
| 29 | -78.7635 | DD[29] | | | |

Table 4B

| Example 1-1 | | | | | |
|---|---|---|---|---|---|
| Sn | R | D | Nd | vd | θg,F |
| 30(St) | ∞ | 1.0010 | | | |
| 31 | 128.7732 | 5.0970 | 1.60300 | 65.44 | 0.54022 |
| 32 | -55.4103 | 1.1100 | 1.60562 | 43.71 | 0.57214 |

(continued)

| Example 1-1 | | | | | |
|---|---|---|---|---|---|
| Sn | R | D | Nd | vd | θg,F |
| 33 | -79.8681 | 0.2170 | | | |
| 34 | ∞ | 4.6400 | 1.59522 | 67.73 | 0.54426 |
| 35 | -41.3256 | 1.0950 | 1.91650 | 31.60 | 0.59117 |
| 36 | ∞ | 1.8400 | | | |
| 37 | 29.4999 | 5.1270 | 1.63246 | 63.77 | 0.54215 |
| 38 | 133.7259 | 0.5690 | | | |
| 39 | 39.3037 | 0.9900 | 2.00100 | 29.13 | 0.59952 |
| 40 | 19.7303 | 8.6730 | 1.56732 | 42.82 | 0.57309 |
| 41 | -266.2754 | 0.0810 | | | |
| 42 | -240.9636 | 1.0130 | 1.83400 | 37.21 | 0.58082 |
| 43 | 17.1786 | 7.4850 | 1.69895 | 30.05 | 060282 |
| 44 | -81.3577 | 0.7620 | | | |
| 45 | -87.1565 | 0.8010 | 1.76385 | 48.49 | 0.55898 |
| 46 | 25.9125 | 1.7750 | 1.76182 | 26.52 | 0.61361 |
| 47 | 33.3959 | 6.6700 | | | |
| 48 | 91.7706 | 6.6860 | 1.57135 | 52.95 | 0.55544 |
| 49 | -59.3617 | 6.0520 | | | |
| 50 | ∞ | 3.9660 | 1.80809 | 22.76 | 0.63073 |
| 51 | -49.3745 | 1.0730 | 1.95375 | 32.32 | 059056 |
| 52 | 551.1444 | 4.2890 | | | |
| 53 | 244.3134 | 7.5710 | 1.43875 | 94.66 | 0.53402 |
| 54 | -24.2145 | 0.9800 | 2.00100 | 29.14 | 0.59974 |
| 55 | -145.0129 | 0.6590 | | | |
| 56 | 88.2532 | 7.8700 | 1.43875 | 94.66 | 0.53402 |
| 57 | -31.4129 | 2.9130 | | | |
| 58 | -38.3860 | 0.9940 | 1.85150 | 40.78 | 0.56958 |
| 59 | -535.0390 | 3.7430 | 1.80809 | 22.16 | 0.63073 |
| 60 | -51.1645 | 20.0000 | | | |
| 61 | ∞ | 5.7000 | 1.51633 | 64.14 | 0.53531 |
| 62 | ∞ | 18.6381 | | | |

Table 5

| Example 1-1 | | | |
|---|---|---|---|
| | Wide | Middle | Tele |
| Zr | 1.0 | 3.4 | 6.9 |
| f | 21.22 | 72.40 | 145.99 |
| FNo. | 4.12 | 4.12 | 5.40 |
| 2ω[°] | 92.0 | 30.4 | 15.4 |

(continued)

| Example 1-1 | | | |
|---|---|---|---|
| | Wide | Middle | Tele |
| DD[17] | 0.9930 | 44.0637 | 58.2537 |
| DD[24] | 37.6090 | 4.0745 | 3.5548 |
| DD[27] | 4.4560 | 8.9091 | 0.7926 |
| DD[29] | 20.9460 | 6.9567 | 1.4029 |

Table 6

| Example 1-1 | | | |
|---|---|---|---|
| Sn | 1 | 10 | 17 |
| KA | -1.2467824E+01 | 6.8204949E-01 | 9.4113950E-01 |
| A4 | 1.7945385E-06 | 1.6860203E-06 | -1.0363050E-07 |
| A6 | 2.2508089E-10 | 1.1868582E-10 | 2.4037647E-10 |
| A8 | -2.1163574E-12 | -2.2115337E-12 | 1.9960100E-13 |
| A10 | 5.6353507E-15 | 6.9329389E-15 | -4.2367573E-16 |
| A12 | -8.3758863E-18 | -1.3567652E-17 | -4.2965945E-19 |
| A14 | 7.4823811E-21 | 1.6509506E-20 | 2.2673227E-21 |
| A16 | -3.9769365E-24 | -1.2117663E-23 | -3.0991253E-24 |
| A18 | 1.1600164E-27 | 4.8682911E-27 | 1.9312693E-27 |
| A20 | -1.4300966E-31 | -8.0954137E-31 | -4.7011018E-31 |

| Sn | 18 | 28 |
|---|---|---|
| KA | -5.7378953E+01 | -6.6691112E-02 |
| A4 | 2.4213204E-06 | -2.9562172E-06 |
| A6 | 1.5047176E-08 | -3.8065747E-09 |
| A8 | -4.6771876E-10 | 1.0457313E-10 |
| A10 | 7.6281725E-12 | -1.1954763E-I2 |
| A12 | -7.6537025E-14 | 8.5648386E-15 |
| A14 | 4.7605607E-16 | -3.9148418E-17 |
| A16 | -1.7711684E-18 | 1.1082413E-19 |
| A18 | 3.5802062E-21 | -1.7727965E-22 |
| A20 | -2.9995583E-24 | 1.2263147E-25 |

Example 2

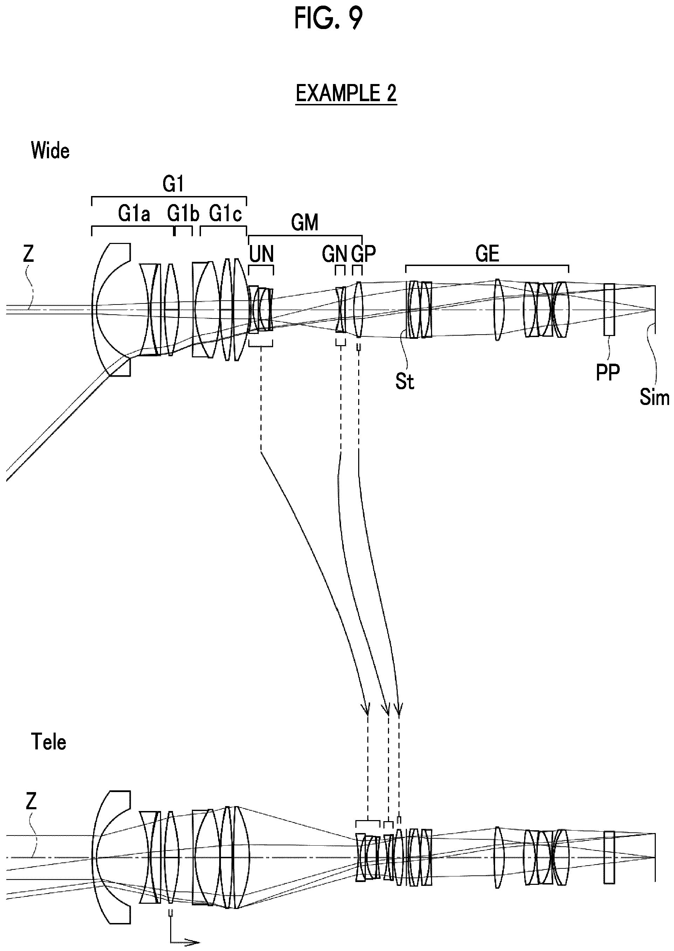

Fig. 9 shows a configuration of a zoom lens according to Example 2 and movement loci thereof. The zoom lens according to Example 2 consists of a first lens group G1 having a positive refractive power, a middle group GM, and a final lens group GE having a positive refractive power in order from an object side to an image side. The middle group GM consists of a negative group UN, an N lens group GN having a negative refractive power, and a P lens group GP having a positive refractive power in order from the object side to the image side. The negative group UN consists of one lens group having a negative refractive power.

During changing magnification from the wide angle end to the telephoto end, the first lens group G1 and the final lens group GE are fixed to the image plane Sim, and the negative group UN, the N lens group GN, and the P lens group GP move along an optical axis Z while changing spacings between adjacent lens groups.

The first lens group G1 consists of a first a partial group G1a having a negative refractive power, a first b partial group G1b having a positive refractive power, and a first c partial group G1c having a positive refractive power in order from the object side to the image side. The focusing group consists of the first b partial group G1b. The first b partial group G1b consists of one lens that is the fourth lens from the object side. During focusing from the infinite distance object to the close distance object, the first a partial group G1a and the first c partial group G1c are fixed to the image plane Sim, and the first b partial group G1b moves toward the image side.

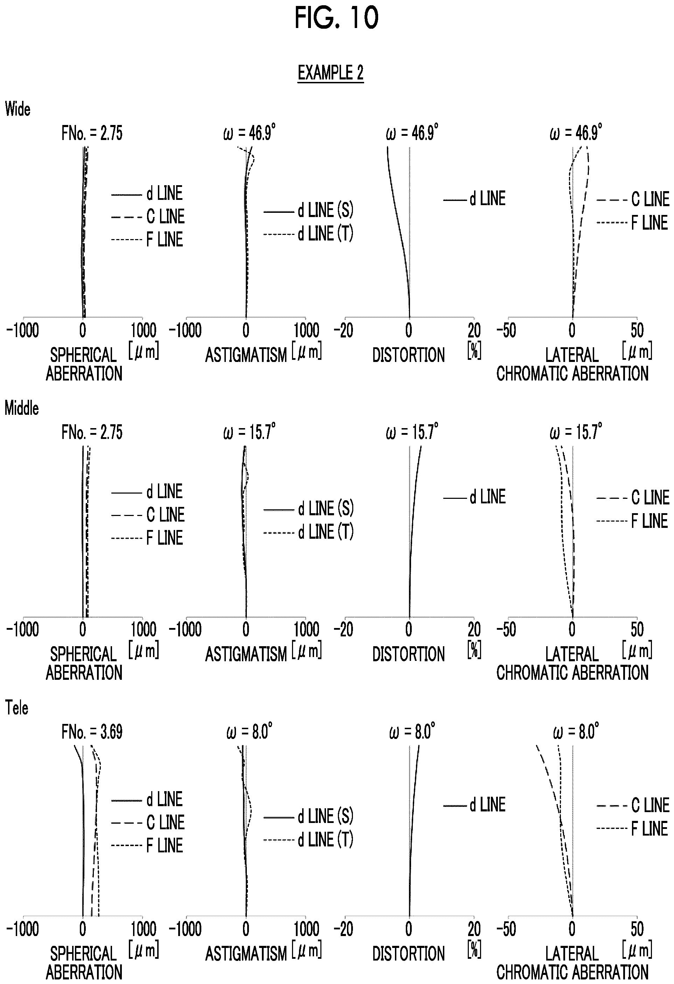

Regarding the zoom lens according to Example 2, Tables 7A and 7B show basic lens data, Table 8 shows specifications and variable surface spacings, Table 9 shows aspherical coefficients, and Fig. 10 shows each of the aberration diagrams.

Table 7A

| Example 2 | | | | | |
|---|---|---|---|---|---|
| Sn | R | D | Nd | vd | θg,F |
| *1 | 125.7823 | 2.4900 | 1.80100 | 34.97 | 0.58642 |
| 2 | 32.6239 | 29.6213 | | | |
| 3 | -79.6149 | 1.2630 | 1.72916 | 54.54 | 0.54535 |
| 4 | 111.8386 | 0.1203 | | | |
| 5 | 96.6943 | 5.6241 | 1.94595 | 17.98 | 0.65460 |
| 6 | -2481.0651 | 2.1614 | | | |
| 7 | 148.7487 | 8.1071 | 1.53775 | 74.70 | 0.53936 |
| *8 | -81.4651 | 8.0848 | | | |
| 9 | -1237.0096 | 1.2000 | 1.84666 | 23.84 | 0.62012 |
| 10 | 58.3321 | 14.1342 | 1.43700 | 95.10 | 0.53364 |
| 11 | -101.3760 | 0.1203 | | | |
| *12 | 153.0146 | 6.7038 | 1.49700 | 81.54 | 0.53748 |
| 13 | -232.7903 | 0.7230 | | | |
| 14 | 578.6200 | 9.0515 | 1.76385 | 48.49 | 0.55898 |
| 15 | -75.3264 | DD[15] | | | |
| 16 | -83.1757 | 1.2020 | 1.81600 | 46.62 | 0.55682 |
| 17 | 31.9646 | 2.9093 | | | |
| 18 | 2381.5684 | 0.8268 | 1.69100 | 54.82 | 0.54499 |
| 19 | 26.0654 | 5.4611 | 1.68960 | 31.14 | 0.60319 |
| 20 | -153.1643 | 0.1200 | | | |
| 21 | -11140.4924 | 0.8009 | 1.49700 | 81.61 | 0.53887 |
| *22 | 59.5981 | DD[22] | | | |
| 23 | -46.4056 | 0.8103 | 1.72916 | 54.54 | 0.54535 |
| 24 | 67.7339 | 2.3755 | 1.85451 | 25.15 | 0.61031 |
| 25 | 372.5353 | DD[25] | | | |
| *26 | 62.5081 | 5.2221 | 1.80610 | 40.93 | 0.57019 |
| 27 | -93.5285 | DD[27] | | | |

Table 7B

| Example 2 | | | | | |
|---|---|---|---|---|---|
| Sn | R | D | Nd | vd | θg,F |
| 28(St) | ∞ | 1.0002 | | | |
| 29 | 121.4160 | 1.0806 | 1.67328 | 38.05 | 0.57663 |
| 30 | 61.2322 | 5.7323 | 1.67366 | 57.55 | 0.54705 |
| 31 | -91.5433 | 0.2792 | | | |
| 32 | 161.5312 | 5.0416 | 1.49700 | 81.54 | 0.53748 |
| 33 | -56.0379 | 0.8764 | 2.05090 | 26.94 | 0.60519 |
| 34 | 420.9795 | 35.7357 | | | |
| 35 | 165.3551 | 5.6832 | 1.48749 | 70.24 | 0.53007 |
| 36 | -56.9700 | 11.1304 | | | |
| 37 | 109.1397 | 6.6068 | 1.85896 | 22.73 | 0.62844 |
| 38 | -39.4279 | 0.8002 | 1.92198 | 34.66 | 0.58388 |
| 39 | 118.8684 | 0.1209 | | | |
| 40 | 81.6411 | 7.6263 | 1.43700 | 95.10 | 0.53364 |
| 41 | -31.5585 | 0.8000 | 2.00100 | 29.13 | 0.59952 |
| 42 | 242.9196 | 0.4184 | | | |
| 43 | 44.8278 | 0.8765 | 1.83285 | 37.69 | 0.57645 |
| 44 | 33.2159 | 8.6441 | 1.50120 | 57.82 | 0.54543 |
| 45 | -68.0656 | 20.0000 | | | |
| 46 | ∞ | 5.7000 | 1.51633 | 64.14 | 0.53531 |
| 47 | ∞ | 23.2984 | | | |

Table 8

| Example 2 | | | |
|---|---|---|---|
| | Wide | Middle | Tele |
| Zr | 1.0 | 3.4 | 6.9 |
| f | 14.32 | 48.88 | 98.55 |
| FNo. | 2.75 | 2.75 | 3.69 |
| 2ω[°] | 93.8 | 31.4 | 16.0 |
| DD[15] | 0.9169 | 46.3357 | 61.5165 |
| DD[22] | 38.6635 | 4.0701 | 5.1631 |
| DD[25] | 4.9192 | 8.9929 | 0.7895 |
| DD[27] | 24.8046 | 9.9055 | 1.8351 |

Table 9

| Example 2 | | | |
|---|---|---|---|
| Sn | 1 | 8 | 12 |
| KA | 1.0000000E+00 | 1.0000000E+00 | 1.0000000E+00 |
| A4 | 1.1038894E-06 | 1.9513774E-06 | 2.1129546E-07 |
| A6 | 7.3650360E-10 | -2.1763121E-09 | -1.1377601E-09 |

(continued)

| Example 2 | | | |
|---|---|---|---|
| Sn | 1 | 8 | 12 |
| A8 | -3.0508358E-12 | 1.3959160E-11 | 4.7800689E-12 |
| A10 | 7.6419160E-15 | -5.9039677E-14 | -1.4497998E-14 |
| A12 | -1.1210122E-17 | 1.5725248E-16 | 2.8493407E-17 |
| A14 | 1.0008687E-20 | -2.6479084E-19 | -3.5654094E-20 |
| A16 | -5.3520752E-24 | 2.7356490E-22 | 2.7504930E-23 |
| A18 | 1.5779469E-27 | -1.5826671E-25 | -1.1926136E-26 |
| A20 | -1.9719947E-31 | 3.9247680E-29 | 2.2230713E-30 |

| Sn | 22 | 26 |
|---|---|---|
| KA | 1.0000000E+00 | 1.0000000E+00 |
| A4 | -9.7722136E-06 | -3.2734666E-06 |
| A6 | -3.8423145E-08 | -1.3910127E-09 |
| A8 | 8.1240343E-10 | 3.9992567E-11 |
| A10 | -1.0938142E-11 | -3.9003257E-13 |
| A12 | 8.6022671E-14 | 2.4625425E-15 |
| A14 | -3.5490119E-16 | -1.0150455E-17 |
| A16 | 3.7207620E-19 | 2.6252667E-20 |
| A18 | 2.2183755E-21 | -3.8630312E-23 |
| A20 | -5.9437520E-24 | 2.4656768E-26 |

Example 2-1

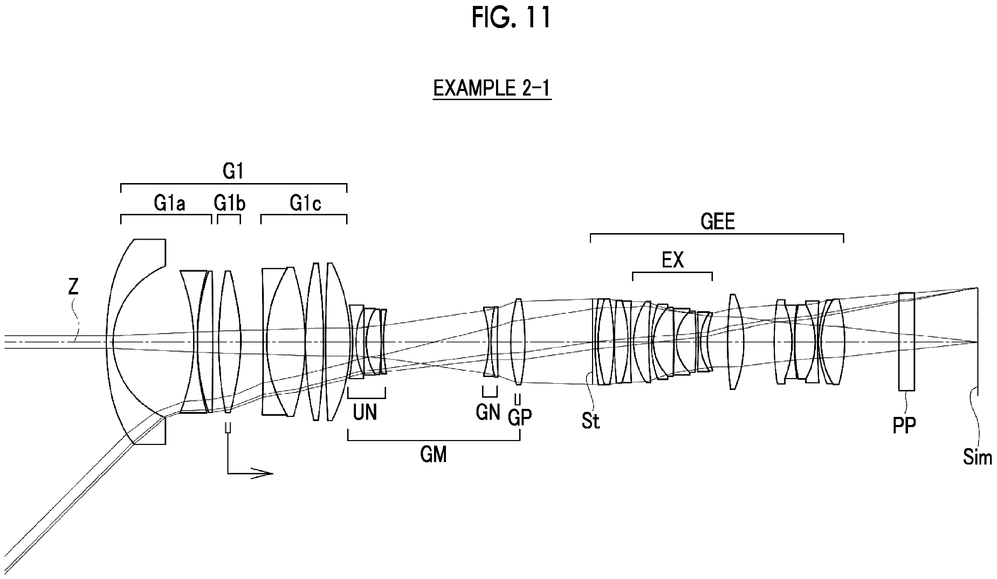

Example 2-1 is an example in which the EX group EX is inserted into the zoom lens according to Example 2. Fig. 11 is a cross-sectional view showing a configuration of the zoom lens according to Example 2-1 and luminous fluxes in the wide angle end state. The zoom lens according to Example 2-1 includes the final lens group GEE in which the EX group EX is inserted into the final lens group GE according to Example 2, instead of the final lens group GE according to Example 2. The other lens groups and the configurations of the groups in Example 2-1 are the same as those of the zoom lens according to Example 2.

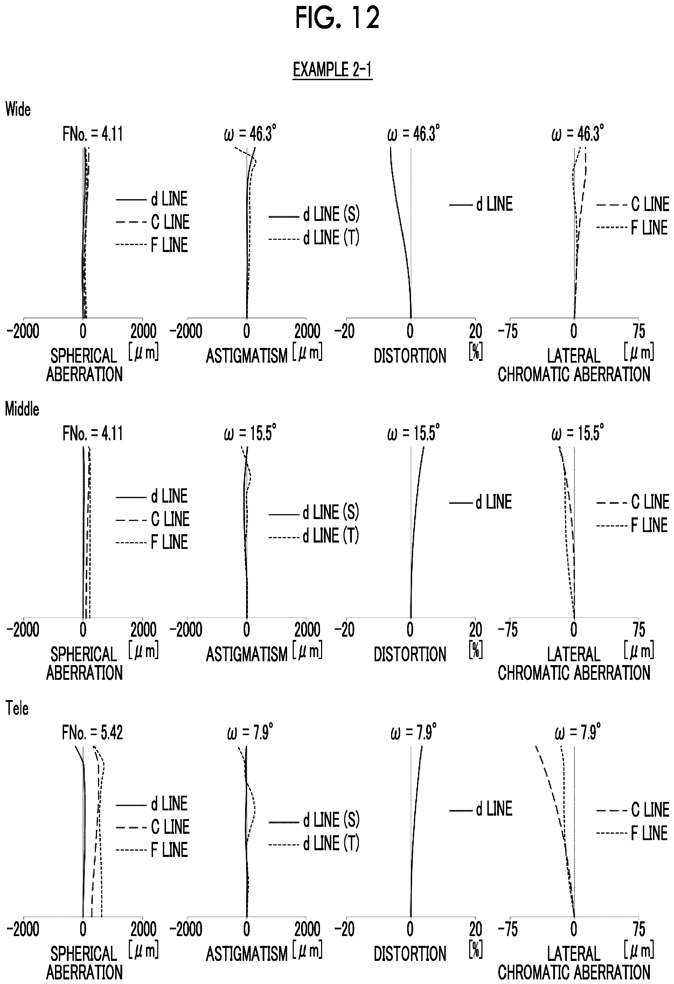

Regarding the zoom lens according to Example 2-1, Tables 10A and 10B show basic lens data, Table 11 shows specifications and variable surface spacings, Table 12 shows aspherical coefficients, and Fig. 12 shows each of the aberration diagrams.

Table 10A

| Example 2-1 | | | | | |
|---|---|---|---|---|---|
| Sn | R | D | Nd | vd | $\theta$g,F |
| *1 | 125.7823 | 2.4900 | 1.80100 | 34.97 | 0.58642 |
| 2 | 32.6239 | 29.6213 | | | |
| 3 | -79.6149 | 1.2630 | 1.72916 | 54.54 | 0.54535 |
| 4 | 111.8386 | 0.1203 | | | |
| 5 | 96.6943 | 5.6241 | 1.94595 | 17.98 | 0.65460 |
| 6 | -2481.0651 | 2.1614 | | | |
| 7 | 148.7487 | 8.1071 | 1.53775 | 74.70 | 0.53936 |

(continued)

| Example 2-1 | | | | | |
|---|---|---|---|---|---|
| Sn | R | D | Nd | vd | θg,F |
| *8 | -81.4651 | 8.0848 | | | |
| 9 | -1237.0096 | 1.2000 | 1.84666 | 23.84 | 0.62012 |
| 10 | 58.3321 | 14.1342 | 1.43700 | 95.10 | 0.53364 |
| 11 | -101.3760 | 0.1203 | | | |
| *12 | 153.0146 | 6.7038 | 1.49700 | 81.54 | 0.53748 |
| 13 | -232.7903 | 0.7230 | | | |
| 14 | 578.6200 | 9.0515 | 1.76385 | 48.49 | 0.55898 |
| 15 | -75.3264 | DD[15] | | | |
| 16 | -83.1757 | 1.2020 | 1.81600 | 46.62 | 0.55682 |
| 17 | 31.9646 | 2.9093 | | | |
| 18 | 2381.5684 | 0.8268 | 1.69100 | 54.82 | 0.54499 |
| 19 | 26.0654 | 5.4611 | 1.68960 | 31.14 | 0.60319 |
| 20 | -153.1643 | 0.1200 | | | |
| 21 | -11140.4924 | 0.8009 | 1.49700 | 81.61 | 0.53887 |
| *22 | 59.5981 | DD[22] | | | |
| 23 | -46.4056 | 0.8103 | 1.72916 | 54.54 | 0.54535 |
| 24 | 67.7339 | 2.3755 | 1.85451 | 25.15 | 0.61031 |
| 25 | 372.5353 | DD[25] | | | |
| *26 | 62.5081 | 5.2221 | 1.80610 | 40.93 | 0.57019 |
| 27 | -93.5285 | DD[27] | | | |

Table 10B

| Example 2-1 | | | | | |
|---|---|---|---|---|---|
| Sn | R | D | Nd | vd | θg,F |
| 28(St) | ∞ | 1.0002 | | | |
| 29 | 121.4160 | 1.0806 | 1.67328 | 38.05 | 0.57663 |
| 30 | 61.2322 | 5.7323 | 1.67366 | 57.55 | 0.54705 |
| 31 | -91.5433 | 0.2792 | | | |
| 32 | 161.5312 | 5.0416 | 1.49700 | 81.54 | 0.53748 |
| 33 | -56.0379 | 0.8764 | 2.05090 | 26.94 | 0.60519 |
| 34 | 420.9795 | 1.1210 | | | |
| 35 | 29.8888 | 5.5163 | 1.69560 | 59.05 | 0.54348 |
| 36 | 175.4804 | 0.9983 | | | |
| 37 | 46.1489 | 0.8001 | 2.00069 | 25.46 | 0.61364 |
| 38 | 19.7507 | 7.3663 | 1.65295 | 35.56 | 0.58725 |
| 39 | -460.3581 | 0.2175 | | | |
| 40 | -260.6103 | 0.8007 | 2.00100 | 29.13 | 0.59952 |
| 41 | 17.0830 | 7.2058 | 1.81679 | 24.14 | 0.62300 |

(continued)

| Sn | R | D | Nd | vd | θg,F |
|---|---|---|---|---|---|
| Example 2-1 | | | | | |
| 42 | -234.0912 | 0.8361 | | | |
| 43 | -207.6734 | 0.8118 | 1.74177 | 53.77 | 0.54589 |
| 44 | 21.4745 | 2.5298 | 1.74178 | 27.91 | 0.60884 |
| 45 | 33.2483 | 7.5326 | | | |
| 46 | 165.3551 | 5.6832 | 1.48749 | 70.24 | 0.53007 |
| 47 | -56.9700 | 11.1304 | | | |
| 48 | 109.1397 | 6.6068 | 1.85896 | 22.73 | 0.62844 |
| 49 | -39.4279 | 0.8002 | 1.92198 | 34.66 | 0.58388 |
| 50 | 118.8684 | 0.1209 | | | |
| 51 | 81.6411 | 7.6263 | 1.43700 | 95.10 | 0.53364 |
| 52 | -31.5585 | 0.8000 | 2.00100 | 29.13 | 0.59952 |
| 53 | 242.9196 | 0.4184 | | | |
| 54 | 44.8278 | 0.8765 | 1.83285 | 37.69 | 0.57645 |
| 55 | 33.2159 | 8.6441 | 1.50120 | 57.82 | 0.54543 |
| 56 | -68.0656 | 20.0000 | | | |
| 57 | ∞ | 5.7000 | 1.51633 | 64.14 | 0.53531 |
| 58 | ∞ | 23.2430 | | | |

Table 11

| Example 2-1 | | | |
|---|---|---|---|
| | Wide | Middle | Tele |
| Zr | 1.0 | 3.4 | 6.9 |
| f | 21.05 | 71.81 | 144.79 |
| FNo. | 4.11 | 4.11 | 5.42 |
| 2ω[°] | 92.6 | 31.0 | 15.8 |
| DD[15] | 0.9169 | 46.3357 | 61.5165 |
| DD[22] | 38.6635 | 4.0701 | 5.1631 |
| DD[25] | 4.9192 | 8.9929 | 0.7895 |
| DD[27] | 24.8046 | 9.9055 | 1.8351 |

Table 12

| Example 2-1 | | | |
|---|---|---|---|
| Sn | 1 | 8 | 12 |
| KA | 1.0000000E+00 | 1.0000000E+00 | 1.0000000E+00 |
| A4 | 1.1038894E-06 | 1.9513774E-06 | 2.1129546E-07 |
| A6 | 7.3650360E-10 | -2.1763121E-09 | -1.1377601E-09 |
| A8 | -3.0508358E-12 | 1.3959160E-11 | 4.7800689E-12 |
| A10 | 7.6419160E-15 | -5.9039677E-14 | -1.4497998E-14 |
| A12 | -1.1210122E-17 | 1.5725248E-16 | 2.8493407E-17 |

(continued)

| Example 2-1 | | | |
|---|---|---|---|
| Sn | 1 | 8 | 12 |
| A14 | 1.0008687E-20 | -2.6479084E-19 | -3.5654094E-20 |
| A16 | -5.3520752E-24 | 2.7356490E-22 | 2.7504930E-23 |
| A18 | 1.5779469E-27 | -1.5826671E-25 | -1.1926136E-26 |
| A20 | -1.9719947E-31 | 3.9247680E-29 | 2.2230713E-30 |

| Sn | 22 | 26 |
|---|---|---|
| KA | 1.0000000E+00 | 1.0000000E+00 |
| A4 | -9.7722136E-06 | -3.2734666E-06 |
| A6 | -3.8423145E-08 | -1.3910127E-09 |
| A8 | 8.1240343E-10 | 3.9992567E-11 |
| A10 | -1.0938142E-11 | -3.9003257E-13 |
| A12 | 8.6022671E-14 | 2.4625425E-15 |
| A14 | -3.5490119E-16 | -1.0150455E-17 |
| A16 | 3.7207620E-19 | 2.6252667E-20 |
| A18 | 2.2183755E-21 | -3.8630312E-23 |
| A20 | -5.9437520E-24 | 2.4656768E-26 |

Example 3

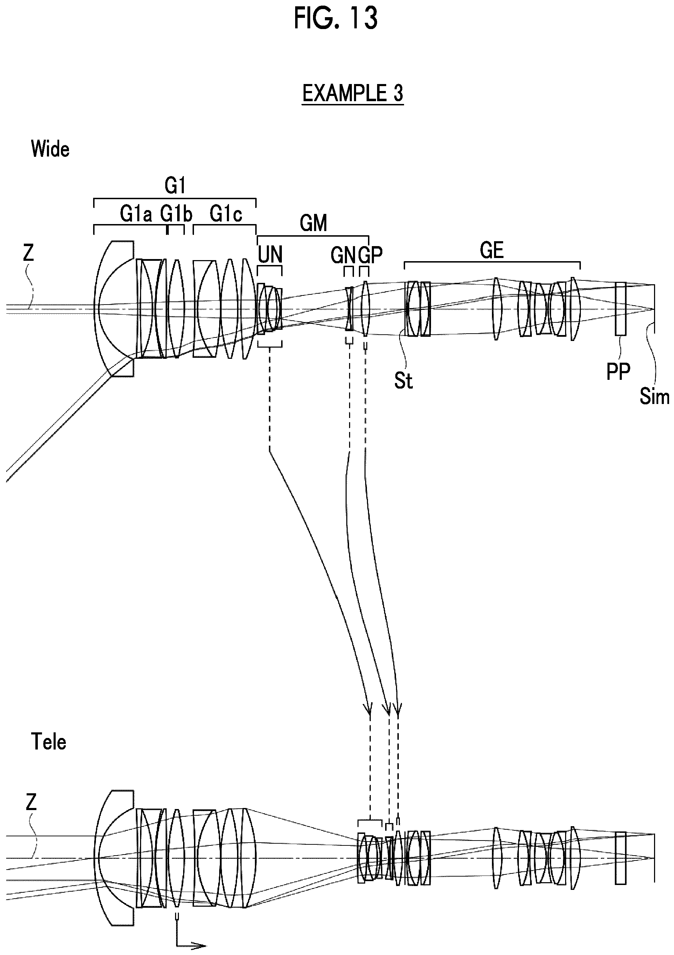

Fig. 13 shows a configuration of a zoom lens according to Example 3 and movement loci thereof. The zoom lens according to Example 3 consists of a first lens group G1 having a positive refractive power, a middle group GM, and a final lens group GE having a positive refractive power in order from an object side to an image side. The middle group GM consists of a negative group UN, an N lens group GN having a negative refractive power, and a P lens group GP having a positive refractive power in order from the object side to the image side. The negative group UN consists of one lens group having a negative refractive power.

During changing magnification from the wide angle end to the telephoto end, the first lens group G1 and the final lens group GE are fixed to the image plane Sim, and the negative group UN, the N lens group GN, and the P lens group GP move along an optical axis Z while changing spacings between adjacent lens groups.

The first lens group G1 consists of a first a partial group G1a having a negative refractive power, a first b partial group G1b having a positive refractive power, and a first c partial group G1c having a positive refractive power in order from the object side to the image side. The focusing group consists of the first b partial group G1b. The first b partial group G1b consists of one lens that is the fifth lens from the object side. During focusing from the infinite distance object to the close distance object, the first a partial group G1a and the first c partial group G1c are fixed to the image plane Sim, and the first b partial group G1b moves toward the image side.

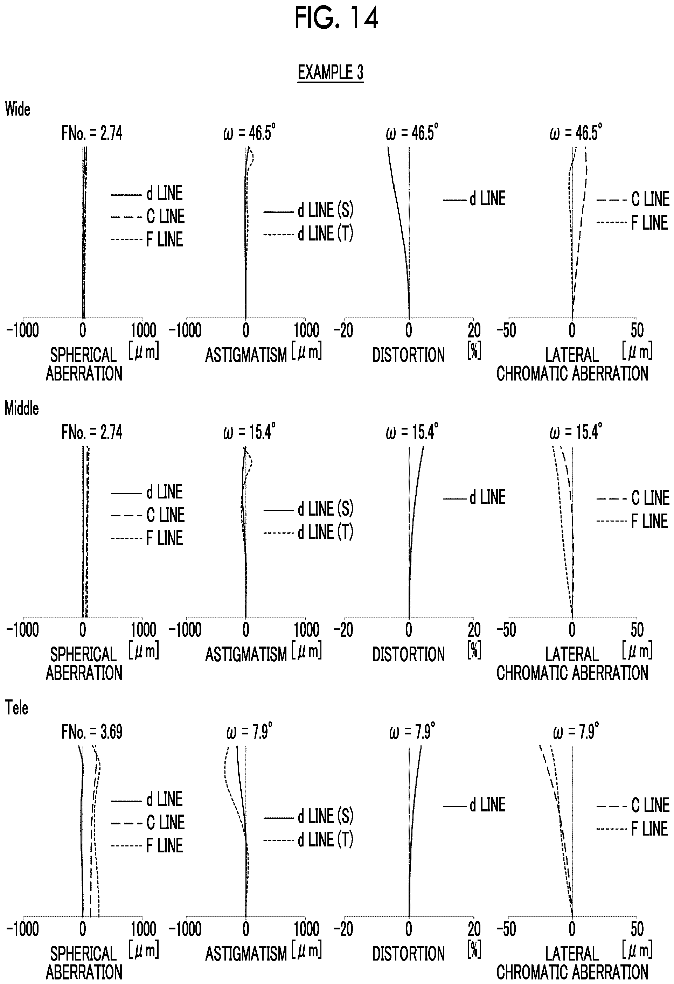

Regarding the zoom lens according to Example 3, Tables 13A and 13B show basic lens data, Table 14 shows specifications and variable surface spacings, Table 15 shows aspherical coefficients, and Fig. 14 shows each of the aberration diagrams.

Table 13A

| Example 3 | | | | | |
|---|---|---|---|---|---|
| Sn | R | D | Nd | vd | θg,F |
| *1 | 128.4585 | 2.5037 | 1.80100 | 34.97 | 0.58642 |
| 2 | 33.4713 | 22.0363 | | | |
| 3 | -658.9949 | 1.5382 | 1.48749 | 70.44 | 0.53062 |

(continued)

| Example 3 | | | | | |
|---|---|---|---|---|---|
| Sn | R | D | Nd | vd | θg,F |
| 4 | 499.2338 | 6.8919 | | | |
| 5 | -76.9652 | 1.5237 | 1.62041 | 60.34 | 0.53946 |
| 6 | 124.8392 | 0.1999 | | | |
| 7 | 98.3916 | 6.1647 | 1.92286 | 20.88 | 0.63900 |
| 8 | -1983.4554 | 1.0988 | | | |
| 9 | 108.4144 | 9.0188 | 1.53775 | 74.70 | 0.53936 |
| *10 | -103.5411 | 5.9645 | | | |
| 11 | -458.8863 | 1.4978 | 1.78880 | 28.43 | 0.60092 |
| 12 | 54.1026 | 13.0065 | 1.43700 | 95.10 | 0.53364 |
| 13 | -152.4737 | 0.1204 | | | |
| 14 | 101.1059 | 9.6889 | 1.43700 | 95.10 | 0.53364 |
| 15 | -122.6228 | 1.7866 | | | |
| *16 | 291.9638 | 8.4731 | 1.6968C- | 55.53 | 0.54341 |
| 17 | -84.1769 | DD[17] | | | |
| *18 | 1157.5713 | 0.9632 | 1.69680 | 55.53 | 0.54341 |
| 19 | 32.1959 | 4.2534 | | | |
| 20 | -90.5304 | 0.7144 | 1.72916 | 54.54 | 0.54535 |
| 21 | 31.6757 | 5.1920 | 1.72047 | 34.71 | 0.58350 |
| 22 | -67.9677 | 1.7491 | | | |
| 23 | -34.7898 | 0.6000 | 1.57144 | 71.61 | 0.54193 |
| 24 | 177.8321 | DD[24] | | | |
| 25 | -44.4223 | 0.6885 | 1.77250 | 49.60 | 0.55212 |
| 26 | 117.7324 | 1.5997 | 1.94595 | 17.98 | 0.65460 |
| 27 | 1111.2437 | DD[27] | | | |
| *28 | 72.2870 | 4.6222 | 1.80610 | 40.93 | 0.57019 |
| 29 | -77.5221 | DD[29] | | | |

Table 13B

| Example 3 | | | | | |
|---|---|---|---|---|---|
| Sn | R | D | Nd | vd | θg,F |
| 30(St) | ∞ | 1.0000 | | | |
| 31 | 135.6274 | 0.8682 | 1.59270 | 35.45 | 0.59271 |
| 32 | 37.4408 | 6.7909 | 1.59282 | 68.62 | 0.54414 |
| 33 | -85.6835 | 0.1199 | | | |
| 34 | 343.9230 | 4.6746 | 1.53996. | 59.46 | 0.54418 |
| 35 | -45.3445 | 0.8549 | 1.95375 | 32.32 | 0.59015 |
| 36 | -924.3087 | 35.3537 | | | |
| 37 | 137.9575 | 5.1031 | 1.60738 | 56.71 | 0.54817 |

(continued)

| Example 3 | | | | | |
|---|---|---|---|---|---|
| Sn | R | D | Nd | vd | θg,F |
| 38 | -66.3162 | 9.2049 | | | |
| 39 | 93.5233 | 5.9241 | 1.80809 | 22.76 | 0.63073 |
| 40 | -45.4572 | 0.8542 | 1.91082 | 35.25 | 0.58335 |
| 41 | 228.0251 | 2.6088 | | | |
| 42 | 87.4946 | 6.6053 | 1.49700 | 81.61 | 0.53887 |
| 43 | -33.4738 | 1.0645 | 2.00069 | 25.46 | 0.61364 |
| 44 | 60.3051 | 1.2313 | | | |
| 45 | 47.9533 | 7.7880 | 1.55200 | 70.70 | 0.54219 |
| 46 | -35.1041 | 0.8671 | 2.00100 | 29.13 | 0.59952 |
| 47 | 812.8350 | 2.7965 | | | |
| 48 | 268.6174 | 5.5674 | 1.84666 | 23.84 | 0.62012 |
| 49 | -48.7517 | 20.0000 | | | |
| 50 | ∞ | 5.7000 | 1.51633 | 64.14 | 0.53531 |
| 51 | ∞ | 16.3775 | | | |

Table 14

| Example 3 | | | |
|---|---|---|---|
| | Wide | Middle | Tele |
| Zr | 1.0 | 3.4 | 6.9 |
| f | 14.52 | 49.55 | 99.91 |
| FNo. | 2.74 | 2.74 | 3.69 |
| 2ω[°] | 93.0 | 30.8 | 15.8 |
| DD[17] | 0.7897 | 42.9532 | 57.2374 |
| DD[24] | 38.0018 | 3.4401 | 4.0498 |
| DD[27] | 4.8769 | 8.9728 | 0.7886 |
| DD[29] | 20.0380 | 8.3403 | 1.6306 |

Table 15

| Example 3 | |
|---|---|
| Sn | 1 |
| KA | 1.0000000E+00 |
| A4 | 1.2621657E-06 |
| A6 | 9.0219289E-11 |
| A8 | -1.8149563E-12 |
| A10 | 5.1657375E-15 |
| A12 | -7.6213348E-18 |
| A14 | 6.6390969E-21 |
| A16 | -3.4247038E-24 |
| A18 | 9.6807038E-28 |

(continued)

| Example 3 | |
|---|---|
| Sn | 1 |
| A20 | -1.1561511E-31 |

| Sn | 10 | 16 | 18 | 28 |
|---|---|---|---|---|
| KA | 1.0000000E+00 | 1.0000000E+00 | 1.0000000E+00 | 1.0000000E+00 |
| A4 | 1.5978341E-06 | -1.7721646E-07 | 2.6003333E-06 | -2.9896804E-06 |
| A6 | -5.8069718E-10 | -2.5707484E-10 | 2.9454386E-10 | 1.4314880E-09 |
| A8 | 2.6496453E-13 | 1.3100343E-13 | -7.3816765E-12 | -7.2039748E-13 |
| A10 | -1.0802764E-16 | -3.2690856E-17 | 1.6047785E-14 | -4.8467441E-17 |

Example 3-1

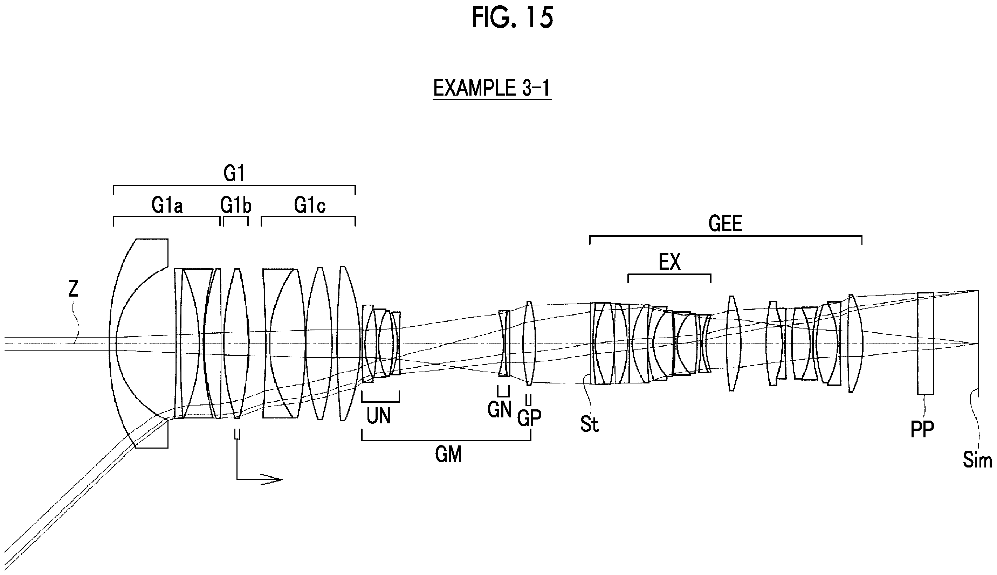

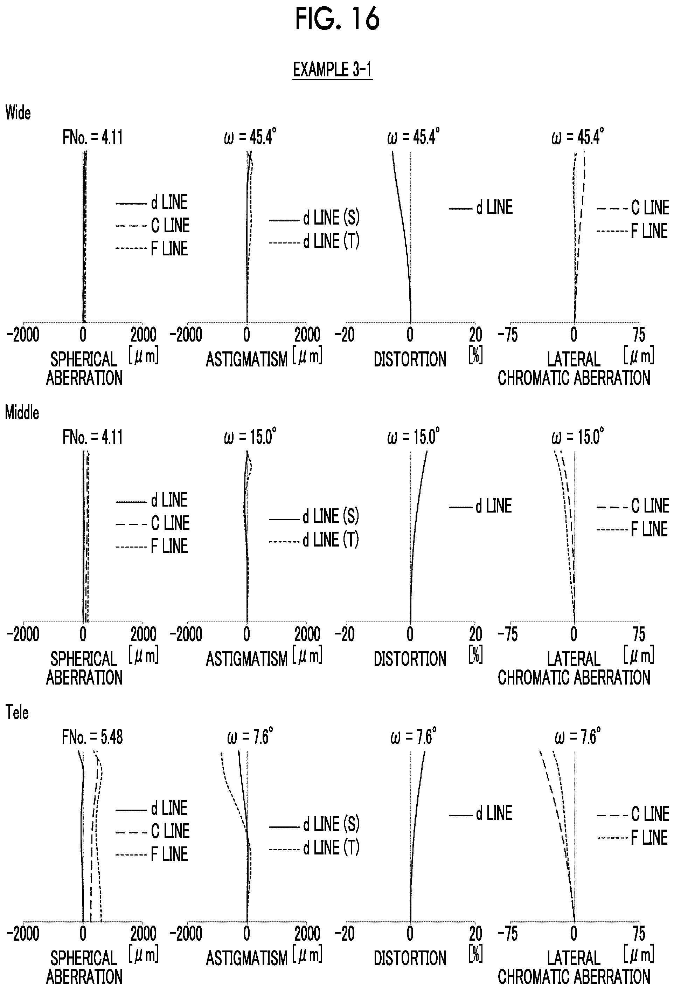

Example 3-1 is an example in which the EX group EX is inserted into the zoom lens according to Example 3. Fig. 15 is a cross-sectional view showing a configuration of the zoom lens according to Example 3-1 and luminous fluxes in the wide angle end state. The zoom lens according to Example 3-1 includes the final lens group GEE in which the EX group EX is inserted into the final lens group GE according to Example 3, instead of the final lens group GE according to Example 3. The other lens groups and the configurations of the groups in Example 3-1 are the same as those of the zoom lens according to Example 3.
Regarding the zoom lens according to Example 3-1, Tables 16A and 16B show basic lens data, Table 17 shows specifications and variable surface spacings, Table 18 shows aspherical coefficients, and Fig. 16 shows each of the aberration diagrams.

Table 16A

| Example 3-1 | | | | | |
|---|---|---|---|---|---|
| Sn | R | D | Nd | vd | θg,F |
| *1 | 128.4585 | 2.5037 | 1.80100 | 34.97 | 0.58642 |
| 2 | 33.4713 | 22.0363 | | | |
| 3 | -658.9949 | 1.5382 | 1.48749 | 70.44 | 0.53062 |
| 4 | 499.2338 | 6.8919 | | | |
| 5 | -76.9652 | 1.5237 | 1.62041 | 60.34 | 0.53946 |
| 6 | 124.8392 | 0.1999 | | | |
| 7 | 98.3916 | 6.1647 | 1.92286 | 20.88 | 0.63900 |
| 8 | -1983.4554 | 1.0988 | | | |
| 9 | 108.4144 | 9.0188 | 1.53775 | 74.70 | 0.53936 |
| *10 | -103.5411 | 5.9645 | | | |
| 11 | -458.8863 | 1.4978 | 1.78880 | 28.43 | 0.60092 |
| 12 | 54.1026 | 13.0065 | 1.43700 | 95.10 | 0.53364 |
| 13 | -152.4737 | 0.1204 | | | |
| 14 | 101.1059 | 9.6889 | 1.43700 | 95.10 | 0.53364 |
| 15 | -122.6228 | 1.7866 | | | |
| *16 | 291.9638 | 8.4731 | 1.6968C- | 55.53 | 0.54341 |
| 17 | -84.1769 | DD[17] | | | |
| *18 | 1157.5713 | 0.9632 | 1.69680 | 55.53 | 0.54341 |

(continued)

| Example 3-1 | | | | | |
|---|---|---|---|---|---|
| Sn | R | D | Nd | vd | θg,F |
| 19 | 32.1959 | 4.2534 | | | |
| 20 | -90.5304 | 0.7144 | 1.72916 | 54.54 | 0.54535 |
| 21 | 31.6757 | 5.1920 | 1.72047 | 34.71 | 0.58350 |
| 22 | -67.9677 | 1.7491 | | | |
| 23 | -34.7898 | 0.6000 | 1.57144 | 71.61 | 0.54193 |
| 24 | 177.8321 | DD[24] | | | |
| 25 | -44.4223 | 0.6885 | 1.77250 | 49.60 | 0.55212 |
| 26 | 117.7324 | 1.5997 | 1.94595 | 17.98 | 0.65460 |
| 27 | 1111.2437 | DD[27] | | | |
| *28 | 72.2870 | 4.6222 | 1.80610 | 40.93 | 0.57019 |
| 29 | -77.5221 | DD[29] | | | |

Table 16B

| Example 3-1 | | | | | |
|---|---|---|---|---|---|
| Sn | R | D | Nd | vd | θg,F |
| 30(St) | ∞ | 1.0000 | | | |
| 31 | 135.6274 | 0.8682 | 1.59270 | 35.45 | 0.59271 |
| 32 | 37.4408 | 6.7909 | 1.59282 | 68.62 | 0.54414 |
| 33 | -85.6835 | 0.1199 | | | |
| 34 | 343.9230 | 4.6746 | 1.53996 | 59.46 | 0.54418 |
| 35 | -45.3445 | 0.8549 | 1.95375 | 32.32 | 0.59015 |
| 36 | -924.3087 | 1.0001 | | | |
| 37 | 27.7317 | 5.3920 | 1.62041 | 60.34 | 0.53946 |
| 38 | 212.2413 | 0.1200 | | | |
| 39 | 44.6827 | 2.1566 | 2.00100 | 29.13 | 0.59952 |
| 40 | 19.5714 | 7.2262 | 1.61340 | 44.27 | 0.56340 |
| 41 | -208.9698 | 0.6190 | | | |
| 42 | -115.1642 | 0.7513 | 1.95375 | 32.32 | 0.59015 |
| 43 | 16.5477 | 7.3466 | 1.78472 | 25.72 | 0.61585 |
| 44 | -87.1102 | 1.2519 | | | |
| 45 | -100.1956 | 0.6088 | 1.72916 | 54.54 | 0.54535 |
| 46 | 29.2717 | 1.3823 | 1.72825 | 28.32 | 0.60755 |
| 47 | 34.0338 | 7.4990 | | | |
| 48 | 137.9575 | 5.1031 | 1.60738 | 56.71 | 0.54817 |
| 49 | -66.3162 | 9.2049 | | | |
| 50 | 93.5233 | 5.9241 | 1.80809 | 22.76 | 0.63073 |
| 51 | -45.4572 | 0.8542 | 1.91082 | 35.25 | 0.58335 |
| 52 | 228.0251 | 2.6088 | | | |

(continued)

| Example 3-1 | | | | | |
|---|---|---|---|---|---|
| 53 | 87.4946 | 6.6053 | 1.49700 | 81.61 | 0.53887 |
| 54 | -33.4738 | 1.0645 | 2.00069 | 25.46 | 0.61364 |
| 55 | 60.3051 | 1.2313 | | | |
| 56 | 47.9533 | 7.7880 | 1.55200 | 70.70 | 0.54219 |
| 57 | -35.1041 | 0.8671 | 2.00100 | 29.13 | 0.59952 |
| 58 | 812.8350 | 2.7965 | | | |
| 59 | 268.6174 | 5.5674 | 1.84666 | 23.84 | 0.62012 |
| 60 | -48.7517 | 20.0000 | | | |
| 61 | ∞ | 5.7000 | 1.51633 | 64.14 | 0.53531 |
| 62 | ∞ | 16.3529 | | | |

Table 17

| Example 3-1 | | | |
|---|---|---|---|
| | Wide | Middle | Tele |
| Zr | 1.0 | 3.4 | 6.9 |
| f | 21.58 | 73.64 | 148.48 |
| FNo. | 4.11 | 4.11 | 5.48 |
| 2ω[°] | 90.8 | 30.0 | 15.2 |
| DD[17] | 0.7897 | 42.9532 | 57.2374 |
| DD[24] | 38.0018 | 3.4401 | 4.0498 |
| DD[27] | 4.8769 | 8.9728 | 0.7886 |
| DD[29] | 20.0380 | 8.3403 | 1.6306 |

Table 18

| Example 3-1 | |
|---|---|
| Sn | 1 |
| KA | 1.0000000E+00 |
| A4 | 1.2621657E-06 |
| A6 | 9.0219289E-11 |
| A8 | -1.8149563E-12 |
| A10 | 5.1657375E-15 |
| A12 | -7.6213348E-18 |
| A14 | 6.6390969E-21 |
| A16 | -3.4247038E-24 |
| A18 | 9.6807038E-28 |
| A20 | -1.1561511E-31 |

| Sn | 10 | 16 | 18 | 28 |
|---|---|---|---|---|
| KA | 1.0000000E+00 | 1.0000000E+00 | 1.0000000E+00 | 1.0000000E+00 |

(continued)

| Sn | 10 | 16 | 18 | 28 |
|---|---|---|---|---|
| A4 | 1.5978341E-06 | -1.7721646E-07 | 2.6003333E-06 | -2.9896804E-06 |
| A6 | -5.8069718E-10 | -2.5707484E-10 | 2.9454386E-10 | 1.4314880E-09 |
| A8 | 2.6496453E-13 | 1.3100343E-13 | -7.3816765E-12 | -7.2039748E-13 |
| A10 | -1.0802764E-16 | -3.2690856E-17 | 1.6047785E-14 | -4.8467441E-17 |

Example 4

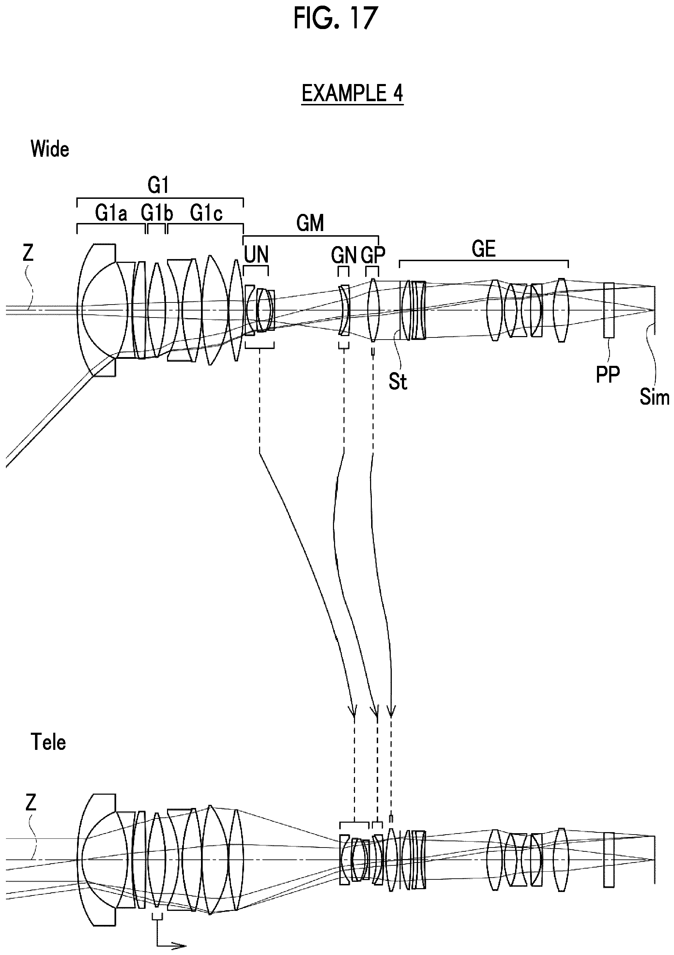

Fig. 17 shows a configuration of a zoom lens according to Example 4 and movement loci thereof. The zoom lens according to Example 4 consists of a first lens group G1 having a positive refractive power, a middle group GM, and a final lens group GE having a positive refractive power in order from an object side to an image side. The middle group GM consists of a negative group UN, an N lens group GN having a negative refractive power, and a P lens group GP having a positive refractive power in order from the object side to the image side. The negative group UN consists of one lens group having a negative refractive power.

During changing magnification from the wide angle end to the telephoto end, the first lens group G1 and the final lens group GE are fixed to the image plane Sim, and the negative group UN, the N lens group GN, and the P lens group GP move along an optical axis Z while changing spacings between adjacent lens groups.

The first lens group G1 consists of a first a partial group G1a having a negative refractive power, a first b partial group G1b having a positive refractive power, and a first c partial group G1c having a positive refractive power in order from the object side to the image side. The focusing group consists of the first b partial group G1b. The first b partial group G1b consists of one lens that is the fourth lens from the object side. During focusing from the infinite distance object to the close distance object, the first a partial group G1a and the first c partial group G1c are fixed to the image plane Sim, and the first b partial group G1b moves toward the image side.

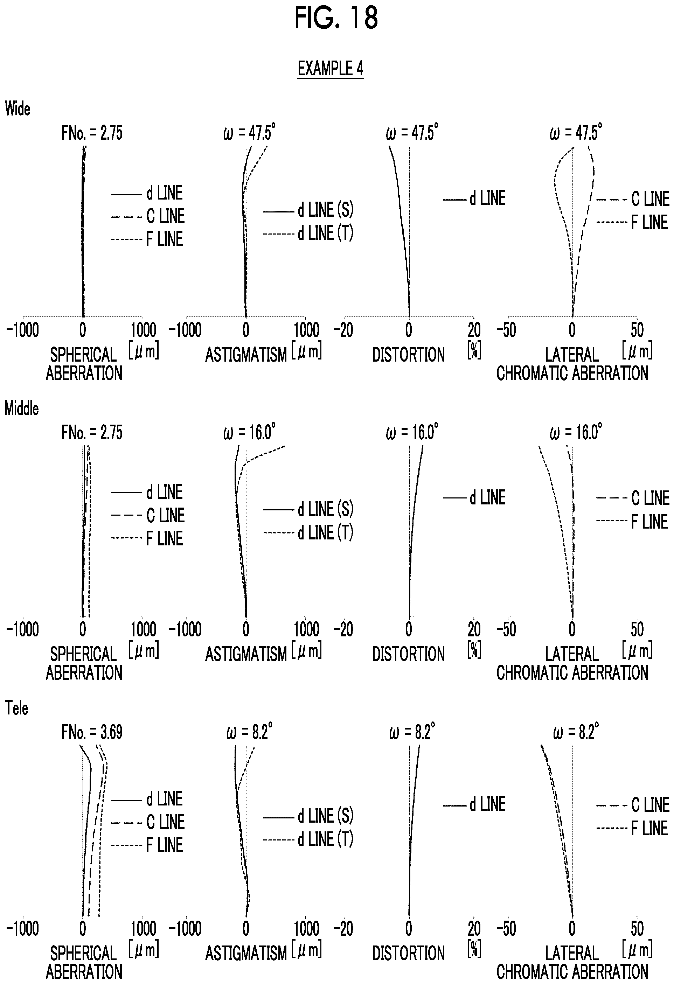

Regarding the zoom lens according to Example 4, Tables 19A and 19B show basic lens data, Table 20 shows specifications and variable surface spacings, Table 21 shows aspherical coefficients, and Fig. 18 shows each of the aberration diagrams.

Table 19A

| Example 4 | | | | | |
|---|---|---|---|---|---|
| Sn | R | D | Nd | vd | θg,F |
| *1 | 171.8404 | 2.6164 | 1.80100 | 34.97 | 0.58642 |
| 2 | 32.0540 | 26.0000 | | | |
| 3 | -70.7356 | 2.5000 | 1.72000 | 50.23 | 0.55214 |
| 4 | 226.9242 | 0.2650 | | | |
| 5 | 117.8727 | 7.4995 | 1.85896 | 22.73 | 0.62844 |
| 6 | -892.4867 | 1.2962 | | | |
| *7 | 77.5549 | 10.0002 | 1.52841 | 76.45 | 0.53954 |
| 8 | -95.6082 | 7.5741 | | | |
| 9 | -65.8524 | 2.0209 | 1.62495 | 35.58 | 0.58476 |
| 10 | 88.7431 | 11.0010 | 1.43700 | 95.10 | 0.53364 |
| 11 | -134.4623 | 0.1508 | | | |
| 12 | 135.5222 | 15.0009 | 1.45650 | 90.27 | 0.53477 |
| 13 | -60.1312 | 0.1501 | | | |
| *14 | 96.3237 | 8.5007 | 1.51680 | 64.20 | 0.53430 |
| 15 | -128.8341 | DD[15] | | | |
| 16 | -1980.8602 | 0.8807 | 1.80400 | 46.58 | 0.55730 |

(continued)

| Example 4 | | | | | |
|---|---|---|---|---|---|
| Sn | R | D | Nd | vd | θg,F |
| 17 | 22.1078 | 5.6377 | | | |
| 18 | 197.5730 | 0.7500 | 1.72916 | 54.68 | 0.54451 |
| 19 | 30.6793 | 7.0100 | 1.72825 | 28.46 | 0.60772 |
| 20 | -31.9088 | 1.4030 | | | |
| 21 | -27.6596 | 1.0981 | 1.83441 | 37.28 | 0.57732 |
| *22 | -389.4007 | DD[22] | | | |
| 23 | -47.4698 | 3.2101 | 1.89286 | 20.36 | 0.63944 |
| 24 | -27.5052 | 0.8303 | 1.90043 | 37.37 | 0.57720 |
| 25 | -188.8371 | DD[25] | | | |
| *26 | 69.6374 | 6.5004 | 1.64000 | 60.20 | 0.53610 |
| 27 | -62.9784 | DD[27] | | | |

Table 19B

| Example 4 | | | | | |
|---|---|---|---|---|---|
| Sn | R | D | Nd | vd | θg,F |
| 28(St) | ∞ | 1.0000 | | | |
| 29 | 50.7043 | 5.0007 | 1.49103 | 74.63 | 0.52253 |
| 30 | -187.6456 | 1.6670 | | | |
| 31 | -195.7877 | 2.3210 | 1.91740 | 19.34 | 0.63437 |
| 32 | -123.3970 | 2.0007 | 1.92155 | 34.15 | 0.58485 |
| 33 | 84.6773 | 2.0106 | 1.52317 | 57.02 | 0.54883 |
| 34 | 287.0921 | 35.4002 | | | |
| 35 | 50.6587 | 8.6937 | 1.54393 | 71.16 | 0.52854 |
| 36 | -64.0499 | 1.2743 | | | |
| 37 | 40.4461 | 7.0101 | 1.49103 | 80.26 | 0.51480 |
| 38 | -42.6630 | 2.6812 | 1.94773 | 34.79 | 0.58147 |
| 39 | 37.4458 | 5.1786 | | | |
| 40 | 237.3000 | 6.0091 | 1.64600 | 33.86 | 0.58918 |
| 41 | -24.5653 | 0.8002 | 1.87545 | 40.45 | 0.56727 |
| 42 | -337.3758 | 6.1697 | | | |
| 43 | 56.2408 | 8.8089 | 1.47424 | 85.78 | 0.50605 |
| 44 | -69.6680 | 20.0000 | | | |
| 45 | ∞ | 5.7000 | 1.51633 | 64.14 | 0.53531 |
| 46 | ∞ | 23.2591 | | | |

Table 20

| Example 4 | | | |
|---|---|---|---|
| | Wide | Middle | Tele |
| Zr | 1.0 | 3.4 | 6.9 |

(continued)

| Example 4 | | | |
|---|---|---|---|
| | Wide | Middle | Tele |
| f | 13.97 | 47.74 | 96.36 |
| FNo. | 2.75 | 2.75 | 3.69 |
| 2ω[°] | 95.0 | 32.0 | 16.4 |
| DD[15] | 1.0009 | 41.7018 | 54.4375 |
| DD[22] | 38.1977 | 2.1959 | 3.7759 |
| DD[25] | 10.2733 | 13.2546 | 1.4931 |
| DD[27] | 11.8428 | 4.1624 | 1.6082 |

Table 21

| Example 4 | | | |
|---|---|---|---|
| Sn | 1 | 7 | 14 |
| KA | 1.2190857E+01 | -2.5303597E-01 | -2.2390666E+00 |
| A3 | -9.5256478E-18 | -8.8354386E-21 | -5.7015786E-20 |
| A4 | 1.8544591E-06 | -9.8869737E-07 | -9.8760698E-07 |
| A5 | 1.6230601E-08 | -4.1635168E-08 | 7.8059668E-08 |
| A6 | -7.0818424E-09 | 4.7902238E-09 | -1.0221759E-08 |
| A7 | 1.1014052E-09 | -6.3922030E-11 | 6.0225010E-10 |
| A8 | -9.3189781E-11 | -3.0982399E-11 | -9.6462592E-12 |
| A9 | 4.2331759E-12 | 2.3588680E-12 | -6.9880701E-13 |
| A10 | -8.8220415E-14 | -2.3303231E-14 | 3.1286102E-14 |
| A11 | -2.0963549E-16 | -3.9435162E-15 | 7.1738919E-17 |
| A12 | 4.1806613E-17 | 1.2406696E-16 | -1.1166730E-17 |
| A13 | -2.9666566E-19 | 3.8303419E-18 | -1.1517015E-18 |
| A14 | -1.5203324E-20 | -2.9322776E-19 | 6.5610879E-20 |
| A15 | 3.2537603E-22 | 6.2662936E-21 | -1.2536476E-21 |
| A16 | -1.9572775E-24 | -4.7446690E-23 | 8.5789107E-24 |

| Sn | 22 | 26 |
|---|---|---|
| KA | 1.0000000E+00 | -1.7198642E+00 |
| A3 | 2.9701880E-18 | 1.3793421E-18 |
| A4 | -1.5280630E-05 | -2.1223962E-06 |
| A5 | 5.9793248E-06 | -4.6762300E-08 |
| A6 | -2.4734962E-06 | 3.9388041E-08 |
| A7 | 5.5776557E-07 | -1.0695107E-08 |
| A8 | -6.9453490E-08 | 1.7814317E-09 |
| A9 | 3.7535913E-09 | -2.0461165E-10 |
| A10 | 9.4268214E-11 | 1.6287843E-11 |
| A11 | -1.7182502E-11 | -8.1159768E-13 |

(continued)

| Sn | 22 | 26 |
|---|---|---|
| A12 | -7.8877236E-13 | 1.6784377E-14 |
| A13 | 2.1275467E-13 | 5.4714523E-16 |
| A14 | -1.3667509E-14 | -4.4055366E-17 |
| A15 | 3.9580525E-16 | 1.0375665E-18 |
| A16 | -4.4979542E-18 | -8.2772834E-21 |

Example 4-1

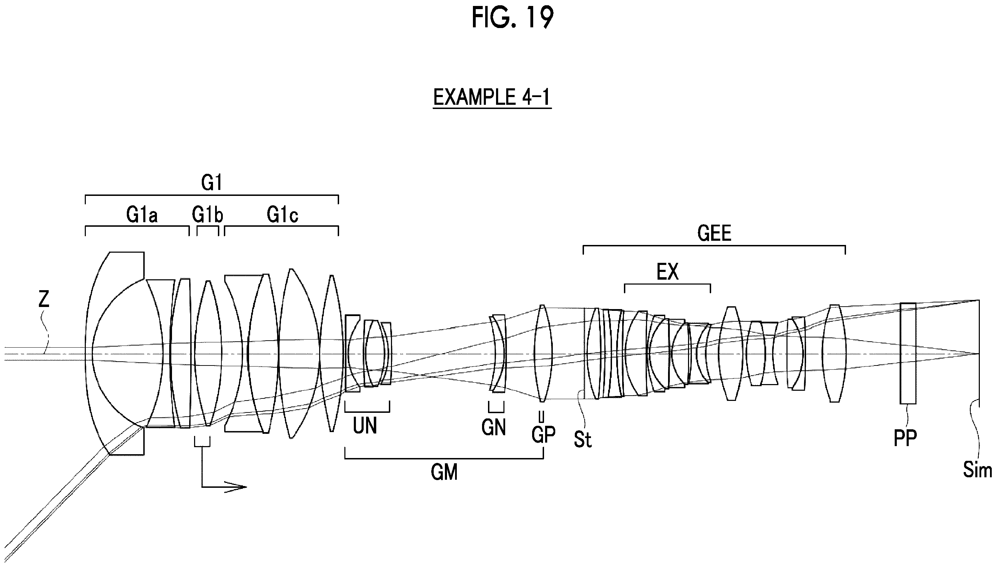

Example 4-1 is an example in which the EX group EX is inserted into the zoom lens according to Example 4. Fig. 19 is a cross-sectional view showing a configuration of the zoom lens according to Example 4-1 and luminous fluxes in the wide angle end state. The zoom lens according to Example 4-1 includes the final lens group GEE in which the EX group EX is inserted into the final lens group GE according to Example 4, instead of the final lens group GE according to Example 4. The other lens groups and the configurations of the groups in Example 4-1 are the same as those of the zoom lens according to Example 4.

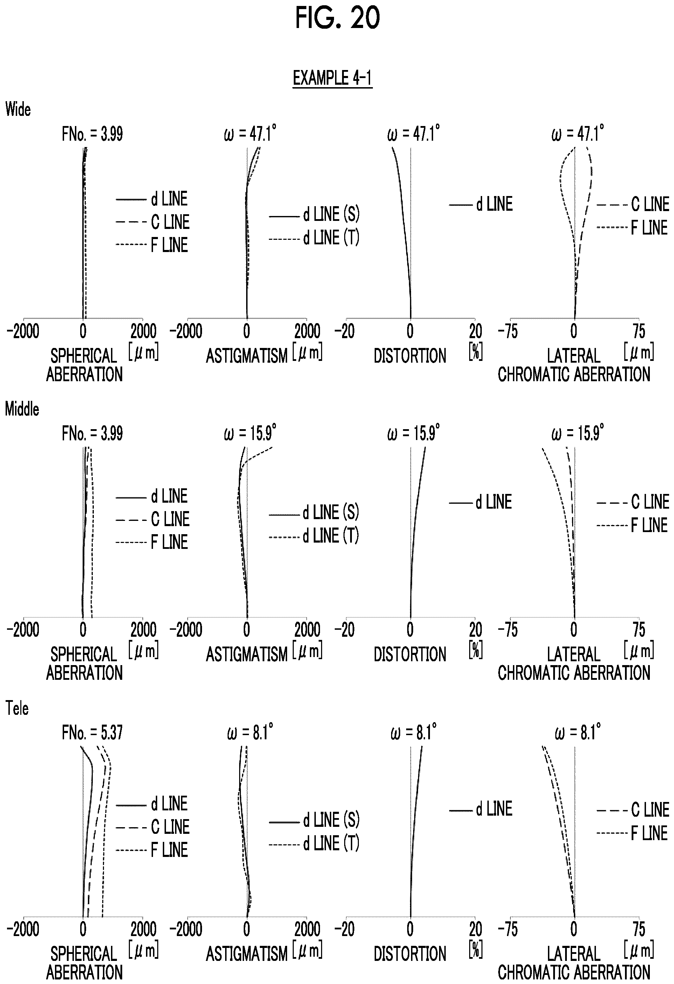

Regarding the zoom lens according to Example 4-1, Tables 22A and 22B show basic lens data, Table 23 shows specifications and variable surface spacings, Table 24 shows aspherical coefficients, and Fig. 20 shows each of the aberration diagrams.

Table 22A

| Example 4-1 | | | | | |
|---|---|---|---|---|---|
| Sn | R | D | Nd | vd | θg,F |
| *1 | 171.8404 | 2.6164 | 1.80100 | 34.97 | 0.58642 |
| 2 | 32.0540 | 26.0000 | | | |
| 3 | -70.7356 | 2.5000 | 1.72000 | 50.23 | 0.55214 |
| 4 | 226.9242 | 0.2650 | | | |
| 5 | 117.8727 | 7.4995 | 1.85896 | 22.73 | 0.62844 |
| 6 | -892.4867 | 1.2962 | | | |
| *7 | 77.5549 | 10.0002 | 1.52841 | 76.45 | 0.53954 |
| 8 | -95.6082 | 7.5741 | | | |
| 9 | -65.8524 | 2.0209 | 1.62495 | 35.58 | 0.58476 |
| 10 | 88.7431 | 11.0010 | 1.43700 | 95.10 | 0.53364 |
| 11 | -134.4623 | 0.1508 | | | |
| 12 | 135.5222 | 15.0009 | 1.45650 | 90.27 | 0.53477 |
| 13 | -60.1312 | 0.1501 | | | |
| *14 | 96.3237 | 8.5007 | 1.51680 | 64.20 | 0.53430 |
| 15 | -128.8341 | DD[15] | | | |
| 16 | -1980.8602 | 0.8807 | 1.80400 | 46.58 | 0.55730 |
| 17 | 22.1078 | 5.6377 | | | |
| 18 | 197.5730 | 0.7500 | 1.72916 | 54.68 | 0.54451 |
| 19 | 30.6793 | 7.0100 | 1.72825 | 28.46 | 0.60772 |
| 20 | -31.9088 | 1.4030 | | | |
| 21 | -27.6596 | 1.0981 | 1.83441 | 37.28 | 0.57732 |
| *22 | -389.4007 | DD[22] | | | |

(continued)

| Example 4-1 | | | | | |
|---|---|---|---|---|---|
| Sn | R | D | Nd | vd | θg,F |
| 23 | -47.4698 | 3.2101 | 1.89286 | 20.36 | 0.63944 |
| 24 | -27.5052 | 0.8303 | 1.90043 | 37.37 | 0.57720 |
| 25 | -188.8371 | DD[25] | | | |
| *26 | 69.6374 | 6.5004 | 1.64000 | 60.20 | 0.53610 |
| 27 | -62.9784 | DD[27] | | | |

Table 22B

| Example 4-1 | | | | | |
|---|---|---|---|---|---|
| Sn | R | D | Nd | vd | θg,F |
| 28(St) | ∞ | 1.0000 | | | |
| 29 | 50.7043 | 5.0007 | 1.49103 | 74.63 | 0.52253 |
| 30 | -187.6456 | 1.6670 | | | |
| 31 | -195.7877 | 2.3210 | 1.91740 | 19.34 | 0.63437 |
| 32 | -123.3970 | 2.0007 | 1.92155 | 34.15 | 0.58485 |
| 33 | 84.6773 | 2.0106 | 1.52317 | 57.02 | 0.54883 |
| 34 | 287.0921 | 1.0000 | | | |
| 35 | 29.9380 | 7.7095 | 1.53474 | 66.99 | 0.53473 |
| 36 | 338.1886 | 0.4071 | | | |
| 37 | 42.7775 | 0.8006 | 1.96085 | 30.16 | 0.59749 |
| 38 | 19.1825 | 7.3103 | 1.68380 | 38.68 | 0.58022 |
| 39 | -437.9133 | 0.1207 | | | |
| 40 | -269.6683 | 0.8003 | 1.82193 | 47.35 | 0.55191 |
| 41 | 17.4480 | 6.1758 | 1.55166 | 48.09 | 0.56303 |
| 42 | -213.7946 | 1.0384 | | | |
| 43 | -75.1620 | 1.8706 | 1.48957 | 68.18 | 0.53126 |
| 44 | 17.0894 | 3.4462 | 1.49689 | 80.48 | 0.51480 |
| 45 | 33.8706 | 4.7207 | | | |
| 46 | 50.6587 | 8.6937 | 1.54393 | 71.16 | 0.52854 |
| 47 | -64.0499 | 1.2743 | | | |
| 48 | 40.4461 | 7.0101 | 1.49103 | 80.26 | 0.51480 |
| 49 | -42.6630 | 2.6812 | 1.94773 | 34.79 | 0.58147 |
| 50 | 37.4458 | 5.1786 | | | |
| 51 | 237.3000 | 6.0091 | 1.64600 | 33.86 | 0.58918 |
| 52 | -24.5653 | 0.8002 | 1.87545 | 40.45 | 0.56727 |
| 53 | -337.3758 | 6.1697 | | | |
| 54 | 56.2408 | 8.8089 | 1.47424 | 85.18 | 0.50605 |
| 55 | -69.6680 | 20.0000 | | | |
| 56 | ∞ | 5.7000 | 1.51633 | 64.14 | 0.53531 |

(continued)

| Example 4-1 | | | | | |
|---|---|---|---|---|---|
| Sn | R | D | Nd | vd | θg,F |
| 57 | ∞ | 23.2053 | | | |

Table 23

| Example 4-1 | | | |
|---|---|---|---|
| | Wide | Middle | Tele |
| Zr | 1.0 | 3.4 | 6.9 |
| f | 20.34 | 69.52 | 140.34 |
| FNo. | 3.99 | 3.99 | 5.37 |
| 2ω[°] | 94.2 | 31.8 | 16.2 |
| DD[15] | 1.0009 | 41.7018 | 54.4375 |
| DD[22] | 38.1977 | 2.1959 | 3.7759 |
| DD[25] | 10.2733 | 13.2546 | 1.4931 |
| DD[27] | 11.8428 | 4.1624 | 1.6082 |

Table 24

| Example 4-1 | | | |
|---|---|---|---|
| Sn | 1 | 7 | 14 |
| KA | 1.2190857E+01 | -2.5303597E-01 | -2.2390666E+00 |
| A3 | -9.5256478E-18 | -8.8354386E-21 | -5.7015786E-20 |
| A4 | 1.8544591E-06 | -9.8869737E-07 | -9.8760698E-07 |
| A5 | 1.6230601E-08 | -4.1635168E-08 | 7.8059668E-08 |
| A6 | -7.0818424E-09 | 4.7902238E-09 | -1.0221759E-08 |
| A7 | 1.1014052E-09 | -6.3922030E-11 | 6.0225010E-10 |
| A8 | -9.3189781E-11 | -3.0982399E-11 | -9.6462592E-12 |
| A9 | 4.2331759E-12 | 2.3588680E-12 | -6.9880701E-13 |
| A10 | -8.8220415E-14 | -2.3303231E-14 | 3.1286102E-14 |
| A11 | -2.0963549E-16 | -3.9435162E-15 | 7.1738919E-17 |
| A12 | 4.1806613E-17 | 1.2406696E-16 | -1.1166730E-17 |
| A13 | -2.9666566E-19 | 3.8303419E-18 | -1.1517015E-18 |
| A14 | -1.5203324E-20 | -2.9322776E-19 | 6.5610879E-20 |
| A15 | 3.2537603E-22 | 6.2662936E-21 | -1.2536476E-21 |
| A16 | -1.9572775E-24 | -4.7446690E-23 | 8.5789107E-24 |

| Sn | 22 | 26 |
|---|---|---|
| KA | 1.0000000E+00 | -1.7198642E+00 |
| A3 | 2.9701880E-18 | 1.3793421E-18 |
| A4 | -1.5280630E-05 | -2.1223962E-06 |
| A5 | 5.9793248E-06 | -4.6762300E-08 |

(continued)

| Sn | 22 | 26 |
|---|---|---|
| A6 | -2.4734962E-06 | 3.9388041E-08 |
| A7 | 5.5776557E-07 | -1.0695107E-08 |
| A8 | -6.9453490E-08 | 1.7814317E-09 |
| A9 | 3.7535913E-09 | -2.0461165E-10 |
| A10 | 9.4268214E-11 | 1.6287843E-11 |
| A11 | -1.7182502E-11 | -8.1159768E-13 |
| A12 | -7.8877236E-13 | 1.6784377E-14 |
| A13 | 2.1275467E-13 | 5.4714523E-16 |
| A14 | -1.3667509E-14 | -4.4055366E-17 |
| A15 | 3.9580525E-16 | 1.0375665E-18 |
| A16 | -4.4979542E-18 | -8.2772834E-21 |

Example 5

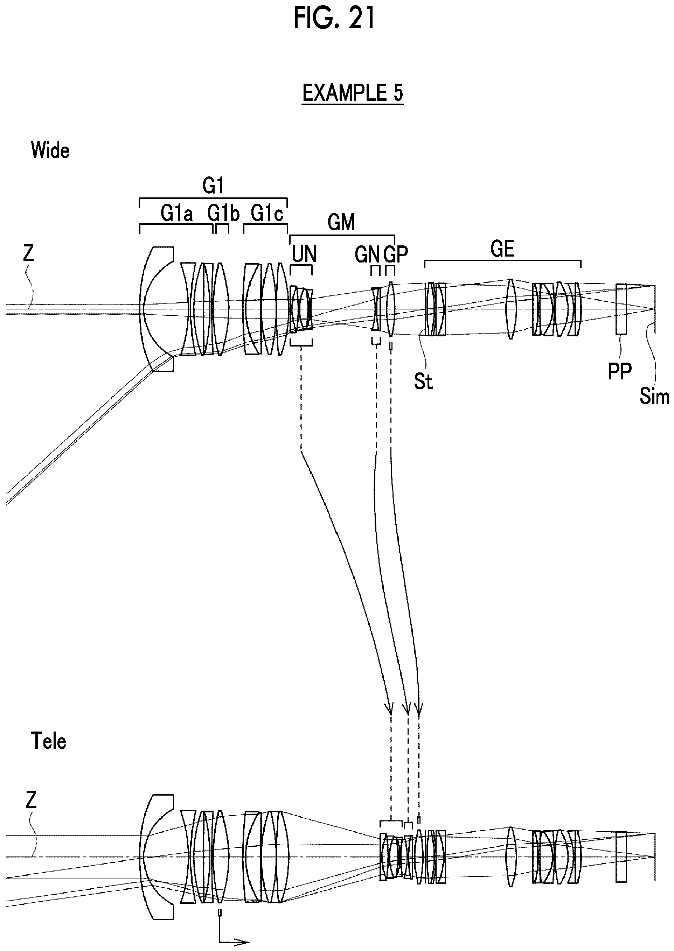

Fig. 21 shows a configuration of a zoom lens according to Example 5 and movement loci thereof. The zoom lens according to Example 5 consists of a first lens group G1 having a positive refractive power, a middle group GM, and a final lens group GE having a positive refractive power in order from an object side to an image side. The middle group GM consists of a negative group UN, an N lens group GN having a negative refractive power, and a P lens group GP having a positive refractive power in order from the object side to the image side. The negative group UN consists of one lens group having a negative refractive power.

During changing magnification from the wide angle end to the telephoto end, the first lens group G1 and the final lens group GE are fixed to the image plane Sim, and the negative group UN, the N lens group GN, and the P lens group GP move along an optical axis Z while changing spacings between adjacent lens groups.

The first lens group G1 consists of a first a partial group G1a having a negative refractive power, a first b partial group G1b having a positive refractive power, and a first c partial group G1c having a positive refractive power in order from the object side to the image side. The focusing group consists of the first b partial group G1b. The first b partial group G1b consists of one lens that is the fifth lens from the object side. During focusing from the infinite distance object to the close distance object, the first a partial group G1a and the first c partial group G1c are fixed to the image plane Sim, and the first b partial group G1b moves toward the image side.

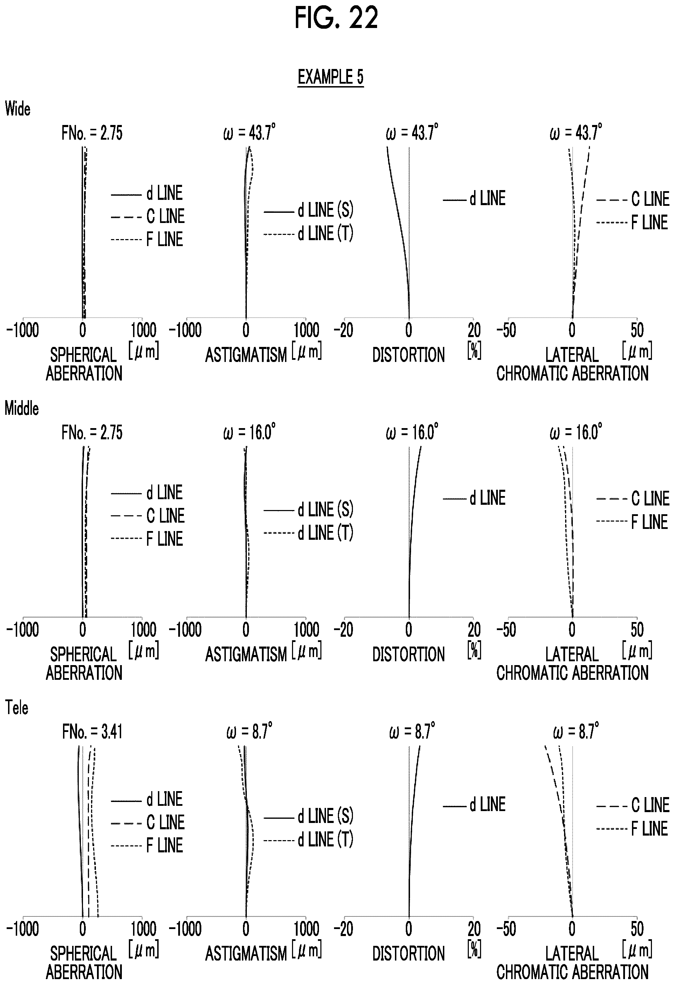

Regarding the zoom lens according to Example 5, Tables 25A and 25B show basic lens data, Table 26 shows specifications and variable surface spacings, Table 27 shows aspherical coefficients, and Fig. 22 shows each of the aberration diagrams.

Table 25A

| Example 5 | | | | | |
|---|---|---|---|---|---|
| Sn | R | D | Nd | vd | θg,F |
| *1 | 141.3246 | 2.2582 | 1.83441 | 37.28 | 0.57732 |
| 2 | 33.6484 | 25.5274 | | | |
| 3 | -88.2467 | 1.1234 | 1.48749 | 70.24 | 0.53007 |
| 4 | 141.1335 | 1.7431 | | | |
| 5 | 86.5961 | 5.7007 | 1.89286 | 20.36 | 0.63944 |
| 6 | 11962.3519 | 3.4638 | | | |
| 7 | -124.3588 | 1.0974 | 1.66755 | 41.87 | 0.57515 |
| 8 | 481.1241 | 0.9000 | | | |
| 9 | 125.5361 | 8.8787 | 1.55032 | 75.50 | 0.54001 |

(continued)

| Sn | R | D | Nd | vd | θg,F |
|---|---|---|---|---|---|
| Example 5 | | | | | |
| *10 | -74.0646 | 7.9788 | | | |
| 11 | 246.5828 | 1.6462 | 1.85451 | 25.15 | 0.61031 |
| 12 | 53.0306 | 8.6102 | 1.43875 | 94.66 | 0.53402 |
| 13 | 2777.2517 | 0.3002 | | | |
| 14 | 98.1233 | 8.4920 | 1.43875 | 94.66 | 0.53402 |
| 15 | -121.8255 | 0.1209 | | | |
| 16 | 306.2842 | 6.9539 | 1.72916 | 54.68 | 0.54451 |
| *17 | -88.0664 | DD[17] | | | |
| *18 | -291.8762 | 0.8517 | 1.78590 | 43.93 | 0.56118 |
| 19 | 38.5363 | 3.3778 | | | |
| 20 | -111.9075 | 0.8104 | 1.72916 | 54.68 | 0.54451 |
| 21 | 31.1050 | 4.9229 | 1.77047 | 29.14 | 0.59514 |
| 22 | -67.1497 | 1.1540 | | | |
| 23 | -36.1172 | 0.5004 | 1.59410 | 60.47 | 0.55516 |
| 24 | 107.2963 | DD[24] | | | |
| 25 | -45.5598 | 0.8282 | 1.75500 | 52.32 | 0.54757 |
| 26 | 68.1999 | 2.2381 | 1.80518 | 25.42 | 0.61616 |
| 27 | 10362.0166 | DD[27] | | | |
| *28 | 60.9118 | 4.8035 | 1.73400 | 51.47 | 0.54874 |
| 29 | -79.1176 | DD[29] | | | |

Table 25B

| Sn | R | D | Nd | vd | θg,F |
|---|---|---|---|---|---|
| Example 5 | | | | | |
| 30(St) | ∞ | 1.0008 | | | |
| 31 | 130.3544 | 3.9944 | 1.65160 | 58.54 | 0.53901 |
| 32 | -64.8573 | 0.9709 | 1.62004 | 36.26 | 0.58800 |
| 33 | -79.4469 | 0.1206 | | | |
| 34 | 324258.9576 | 4.2759 | 1.59522 | 67.73 | 0.54426 |
| 35 | -41.4725 | 0.9485 | 1.91650 | 31.60 | 0.59117 |
| 36 | -106578.2017 | 34.6699 | | | |
| 37 | 85.2343 | 5.8589 | 1.57135 | 52.95 | 0.55544 |
| 38 | -61.5141 | 9.3499 | | | |
| 39 | ∞ | 2.9595 | 1.80809 | 22.76 | 0.63073 |
| 40 | -65.4197 | 0.9420 | 1.95375 | 32.32 | 0.59056 |
| 41 | 680.8127 | 0.1209 | | | |
| 42 | 195.8879 | 7.1437 | 1.43875 | 94.66 | 0.53402 |
| 43 | -26.1615 | 0.8876 | 2.00100 | 29.14 | 0.59974 |

(continued)

| Example 5 | | | | | |
|---|---|---|---|---|---|
| Sn | R | D | Nd | vd | θg,F |
| 44 | -159.4307 | 0.5008 | | | |
| 45 | 77.2156 | 7.3509 | 1.43875 | 94.66 | 0.53402 |
| 46 | -33.6459 | 3.2159 | | | |
| 47 | -38.2604 | 0.8879 | 1.85150 | 40.78 | 0.56958 |
| 48 | 501.3595 | 3.3823 | 1.80809 | 22.76 | 0.63073 |
| 49 | -63.0353 | 20.0000 | | | |
| 50 | ∞ | 5.7000 | 1.51633 | 64.14 | 0.53531 |
| 51 | ∞ | 16.3106 | | | |

Table 26

| Example 5 | | | |
|---|---|---|---|
| | Wide | Middle | Tele |
| Zr | 1.0 | 3.0 | 5.6 |
| f | 16.00 | 48.04 | 90.02 |
| FNo. | 2.75 | 2.75 | 3.41 |
| 2ω[°] | 87.4 | 32.0 | 17.4 |
| DD[17] | 1.0202 | 38.5280 | 51.8890 |
| DD[24] | 36.1784 | 5.9794 | 3.5705 |
| DD[27] | 3.3817 | 7.1984 | 1.0946 |
| DD[29] | 17.4135 | 6.2880 | 1.4398 |

Table 27

| Example 5 | | | |
|---|---|---|---|
| Sn | 1 | 10 | 17 |
| KA | -1.4973167E+01 | 5.2415507E-01 | 9.9237482E-01 |
| A4 | 2.0252245E-06 | 1.9241132E-06 | -2.0726054E-07 |
| A6 | -4.7539876E-10 | -5.4126670E-10 | 5.9604628E-10 |
| A8 | -1.3200437E-13 | -9.4388234E-13 | -5.6260838E-13 |
| A10 | 1.8900162E-15 | 6.1966946E-15 | 5.2635686E-16 |
| A12 | -4.0351876E-18 | -1.7781142E-17 | -8.0549434E-19 |
| A14 | 4.5114250E-21 | 2.9985502E-20 | 1.7027902E-21 |
| A16 | -2.8864751E-24 | -3.0646381E-23 | -2.3438756E-24 |
| A18 | 1.0038855E-27 | 1.7575221E-26 | 1.6776145E-27 |
| A20 | -1.4783032E-31 | -4.3393544E-30 | -4.8340211E-31 |

| Sn | 18 | 28 |
|---|---|---|
| KA | -6.6794691E+01 | -3.7529246E-01 |
| A4 | 2.6049445E-06 | -3.4895941E-06 |

(continued)

| Sn | 18 | 28 |
|---|---|---|
| A6 | 7.8947695E-09 | 6.2351465E-10 |
| A8 | -1.8003524E-10 | 2.6733141E-11 |
| A10 | 2.1652994E-12 | -2.8501906E-13 |
| A12 | -1.5793391E-14 | 1.7751569E-15 |
| A14 | 6.6255746E-17 | -6.7804122E-18 |
| A16 | -1.2713196E-19 | 1.5250212E-20 |
| A18 | -1.4929324E-23 | -1.8150131E-23 |
| A20 | 2.9481836E-25 | 8.5444869E-27 |

Example 5-1

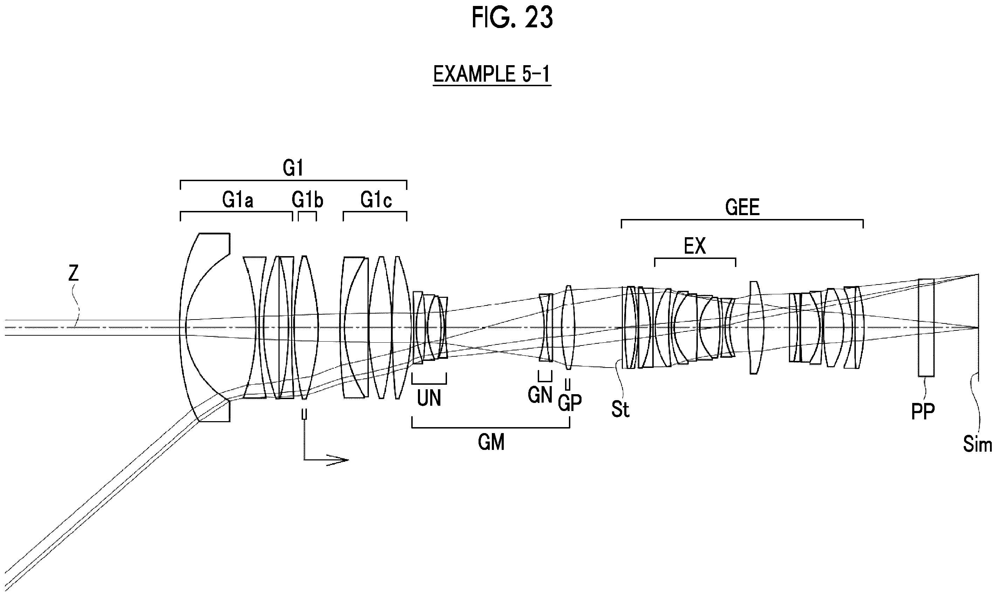

Example 5-1 is an example in which the EX group EX is inserted into the zoom lens according to Example 5. Fig. 23 is a cross-sectional view showing a configuration of the zoom lens according to Example 5-1 and luminous fluxes in the wide angle end state. The zoom lens according to Example 5-1 includes the final lens group GEE in which the EX group EX is inserted into the final lens group GE according to Example 5, instead of the final lens group GE according to Example 5. The other lens groups and the configurations of the groups in Example 5-1 are the same as those of the zoom lens according to Example 5.

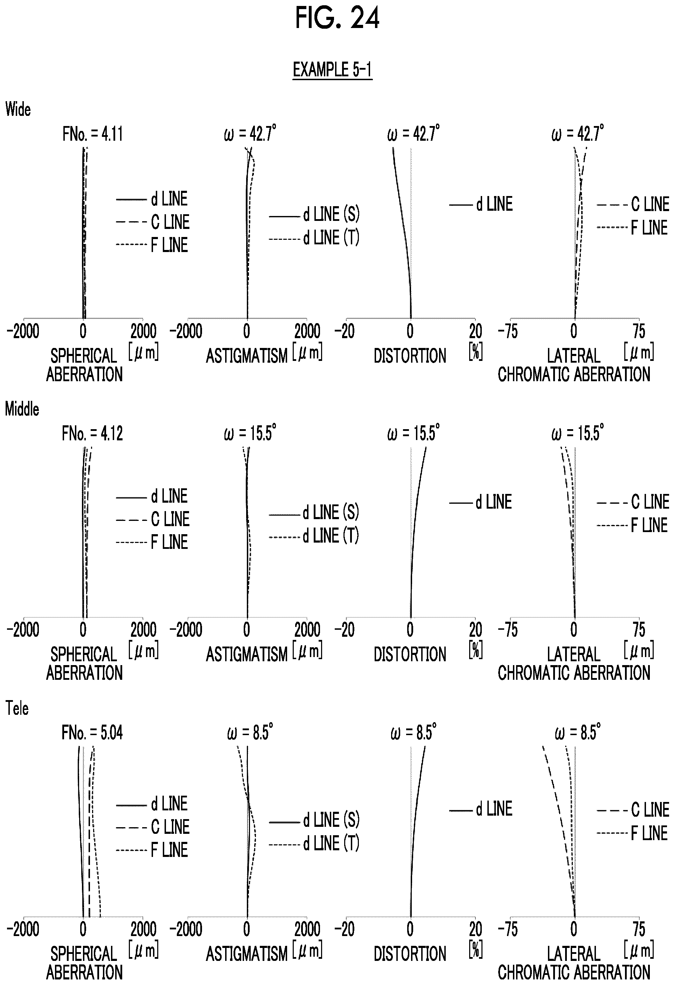

Regarding the zoom lens according to Example 5-1, Tables 28A and 28B show basic lens data, Table 29 shows specifications and variable surface spacings, Table 30 shows aspherical coefficients, and Fig. 24 shows each of the aberration diagrams.

Table 28A

| Example 5-1 | | | | | |
|---|---|---|---|---|---|
| Sn | R | D | Nd | vd | θg,F |
| *1 | 141.3246 | 2.2582 | 1.83441 | 37.28 | 0.57732 |
| 2 | 33.6484 | 25.5274 | | | |
| 3 | -88.2467 | 1.1234 | 1.48749 | 70.24 | 0.53007 |
| 4 | 141.1335 | 1.7431 | | | |
| 5 | 86.5961 | 5.7007 | 1.89286 | 20.36 | 0.63944 |
| 6 | 11962.3519 | 3.4638 | | | |
| 7 | -124.3588 | 1.0974 | 1.66755 | 41.87 | 0.57515 |
| 8 | 481.1241 | 0.9000 | | | |
| 9 | 125.5361 | 8.8787 | 1.55032 | 75.50 | 0.54001 |
| *10 | -74.0646 | 7.9788 | | | |
| 11 | 246.5828 | 1.6462 | 1.85451 | 25.15 | 0.61031 |
| 12 | 53.0306 | 8.6102 | 1.43875 | 94.66 | 0.53402 |
| 13 | 2777.2517 | 0.3002 | | | |
| 14 | 98.1233 | 8.4920 | 1.43875 | 94.66 | 0.53402 |
| 15 | -121.8255 | 0.1209 | | | |
| 16 | 306.2842 | 6.9539 | 1.72916 | 54.68 | 0.54451 |
| *17 | -88.0664 | DD[17] | | | |
| *18 | -291.8762 | 0.8517 | 1.78590 | 43.93 | 0.56118 |
| 19 | 38.5363 | 3.3778 | | | |

(continued)

| Example 5-1 | | | | | |
|---|---|---|---|---|---|
| Sn | R | D | Nd | vd | θg,F |
| 20 | -111.9075 | 0.8104 | 1.72916 | 54.68 | 0.54451 |
| 21 | 31.1050 | 4.9229 | 1.77047 | 29.74 | 0.59514 |
| 22 | -67.1497 | 1.1540 | | | |
| 23 | -36.1172 | 0.5004 | 1.59410 | 60.47 | 0.55516 |
| 24 | 107.2963 | DD[24] | | | |
| 25 | -45.5598 | 0.8282 | 1.75500 | 52.32 | 0.54757 |
| 26 | 68.1999 | 2.2381 | 1.80518 | 25.42 | 0.61616 |
| 27 | 10362.0166 | DD[27] | | | |
| *28 | 60.9118 | 4.8035 | 1.73400 | 51.47 | 0.54874 |
| 29 | -79.1176 | DD[29] | | | |

Table 28B

| Example 5-1 | | | | | |
|---|---|---|---|---|---|
| Sn | R | D | Nd | vd | θg,F |
| 30(St) | ∞ | 1.0008 | | | |
| 31 | 130.3544 | 3.9944 | 1.65160 | 58.54 | 0.53901 |
| 32 | -64.8573 | 0.9709 | 1.62004 | 36.26 | 0.58800 |
| 33 | -79.4469 | 0.1206 | | | |
| 34 | 324258.9576 | 4.2759 | 1.59522 | 67.73 | 0.54426 |
| 35 | -41.4725 | 0.9485 | 1.91650 | 31.60 | 0.59117 |
| 36 | -106578.2017 | 0.8000 | | | |
| 37 | 29.4539 | 4.8970 | 1.63246 | 63.77 | 0.54215 |
| 38 | 132.4223 | 0.9376 | | | |
| 39 | 39.0964 | 1.2149 | 2.00100 | 29.13 | 0.59952 |
| 40 | 19.4730 | 8.3647 | 1.56732 | 42.82 | 0.57309 |
| 41 | -233.0580 | 0.0822 | | | |
| 42 | -213.1486 | 0.8369 | 1.83400 | 37.21 | 0.58082 |
| 43 | 17.0773 | 7.3953 | 1.69895 | 30.05 | 0.60282 |
| 44 | -79.5985 | 1.1174 | | | |
| 45 | -88.9877 | 0.8010 | 1.76385 | 48.49 | 0.55898 |
| 46 | 26.9888 | 1.6790 | 1.76182 | 26.52 | 0.61361 |
| 47 | 32.7969 | 6.5440 | | | |
| 48 | 85.2343 | 5.8589 | 1.57135 | 52.95 | 0.55544 |
| 49 | -61.5141 | 9.3499 | | | |
| 50 | ∞ | 2.9595 | 1.80809 | 22.76 | 0.63073 |
| 51 | -65.4197 | 0.9420 | 1.95375 | 32.32 | 0.59056 |
| 52 | 680.8127 | 0.1209 | | | |
| 53 | 195.8879 | 7.1437 | 1.43875 | 94.66 | 0.53402 |

(continued)

| Sn | R | D | Nd | vd | θg,F |
|---|---|---|---|---|---|
| | | Example 5-1 | | | |
| 54 | -26.1615 | 0.8876 | 2.00100 | 29.14 | 0.59974 |
| 55 | -159.4307 | 0.5008 | | | |
| 56 | 77.2156 | 7.3509 | 1.43875 | 94.66 | 0.53402 |
| 57 | -33.6459 | 3.2159 | | | |
| 58 | -38.2604 | 0.8879 | 1.85150 | 40.78 | 0.56958 |
| 59 | 501.3595 | 3.3823 | 1.80809 | 22.76 | 0.63073 |
| 60 | -63.0353 | 20.0000 | | | |
| 61 | ∞ | 5.7000 | 1.51633 | 64.14 | 0.53531 |
| 62 | ∞ | 16.2956 | | | |

Table 29

| Example 5-1 | | | |
|---|---|---|---|
| | Wide | Middle | Tele |
| Zr | 1.0 | 3.0 | 5.6 |
| f | 23.66 | 71.02 | 133.08 |
| FNo. | 4.11 | 4.12 | 5.04 |
| 2ω[°] | 85.4 | 31.0 | 17.0 |
| DD[17] | 1.0202 | 38.5280 | 51.8890 |
| DD[24] | 36.1784 | 5.9794 | 3.5705 |
| DD[27] | 3.3817 | 7.1984 | 1.0946 |
| DD[29] | 17.4135 | 6.2880 | 1.4398 |

Table 30

| Example 5-1 | | | |
|---|---|---|---|
| Sn | 1 | 10 | 17 |
| KA | -1.4973167E+01 | 5.2415507E-01 | 9.9237482E-01 |
| A4 | 2.0252245E-06 | 1.9241132E-06 | -2.0726054E-07 |
| A6 | -4.7539876E-10 | -5.4126670E-10 | 5.9604628E-10 |
| A8 | -1.3200437E-13 | -9.4388234E-13 | -5.6260838E-13 |
| A10 | 1.8900162E-15 | 6.1966946E-15 | 5.2635686E-16 |
| A12 | -4.0351876E-18 | -1.7781142E-17 | -8.0549434E-19 |
| A14 | 4.5114250E-21 | 2.9985502E-20 | 1.7027902E-21 |
| A16 | -2.8864751E-24 | -3.0646381E-23 | -2.3438756E-24 |
| A18 | 1.0038855E-27 | 1.7575221E-26 | 1.6776145E-27 |
| A20 | -1.4783032E-31 | -4.3393544E-30 | -4.8340211E-31 |

| Sn | 18 | 28 |
|---|---|---|
| KA | -6.6794691E+01 | -3.7529246E-01 |

(continued)

| Sn | 18 | 28 |
|----|----|----|
| A4 | 2.6049445E-06 | -3.4895941E-06 |
| A6 | 7.8947695E-09 | 6.2351465E-10 |
| A8 | -1.8003524E-10 | 2.6733141E-11 |
| A10 | 2.1652994E-12 | -2.8501906E-13 |
| A12 | -1.5793391E-14 | 1.7751569E-15 |
| A14 | 6.6255746E-17 | -6.7804122E-18 |
| A16 | -1.2713196E-19 | 1.5250212E-20 |
| A18 | -1.4929324E-23 | -1.8150131E-23 |
| A20 | 2.9481836E-25 | 8.5444869E-27 |

Example 6

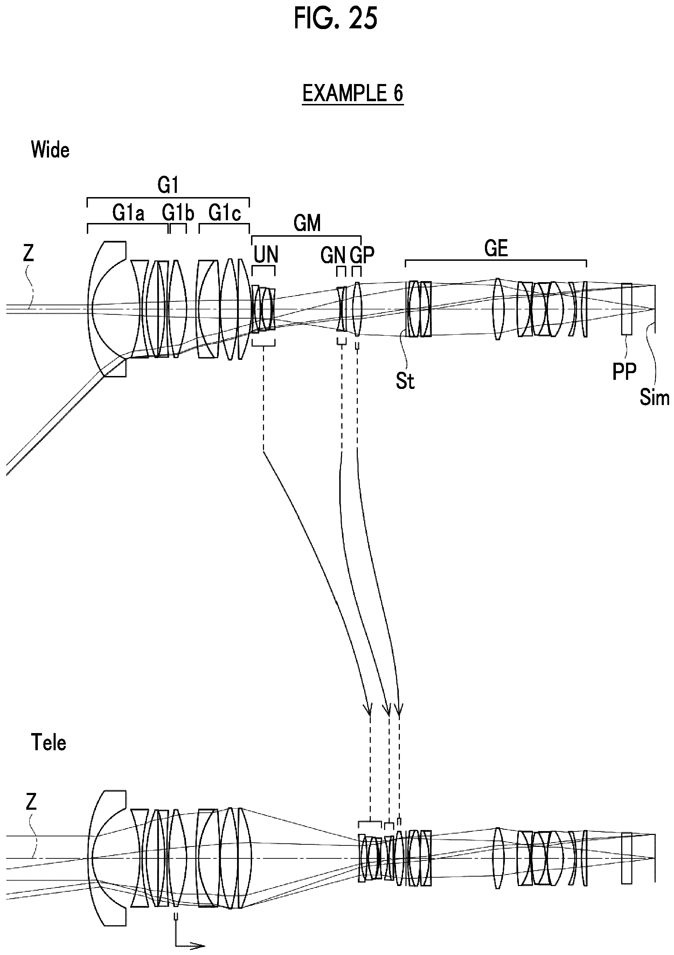

Fig. 25 shows a configuration of a zoom lens according to Example 6 and movement loci thereof. The zoom lens according to Example 6 consists of a first lens group G1 having a positive refractive power, a middle group GM, and a final lens group GE having a positive refractive power in order from an object side to an image side. The middle group GM consists of a negative group UN, an N lens group GN having a negative refractive power, and a P lens group GP having a positive refractive power in order from the object side to the image side. The negative group UN consists of one lens group having a negative refractive power.

During changing magnification from the wide angle end to the telephoto end, the first lens group G1 and the final lens group GE are fixed to the image plane Sim, and the negative group UN, the N lens group GN, and the P lens group GP move along an optical axis Z while changing spacings between adjacent lens groups.

The first lens group G1 consists of a first a partial group G1a having a negative refractive power, a first b partial group G1b having a positive refractive power, and a first c partial group G1c having a positive refractive power in order from the object side to the image side. The focusing group consists of the first b partial group G1b. The first b partial group G1b consists of one lens that is the fifth lens from the object side. During focusing from the infinite distance object to the close distance object, the first a partial group G1a and the first c partial group G1c are fixed to the image plane Sim, and the first b partial group G1b moves toward the image side.

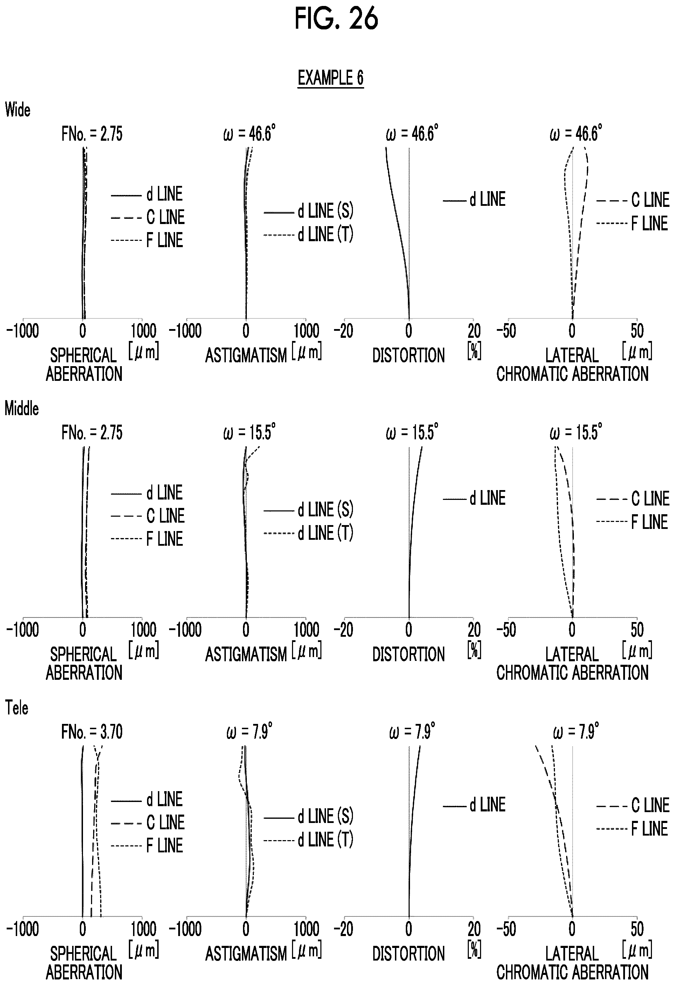

Regarding the zoom lens according to Example 6, Tables 31A and 31B show basic lens data, Table 32 shows specifications and variable surface spacings, Table 33 shows aspherical coefficients, and Fig. 26 shows each of the aberration diagrams.

Table 31A

| Example 6 | | | | | |
|-----------|----|----|----|----|----|
| Sn | R | D | Nd | vd | θg,F |
| *1 | 139.1704 | 2.5500 | 1.80100 | 34.97 | 0.58642 |
| 2 | 33.7302 | 27.1363 | | | |
| 3 | -88.2466 | 1.2500 | 1.51633 | 64.14 | 0.53531 |
| 4 | 119.3390 | 2.3572 | | | |
| 5 | 86.9791 | 6.7435 | 1.89286 | 20.36 | 0.63944 |
| 6 | -2337.2722 | 3.7902 | | | |
| 7 | -117.9014 | 1.2000 | 1.67790 | 55.34 | 0.54726 |
| 8 | 535.9838 | 1.0939 | | | |
| 9 | 136.4451 | 10.0421 | 1.53775 | 74.70 | 0.53936 |
| *10 | -72.6276 | 5.3092 | | | |
| 11 | 252.8044 | 1.5600 | 1.85451 | 25.15 | 0.61031 |

(continued)

| Example 6 | | | | | |
|---|---|---|---|---|---|
| Sn | R | D | Nd | vd | θg,F |
| 12 | 53.1537 | 12.0307 | 1.43700 | 95.10 | 0.53364 |
| 13 | -370.1077 | 0.3006 | | | |
| 14 | 98.8219 | 10.0835 | 1.43700 | 95.10 | 0.53364 |
| 15 | -130.3712 | 0.1208 | | | |
| 16 | 1531.8763 | 7.5967 | 1.69680 | 55.53 | 0.54341 |
| *17 | -82.0029 | DD[17] | | | |
| *18 | -154.7477 | 0.9183 | 1.77250 | 49.62 | 0.55038 |
| 19 | 40.1804 | 3.3180 | | | |
| 20 | -95.1389 | 0.8109 | 1.72916 | 54.54 | 0.54535 |
| 21 | 35.9801 | 5.2634 | 1.73037 | 32.23 | 0.58996 |
| 22 | -57.2431 | 0.7481 | | | |
| 23 | -40.0675 | 0.8005 | 1.60300 | 65.44 | 0.54022 |
| 24 | 117.2516 | DD[24] | | | |
| 25 | -46.6396 | 0.8106 | 1.72916 | 54.54 | 0.54535 |
| 26 | 70.9636 | 2.4498 | 1.80518 | 25.46 | 0.61572 |
| 27 | 1074.6394 | DD[27] | | | |
| *28 | 70.1392 | 5.0554 | 1.77250 | 49.62 | 0.55038 |
| 29 | -77.8250 | DD[29] | | | |

Table 31B

| Example 6 | | | | | |
|---|---|---|---|---|---|
| Sn | R | D | Nd | vd | θg,F |
| 30(St) | ∞ | 1.0009 | | | |
| 31 | 126.0843 | 0.9370 | 1.67300 | 38.26 | 0.57580 |
| 32 | 48.8610 | 6.1430 | 1.67790 | 55.35 | 0.54339 |
| 33 | -96.9693 | 0.1200 | | | |
| 34 | 451.2294 | 4.9080 | 1.55200 | 70.70 | 0.54219 |
| 35 | -47.0054 | 0.9229 | 1.90366 | 31.31 | 0.59481 |
| 36 | 809.5591 | 35.4013 | | | |
| 37 | 90.1048 | 6.3832 | 1.51823 | 58.90 | 0.54567 |
| 38 | -61.9710 | 7.4481 | | | |
| 39 | 210.5191 | 7.2286 | 1.80809 | 22.76 | 0.63073 |
| 40 | -31.1005 | 0.8003 | 1.91082 | 35.25 | 0.58224 |
| 41 | 207.5564 | 0.2526 | | | |
| 42 | 67.8636 | 7.9318 | 1.43700 | 95.10 | 0.53364 |
| 43 | -31.8559 | 0.8009 | 2.00100 | 29.13 | 0.59952 |
| 44 | 77.4776 | 0.1202 | | | |
| 45 | 57.3831 | 9.1760 | 1.48071 | 85.29 | 0.53623 |

(continued)

| Example 6 | | | | | |
|---|---|---|---|---|---|
| Sn | R | D | Nd | vd | θg,F |
| 46 | -31.3986 | 6.4633 | | | |
| 47 | -39.0821 | 0.9231 | 1.88300 | 40.76 | 0.56679 |
| 48 | -66.7468 | 2.9129 | | | |
| 49 | 91.5278 | 2.8950 | 1.84666 | 23.84 | 0.62012 |
| 50 | 745.9052 | 20.0000 | | | |
| 51 | ∞ | 5.7000 | 1.51633 | 64.14 | 0.53531 |
| 52 | ∞ | 13.2593 | | | |

Table 32

| Example 6 | | | |
|---|---|---|---|
| | Wide | Middle | Tele |
| Zr | 1.0 | 3.4 | 6.9 |
| f | 14.52 | 49.55 | 99.92 |
| FNo. | 2.75 | 2.75 | 3.70 |
| 2ω[°] | 93.2 | 31.0 | 15.8 |
| DD[17] | 0.8871 | 46.0357 | 61.2144 |
| DD[24] | 37.5436 | 3.5827 | 4.0925 |
| DD[27] | 3.7954 | 8.8450 | 0.7885 |
| DD[29] | 25.2585 | 9.0213 | 1.3892 |

Table 33

| Example 6 | | | |
|---|---|---|---|
| Sn | 1 | 10 | 17 |
| KA | 1.0000000E+00 | 1.0000000E+00 | 1.0000000E+00 |
| A4 | 1.0191673E-06 | 1.8001838E-06 | -1.0254852E-07 |
| A6 | 4.2472427E-10 | -1.7339310E-09 | 9.0823228E-10 |
| A8 | -1.8076640E-12 | 9.2523878E-12 | -3.4487991E-12 |
| A10 | 4.7497084E-15 | -3.4644775E-14 | 1.0728385E-14 |
| A12 | -7.2516992E-18 | 8.2718712E-17 | -2.2156997E-17 |
| A14 | 6.6542037E-21 | -1.2589716E-19 | 2.9520814E-20 |
| A16 | -3.6229242E-24 | 1.1792650E-22 | -2.4426960E-23 |
| A18 | 1.0801299E-27 | -6.1884423E-26 | 1.1416921E-26 |
| A20 | -1.3585737E-31 | 1.3911408E-29 | -2.3027203E-30 |

| Sn | 18 | 28 |
|---|---|---|
| KA | 1.0000000E+00 | 1.0000000E+00 |
| A4 | 3.5832605E-06 | -3.0963625E-06 |
| A6 | -2.4069667E-09 | -3.7555088E-09 |

(continued)

| Sn | 18 | 28 |
|---|---|---|
| A8 | -3.8246044E-11 | 1.0487734E-10 |
| A10 | 6.9651070E-13 | -1.2697064E-12 |
| A12 | -6.4693431E-15 | 9.7155533E-15 |
| A14 | 3.6998225E-17 | -4.7585264E-17 |
| A16 | -1.2873985E-19 | 1.4431449E-19 |
| A18 | 2.4448683E-22 | -2.4663687E-22 |
| A20 | -1.9149266E-25 | 1.8147947E-25 |

Example 6-1

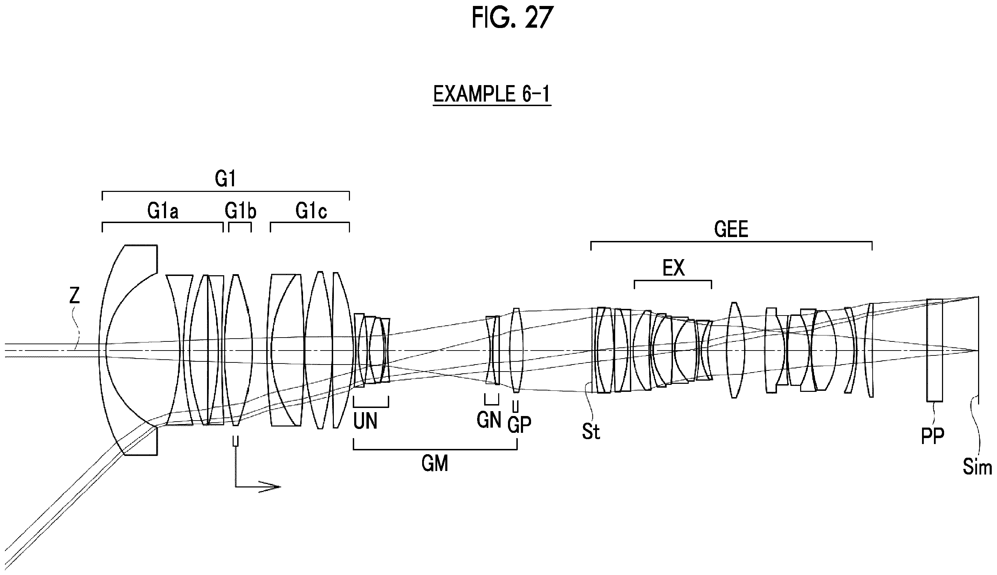

Example 6-1 is an example in which the EX group EX is inserted into the zoom lens according to Example 6. Fig. 27 is a cross-sectional view showing a configuration of the zoom lens according to Example 6-1 and luminous fluxes in the wide angle end state. The zoom lens according to Example 6-1 includes the final lens group GEE in which the EX group EX is inserted into the final lens group GE according to Example 6, instead of the final lens group GE according to Example 6. The other lens groups and the configurations of the groups in Example 6-1 are the same as those of the zoom lens according to Example 6.

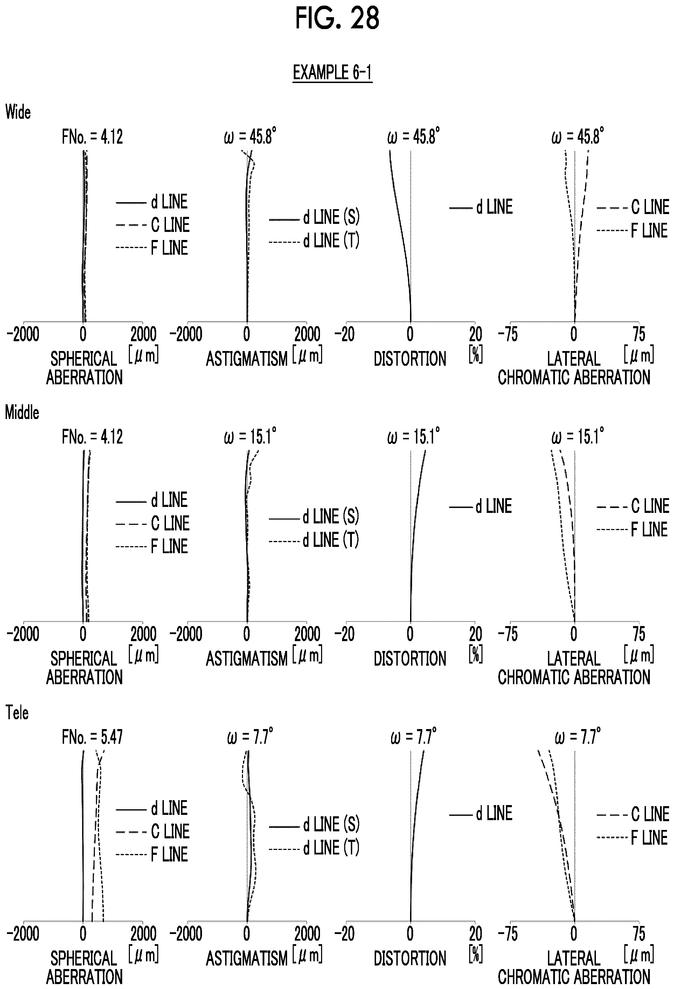

Regarding the zoom lens according to Example 6-1, Tables 34A and 34B show basic lens data, Table 35 shows specifications and variable surface spacings, Table 36 shows aspherical coefficients, and Fig. 28 shows each of the aberration diagrams.

Table 34A

| Example 6-1 | | | | | |
|---|---|---|---|---|---|
| Sn | R | D | Nd | vd | θg,F |
| *1 | 139.1704 | 2.5500 | 1.80100 | 34.97 | 0.58642 |
| 2 | 33.7302 | 27.1363 | | | |
| 3 | -88.2466 | 1.2500 | 1.51633 | 64.14 | 0.53531 |
| 4 | 119.3390 | 2.3572 | | | |
| 5 | 86.9791 | 6.7435 | 1.89286 | 20.36 | 0.63944 |
| 6 | -2337.2722 | 3.7902 | | | |
| 7 | -117.9014 | 1.2000 | 1.67790 | 55.34 | 0.54726 |
| 8 | 535.9838 | 1.0939 | | | |
| 9 | 136.4451 | 10.0421 | 1.53775 | 74.70 | 0.53936 |
| *10 | -72.6276 | 5.3092 | | | |
| 11 | 252.8044 | 1.5600 | 1.85451 | 25.15 | 0.61031 |
| 12 | 53.1537 | 12.0307 | 1.43700 | 95.10 | 0.53364 |
| 13 | -370.1077 | 0.3006 | | | |
| 14 | 98.8219 | 10.0835 | 1.43700 | 95.10 | 0.53364 |
| 15 | -130.3712 | 0.1208 | | | |
| 16 | 1531.8763 | 7.5967 | 1.69680 | 55.53 | 0.54341 |
| *17 | -82.0029 | DD[17] | | | |
| *18 | -154.7477 | 0.9183 | 1.77250 | 49.62 | 0.55038 |
| 19 | 40.1804 | 3.3180 | | | |
| 20 | -95.1389 | 0.8109 | 1.72916 | 54.54 | 0.54535 |

(continued)

| Example 6-1 | | | | | |
|---|---|---|---|---|---|
| Sn | R | D | Nd | vd | θg,F |
| 21 | 35.9801 | 5.2634 | 1.73037 | 32.23 | 0.58996 |
| 22 | -57.2431 | 0.7481 | | | |
| 23 | -40.0675 | 0.8005 | 1.60300 | 65.44 | 0.54022 |
| 24 | 117.2516 | DD[24] | | | |
| 25 | -46.6396 | 0.8106 | 1.72916 | 54.54 | 0.54535 |
| 26 | 70.9636 | 2.4498 | 1.80518 | 25.46 | 0.61572 |
| 27 | 1074.6394 | DD[27] | | | |
| *28 | 70.1392 | 5.0554 | 1.77250 | 49.62 | 0.55038 |
| 29 | -77.8250 | DD[29] | | | |

Table 34B

| Example 6-1 | | | | | |
|---|---|---|---|---|---|
| Sn | R | D | Nd | vd | θg,F |
| 30(St) | ∞ | 1.0009 | | | |
| 31 | 126.0843 | 0.9370 | 1.67300 | 38.26 | 0.57580 |
| 32 | 48.8610 | 6.1430 | 1.67790 | 55.35 | 0.54339 |
| 33 | -96.1693 | 0.1200 | | | |
| 34 | 451.2294 | 4.9080 | 1.55200 | 70.70 | 0.54219 |
| 35 | -47.0054 | 0.9229 | 1.90366 | 31.31 | 0.59481 |
| 36 | 809.5591 | 0.9694 | | | |
| 37 | 28.7540 | 6.0409 | 1.65670 | 62.28 | 0.54205 |
| 38 | 184.2593 | 0.5530 | | | |
| 39 | 43.5461 | 0.8316 | 2.00100 | 29.13 | 0.59952 |
| 40 | 21.3284 | 6.9988 | 1.60562 | 43.71 | 0.57214 |
| 41 | -184.1688 | 0.1200 | | | |
| 42 | -163.3462 | 0.8004 | 1.95375 | 32.32 | 0.59015 |
| 43 | 16.6387 | 8.0154 | 1.75520 | 27.53 | 0.60987 |
| 44 | -76.3539 | 0.9831 | | | |
| 45 | -66.5376 | 0.8003 | 1.72916 | 54.54 | 0.54535 |
| 46 | 24.0033 | 2.2600 | 1.72825 | 28.32 | 0.60755 |
| 47 | 34.3455 | 7.0285 | | | |
| 48 | 90.1048 | 6.3832 | 1.51823 | 58.90 | 0.54567 |
| 49 | -61.9710 | 7.4481 | | | |
| 50 | 210.5191 | 7.2286 | 1.80809 | 22.76 | 0.63073 |
| 51 | -31.1005 | 0.8003 | 1.91082 | 35.25 | 0.58224 |
| 52 | 207.5564 | 0.2526 | | | |
| 53 | 67.8636 | 7.9318 | 1.43700 | 95.10 | 0.53364 |
| 54 | -31.8559 | 0.8009 | 2.00100 | 29.13 | 0.59952 |

(continued)

| Example 6-1 | | | | | |
|---|---|---|---|---|---|
| Sn | R | D | Nd | vd | θg,F |
| 55 | 77.4776 | 0.1202 | | | |
| 56 | 57.3831 | 9.1760 | 1.48071 | 85.29 | 0.53623 |
| 57 | -31.3986 | 6.4633 | | | |
| 58 | -39.0821 | 0.9231 | 1.88300 | 40.76 | 0.56679 |
| 59 | -66.7468 | 2.9129 | | | |
| 60 | 91.5278 | 2.8950 | 1.84666 | 23.84 | 0.62012 |
| 61 | 745.9052 | 20.0000 | | | |
| 62 | ∞ | 5.7000 | 1.51633 | 64.14 | 0.53531 |
| 63 | ∞ | 13.2251 | | | |

Table 35

| Example 6-1 | | | |
|---|---|---|---|
| | Wide | Middle | Tele |
| Zr | 1.0 | 3.4 | 6.9 |
| f | 21.49 | 73.31 | 147.83 |
| FNo. | 4.12 | 4.12 | 5.47 |
| 2ω[°] | 91.6 | 30.2 | 15.4 |
| DD[17] | 0.8871 | 46.0357 | 61.2144 |
| DD[24] | 37.5436 | 3.5827 | 4.0925 |
| DD[27] | 3.7954 | 8.8450 | 0.7885 |
| DD[29] | 25.2585 | 9.0213 | 1.3892 |

Table 36

| Example 6-1 | | | |
|---|---|---|---|
| Sn | 1 | 10 | 17 |
| KA | 1.0000000E+00 | 1.0000000E+00 | 1.0000000E+00 |
| A4 | 1.0191673E-06 | 1.8001838E-06 | -1.0254852E-07 |
| A6 | 4.2472427E-10 | -1.7339310E-09 | 9.0823228E-10 |
| A8 | -1.8076640E-12 | 9.2523878E-12 | -3.4487991E-12 |
| A10 | 4.7497084E-15 | -3.4644775E-14 | 1.0728385E-14 |
| A12 | -7.2516992E-18 | 8.2718712E-17 | -2.2156997E-17 |
| A14 | 6.6542037E-21 | -1.2589716E-19 | 2.9520814E-20 |
| A16 | -3.6229242E-24 | 1.1792650E-22 | -2.4426960E-23 |
| A18 | 1.0801299E-27 | -6.1884423E-26 | 1.1416921E-26 |
| A20 | -1.3585737E-31 | 1.3911408E-29 | -2.3027203E-30 |

| Sn | 18 | 28 |
|---|---|---|
| KA | 1.0000000E+00 | 1.0000000E+00 |

(continued)

| Sn | 18 | 28 |
|---|---|---|
| A4 | 3.5832605E-06 | -3.0963625E-06 |
| A6 | -2.4069667E-09 | -3.7555088E-09 |
| A8 | -3.8246044E-11 | 1.0487734E-10 |
| A10 | 6.9651070E-13 | -1.2697064E-12 |
| A12 | -6.4693431E-15 | 9.7155533E-15 |
| A14 | 3.6998225E-17 | -4.7585264E-17 |
| A16 | -1.2873985E-19 | 1.4431449E-19 |
| A18 | 2.4448683E-22 | -2.4663687E-22 |
| A20 | -1.9149266E-25 | 1.8147947E-25 |

Example 7

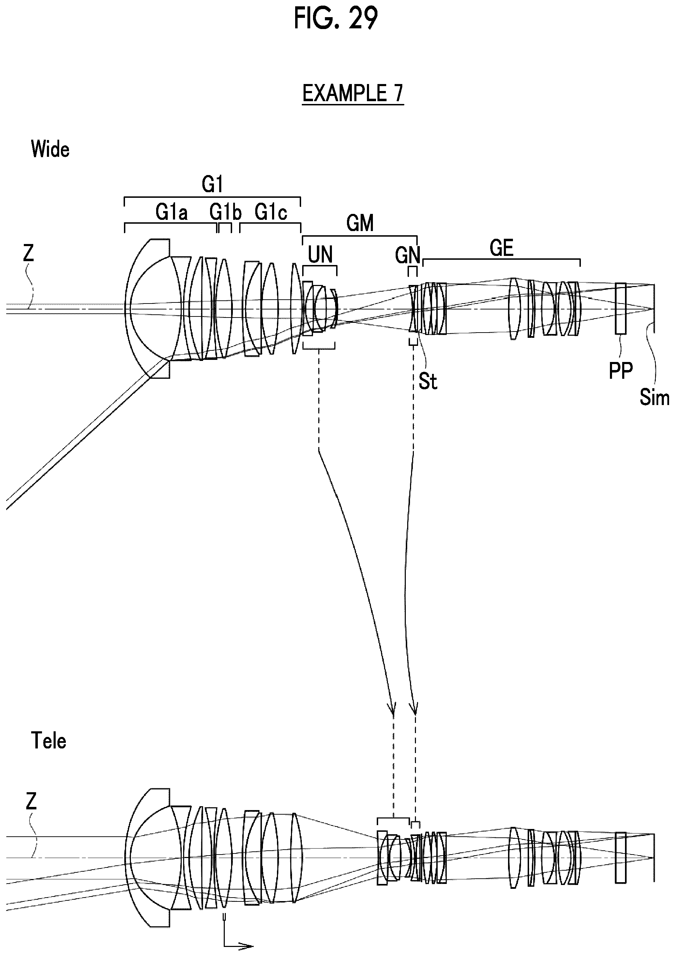

Fig. 29 shows a configuration of a zoom lens according to Example 7 and movement loci thereof. The zoom lens according to Example 7 consists of a first lens group G1 having a positive refractive power, a middle group GM, and a final lens group GE having a positive refractive power in order from an object side to an image side. The middle group GM consists of a negative group UN and an N lens group GN having a negative refractive power in order from the object side to the image side. The negative group UN consists of one lens group having a negative refractive power.

During changing magnification from the wide angle end to the telephoto end, the first lens group G1 and the final lens group GE are fixed to the image plane Sim, and the negative group UN and the N lens group GN move along an optical axis Z while changing spacings between adjacent lens groups.

The first lens group G1 consists of a first a partial group G1a having a negative refractive power, a first b partial group G1b having a positive refractive power, and a first c partial group G1c having a positive refractive power in order from the object side to the image side. The focusing group consists of the first b partial group G1b. The first b partial group G1b consists of one lens that is the fifth lens from the object side. During focusing from the infinite distance object to the close distance object, the first a partial group G1a and the first c partial group G1c are fixed to the image plane Sim, and the first b partial group G1b moves toward the image side.

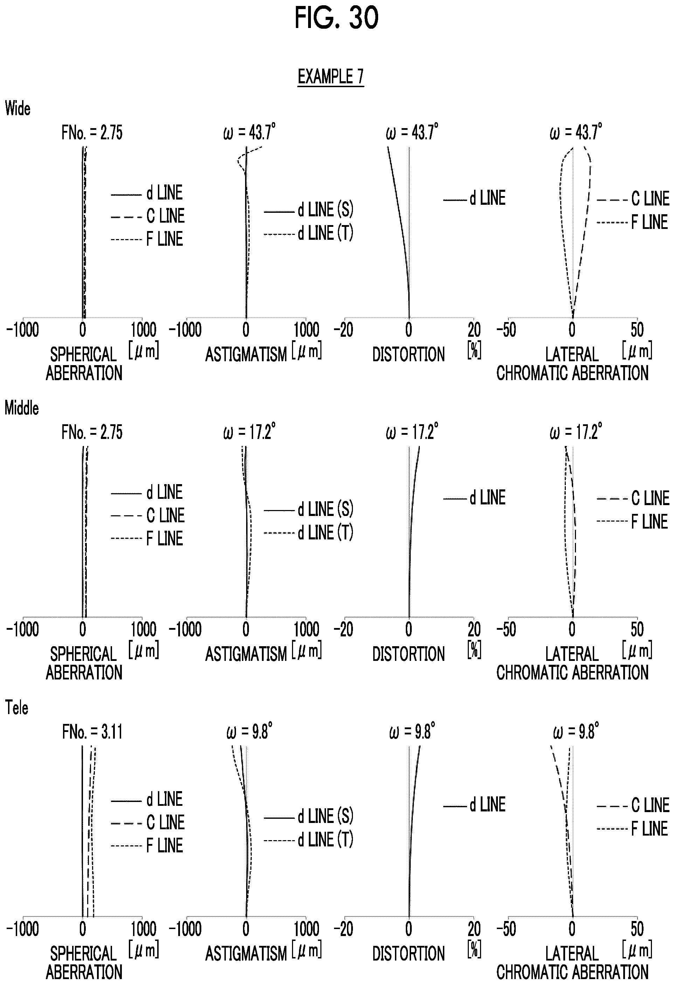

Regarding the zoom lens according to Example 7, Tables 37A and 37B show basic lens data, Table 38 shows specifications and variable surface spacings, Table 39 shows aspherical coefficients, and Fig. 30 shows each of the aberration diagrams.

Table 37A

| Example 7 | | | | | |
|---|---|---|---|---|---|
| Sn | R | D | Nd | vd | θg,F |
| *1 | 85.9515 | 3.0000 | 1.83441 | 37.28 | 0.57732 |
| 2 | 33.4864 | 29.0231 | | | |
| 3 | -88.2466 | 1.2486 | 1.48749 | 70.24 | 0.53007 |
| 4 | 112.9115 | 3.2577 | | | |
| 5 | 79.5315 | 7.1560 | 1.89286 | 20.36 | 0.63944 |
| 6 | 1233.4109 | 5.7077 | | | |
| 7 | -127.2012 | 1.2158 | 1.65253 | 39.48 | 0.57318 |
| 8 | 290.6327 | 1.0168 | | | |
| 9 | 108.2559 | 9.2008 | 1.55032 | 75.50 | 0.54001 |
| *10 | -97.4966 | 6.0310 | | | |
| 11 | 263.2843 | 1.7159 | 1.85478 | 24.80 | 0.61232 |
| 12 | 52.7628 | 8.8452 | 1.43875 | 94.66 | 0.53402 |

(continued)

| Example 7 | | | | | |
|---|---|---|---|---|---|
| Sn | R | D | Nd | vd | θg,F |
| 13 | 1981.1310 | 0.3006 | | | |
| 14 | 76.0224 | 9.4848 | 1.43875 | 94.66 | 0.53402 |
| 15 | -128.3414 | 7.1193 | | | |
| 16 | 277.2455 | 6.5272 | 1.72916 | 54.68 | 0.54451 |
| *17 | -86.9432 | DD[17] | | | |
| *18 | -128.8437 | 0.9782 | 1.72916 | 54.68 | 0.54451 |
| 19 | 27.0579 | 4.4547 | | | |
| 20 | -391.7811 | 0.8509 | 1.67003 | 47.14 | 0.56262 |
| 21 | 23.0107 | 6.3993 | 1.77047 | 29.74 | 0.59514 |
| 22 | -120.3047 | 5.6623 | | | |
| 23 | -23.5164 | 0.5004 | 1.59410 | 60.47 | 0.55516 |
| 24 | -54.8423 | DD[24] | | | |
| 25 | -46.9044 | 0.8411 | 1.71700 | 47.93 | 0.56062 |
| 26 | 93.9733 | 2.0940 | 1.80809 | 22.76 | 0.63073 |
| 27 | -887.5121 | DD[27] | | | |

Table 37B

| Example 7 | | | | | |
|---|---|---|---|---|---|
| Sn | R | D | Nd | vd | θg,F |
| 28(St) | ∞ | 1.0000 | | | |
| *29 | 68.9382 | 4.4231 | 1.72916 | 54.68 | 0.54451 |
| 30 | -72.4156 | 0.1221 | | | |
| 31 | 161.3231 | 3.2306 | 1.63854 | 55.38 | 0.54858 |
| 32 | -79.1405 | 0.1200 | | | |
| 33 | -2652.3227 | 4.0780 | 1.59522 | 67.73 | 0.54426 |
| 34 | -40.3708 | 0.9185 | 1.91650 | 31.60 | 0.59117 |
| 35 | 1290.0880 | 35.7359 | | | |
| 36 | 119.5194 | 6.7235 | 1.57135 | 52.95 | 0.55544 |
| 37 | -57.4818 | 4.4470 | | | |
| 38 | ∞ | 2.5476 | 1.80809 | 22.76 | 0.63073 |
| 39 | -93.8462 | 1.0254 | 1.95375 | 32.32 | 0.59056 |
| 40 | -300.9112 | 3.9523 | | | |
| 41 | 89.8053 | 7.2250 | 1.43875 | 94.66 | 0.53402 |
| 42 | -31.0847 | 0.8840 | 2.00100 | 29.14 | 0.59974 |
| 43 | 313.1012 | 1.3360 | | | |
| 44 | 67.1504 | 7.2064 | 1.43875 | 94.66 | 0.53402 |
| 45 | -35.4551 | 1.6570 | | | |
| 46 | -39.6414 | 0.8951 | 1.85150 | 40.78 | 0.56958 |

(continued)

| Example 7 | | | | | |
|---|---|---|---|---|---|
| Sn | R | D | Nd | vd | θg,F |
| 47 | 1018.2730 | 2.9973 | 1.80809 | 22.76 | 0.63073 |
| 48 | -70.5158 | 20.0000 | | | |
| 49 | ∞ | 5.7000 | 1.51633 | 64.14 | 0.53531 |
| 50 | ∞ | 16.2546 | | | |

Table 38

| Example 7 | | | |
|---|---|---|---|
| | Wide | Middle | Tele |
| Zr | 1.0 | 2.8 | 5.0 |
| f | 16.01 | 44.59 | 80.06 |
| FNo. | 2.75 | 2.75 | 3.11 |
| 2ω[°] | 87.4 | 34.4 | 19.6 |
| DD[17] | 0.9347 | 31.8719 | 43.0554 |
| DD[24] | 42.7347 | 7.1995 | 1.8392 |
| DD[27] | 2.1893 | 6.7873 | 0.9641 |

Table 39

| Example 7 | | | |
|---|---|---|---|
| Sn | 1 | 10 | 17 |
| KA | -1.5422676E+00 | 1.8497137E+00 | -1.3738300E+00 |
| A4 | 1.3746427E-06 | 1.7627839E-06 | -9.0323953E-08 |
| A6 | -1.5758335E-11 | -1.0348742E-09 | 7.6698076E-10 |
| A8 | -1.0233036E-13 | 3.3503808E-12 | -2.3116892E-12 |
| A10 | 1.3069050E-15 | -1.1013723E-14 | 7.5617362E-15 |
| A12 | -3.0846453E-18 | 2.4207255E-17 | -1.7954107E-17 |
| A14 | 3.6295675E-21 | -3.4577842E-20 | 2.8613568E-20 |
| A16 | -2.3203688E-24 | 3.0561706E-23 | -2.8979675E-23 |
| A18 | 7.7160183E-28 | -1.5129527E-26 | 1.6872924E-26 |
| A20 | -1.0463892E-31 | 3.1983908E-30 | -4.2983474E-30 |

| Sn | 18 | 29 |
|---|---|---|
| KA | -5.5742232E-02 | 8.0670121E-01 |
| A4 | 8.2973909E-06 | -3.1471120E-06 |
| A6 | -1.8166850E-09 | 2.8762484E-09 |
| A8 | -7.9899406E-11 | -4.6098731E-11 |
| A10 | 1.5550249E-12 | 7.7327421E-13 |
| A12 | -1.6808035E-14 | -7.6312528E-15 |
| A14 | 1.0733108E-16 | 4.5011094E-17 |

(continued)

| Sn | 18 | 29 |
|---|---|---|
| A16 | -3.9937670E-19 | -1.5651699E-19 |
| A18 | 8.0686554E-22 | 2.9582858E-22 |
| A20 | -6.8845854E-25 | -2.3429637E-25 |

Example 7-1

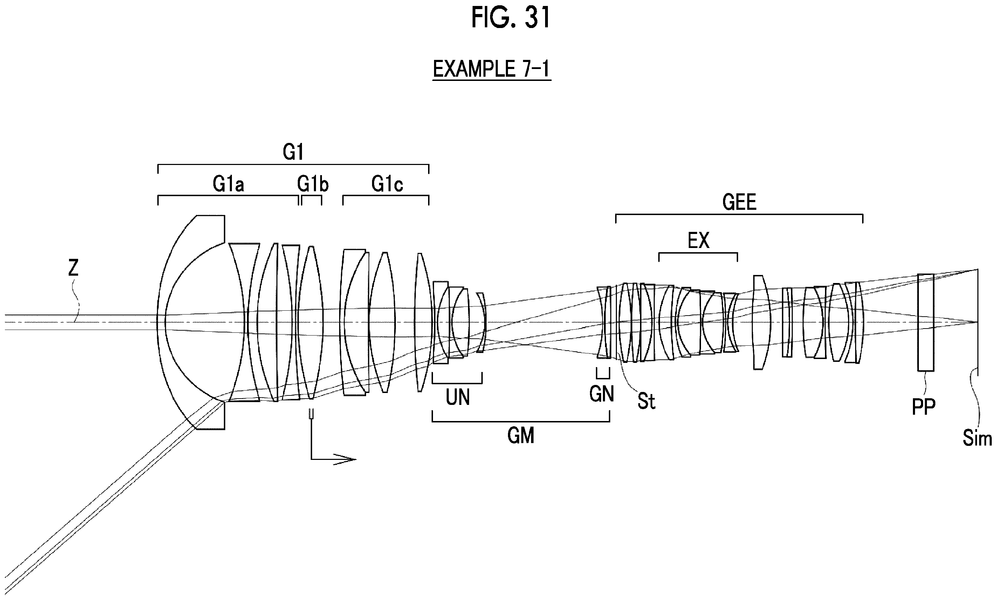

Example 7-1 is an example in which the EX group EX is inserted into the zoom lens according to Example 7. Fig. 31 is a cross-sectional view showing a configuration of the zoom lens according to Example 7-1 and luminous fluxes in the wide angle end state. The zoom lens according to Example 7-1 includes the final lens group GEE in which the EX group EX is inserted into the final lens group GE according to Example 7, instead of the final lens group GE according to Example 7. The other lens groups and the configurations of the groups in Example 7-1 are the same as those of the zoom lens according to Example 7.

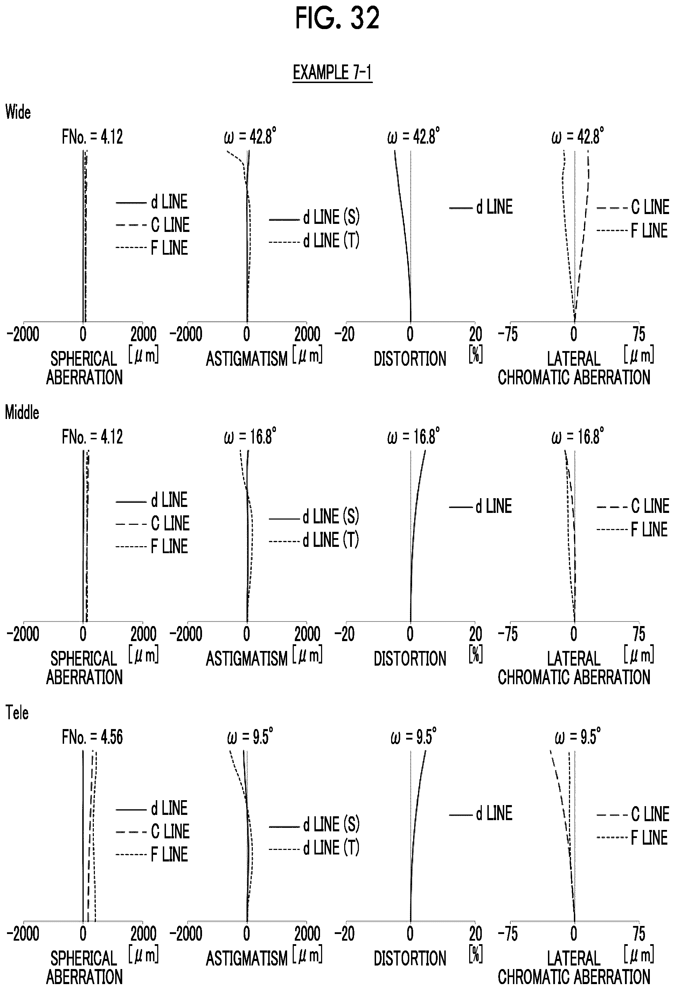

Regarding the zoom lens according to Example 7-1, Tables 40A and 40B show basic lens data, Table 41 shows specifications and variable surface spacings, Table 42 shows aspherical coefficients, and Fig. 32 shows each of the aberration diagrams.

Table 40A

| Example 7-1 | | | | | |
|---|---|---|---|---|---|
| Sn | R | D | Nd | vd | θg,F |
| *1 | 85.9515 | 3.0000 | 1.83441 | 37.28 | 0.57732 |
| 2 | 33.4864 | 29.0231 | | | |
| 3 | -88.2466 | 1.2486 | 1.48749 | 70.24 | 0.53007 |
| 4 | 112.9115 | 3.2577 | | | |
| 5 | 79.5315 | 7.1560 | 1.89286 | 20.36 | 0.63944 |
| 6 | 1233.4109 | 5.7077 | | | |
| 7 | -127.2012 | 1.2158 | 1.65253 | 39.48 | 0.57318 |
| 8 | 290.6327 | 1.0168 | | | |
| 9 | 108.2559 | 9.2008 | 1.55032 | 75.50 | 0.54001 |
| *10 | -97.4966 | 6.0310 | | | |
| 11 | 263.2843 | 1.7159 | 1.85478 | 24.80 | 0.61232 |
| 12 | 52.7628 | 8.8452 | 1.43875 | 94.66 | 0.53402 |
| 13 | 1981.1310 | 0.3006 | | | |
| 14 | 76.0224 | 9.4848 | 1.43875 | 94.66 | 0.53402 |
| 15 | -128.3414 | 7.1193 | | | |
| 16 | 277.2455 | 6.5272 | 1.72916 | 54.68 | 0.54451 |
| *17 | -86.9432 | DD[17] | | | |
| *18 | -128.8437 | 0.9782 | 1.72916 | 54.68 | 0.54451 |
| 19 | 27.0579 | 4.4547 | | | |
| 20 | -391.7811 | 0.8509 | 1.67003 | 47.14 | 0.56262 |
| 21 | 23.0107 | 6.3993 | 1.77047 | 29.74 | 0.59514 |
| 22 | -120.3047 | 5.6623 | | | |
| 23 | -23.5164 | 0.5004 | 1.59410 | 60.47 | 0.55516 |
| 24 | -54.8423 | DD[24] | | | |

(continued)

| Example 7-1 | | | | | |
|---|---|---|---|---|---|
| Sn | R | D | Nd | vd | θg,F |
| 25 | -46.9044 | 0.8411 | 1.71700 | 47.93 | 0.56062 |
| 26 | 93.9733 | 2.0940 | 1.80809 | 22.76 | 0.63073 |
| 27 | -887.5121 | DD[27] | | | |

Table 40B

| Example 7-1 | | | | | |
|---|---|---|---|---|---|
| Sn | R | D | Nd | vd | θg,F |
| 28(St) | ∞ | 1.0000 | | | |
| *29 | 68.9382 | 4.4231 | 1.72916 | 54.68 | 0.54451 |
| 30 | -72.4156 | 0.1221 | | | |
| 31 | 161.3231 | 3.2306 | 1.63854 | 55.38 | 0.54858 |
| 32 | -79.1405 | 0.1200 | | | |
| 33 | -2652.3227 | 4.0780 | 1.59522 | 67.73 | 0.54426 |
| 34 | -40.3708 | 0.9185 | 1.91650 | 31.60 | 0.59117 |
| 35 | 1290.0880 | 1.7393 | | | |
| 36 | 29.7284 | 4.5024 | 1.63246 | 63.77 | 0.54215 |
| 37 | 122.3167 | 1.4395 | | | |
| 38 | 38.0426 | 1.0036 | 2.05090 | 26.94 | 0.60519 |
| 39 | 19.8731 | 8.2333 | 1.58144 | 40.89 | 0.57680 |
| 40 | -221.1174 | 0.0610 | | | |
| 41 | -241.3164 | 0.8066 | 1.83400 | 37.21 | 0.58082 |
| 42 | 18.0176 | 7.4990 | 1.69895 | 30.05 | 0.60282 |
| 43 | -81.5797 | 0.8932 | | | |
| 44 | -92.7696 | 0.8119 | 1.76385 | 48.49 | 0.55898 |
| 45 | 23.5363 | 1.7201 | 1.76182 | 26.52 | 0.61361 |
| 46 | 31.4657 | 7.0260 | | | |
| 47 | 119.5194 | 6.7235 | 1.57135 | 52.95 | 0.55544 |
| 48 | -57.4818 | 4.4470 | | | |
| 49 | ∞ | 2.5476 | 1.80809 | 22.76 | 0.63073 |
| 50 | -93.8462 | 1.0254 | 1.95375 | 32.32 | 0.59056 |
| 51 | -300.9112 | 3.9523 | | | |
| 52 | 89.8053 | 7.2250 | 1.43875 | 94.66 | 0.53402 |
| 53 | -31.0847 | 0.8840 | 2.00100 | 29.14 | 0.59974 |
| 54 | 313.1012 | 1.3360 | | | |
| 55 | 67.1504 | 7.2064 | 1.43875 | 94.66 | 0.53402 |
| 56 | -35.4551 | 1.6570 | | | |
| 57 | -39.6414 | 0.8951 | 1.85150 | 40.78 | 0.56958 |
| 58 | 1018.2730 | 2.9973 | 1.80809 | 22.76 | 0.63073 |

(continued)

| Example 7-1 | | | | | |
|---|---|---|---|---|---|
| Sn | R | D | Nd | vd | θg,F |
| 59 | -70.5158 | 20.0000 | | | |
| 60 | ∞ | 5.7000 | 1.51633 | 64.14 | 0.53531 |
| 61 | ∞ | 16.2294 | | | |

Table 41

| Example 7-1 | | | |
|---|---|---|---|
| | Wide | Middle | Tele |
| Zr | 1.0 | 2.8 | 5.0 |
| f | 23.51 | 65.47 | 117.55 |
| FNo. | 4.12 | 4.12 | 4.56 |
| 2ω[°] | 85.6 | 33.6 | 19.0 |
| DD[17] | 0.9347 | 31.8719 | 43.0554 |
| DD[24] | 42.7347 | 7.1995 | 1.8392 |
| DD[27] | 2.1893 | 6.7873 | 0.9641 |

Table 42

| Example 7-1 | | | |
|---|---|---|---|
| Sn | 1 | 10 | 17 |
| KA | -1.5422676E+00 | 1.8497137E+00 | -1.3738300E+00 |
| A4 | 1.3746427E-06 | 1.7627839E-06 | -9.0323953E-08 |
| A6 | -1.5758335E-11 | -1.0348742E-09 | 7.6698076E-10 |
| A8 | -1.0233036E-13 | 3.3503808E-12 | -2.3116892E-12 |
| A10 | 1.3069050E-15 | -1.1013723E-14 | 7.5617362E-15 |
| A12 | -3.0846453E-18 | 2.4207255E-17 | -1.7954107E-17 |
| A14 | 3.6295675E-21 | -3.4577842E-20 | 2.8613568E-20 |
| A16 | -2.3203688E-24 | 3.0561706E-23 | -2.8979675E-23 |
| A18 | 7.7160183E-28 | -1.5129527E-26 | 1.6872924E-26 |
| A20 | -1.0463892E-31 | 3.1983908E-30 | -4.2983474E-30 |

| Sn | 18 | 29 |
|---|---|---|
| KA | -5.5742232E-02 | 8.0670121E-01 |
| A4 | 8.2973909E-06 | -3.1471120E-06 |
| A6 | -1.8166850E-09 | 2.8762484E-09 |
| A8 | -7.9899406E-11 | -4.6098731E-11 |
| A10 | 1.5550249E-12 | 7.7327421E-13 |
| A12 | -1.6808035E-14 | -7.6312528E-15 |
| A14 | 1.0733108E-16 | 4.5011094E-17 |
| A16 | -3.9937670E-19 | -1.5651699E-19 |

(continued)

| Sn | 18 | 29 |
|---|---|---|
| A18 | 8.0686554E-22 | 2.9582858E-22 |
| A20 | -6.8845854E-25 | -2.3429637E-25 |

Example 8

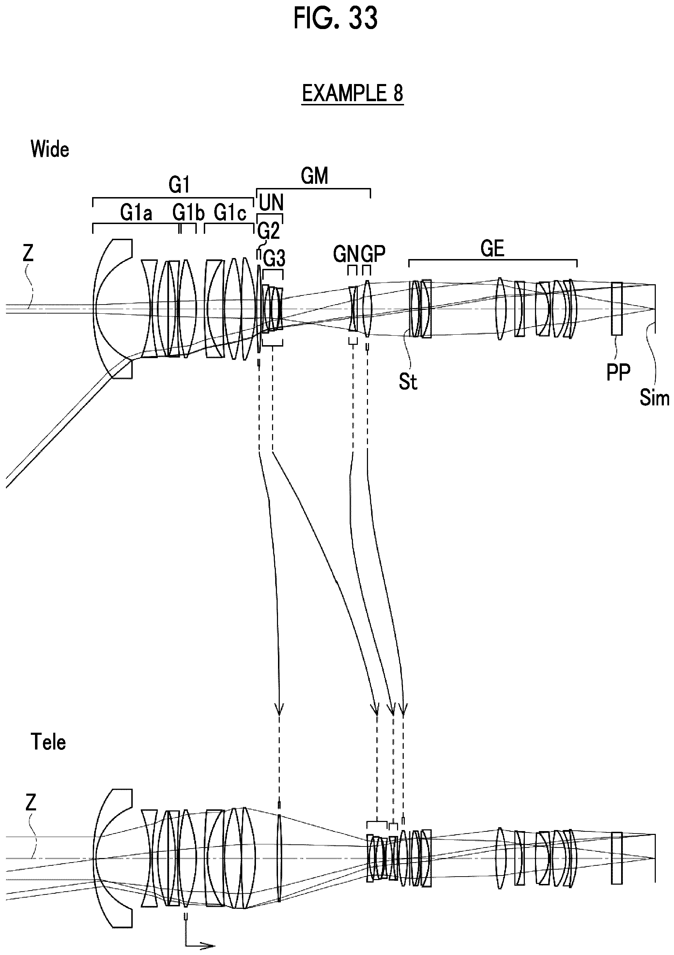

Fig. 33 shows a configuration of a zoom lens according to Example 8 and movement loci thereof. The zoom lens according to Example 8 consists of a first lens group G1 having a positive refractive power, a middle group GM, and a final lens group GE having a positive refractive power in order from an object side to an image side. The middle group GM consists of a negative group UN having a negative refractive power as a whole, an N lens group GN having a negative refractive power, and a P lens group GP having a positive refractive power in order from the object side to the image side. The negative group UN consists of a second lens group G2 having a positive refractive power and a third lens group G3 having a negative refractive power in order from the object side to the image side.

During changing magnification from the wide angle end to the telephoto end, the first lens group G1 and the final lens group GE are fixed to the image plane Sim, and the second lens group G2, the third lens group G3, the negative group UN, the N lens group GN, and the P lens group GP move along an optical axis Z while changing spacings between adjacent lens groups.

The first lens group G1 consists of a first a partial group G1a having a negative refractive power, a first b partial group G1b having a positive refractive power, and a first c partial group G1c having a positive refractive power in order from the object side to the image side. The focusing group consists of the first b partial group G1b. The first b partial group G1b consists of one lens that is the fifth lens from the object side. During focusing from the infinite distance object to the close distance object, the first a partial group G1a and the first c partial group G1c are fixed to the image plane Sim, and the first b partial group G1b moves toward the image side.

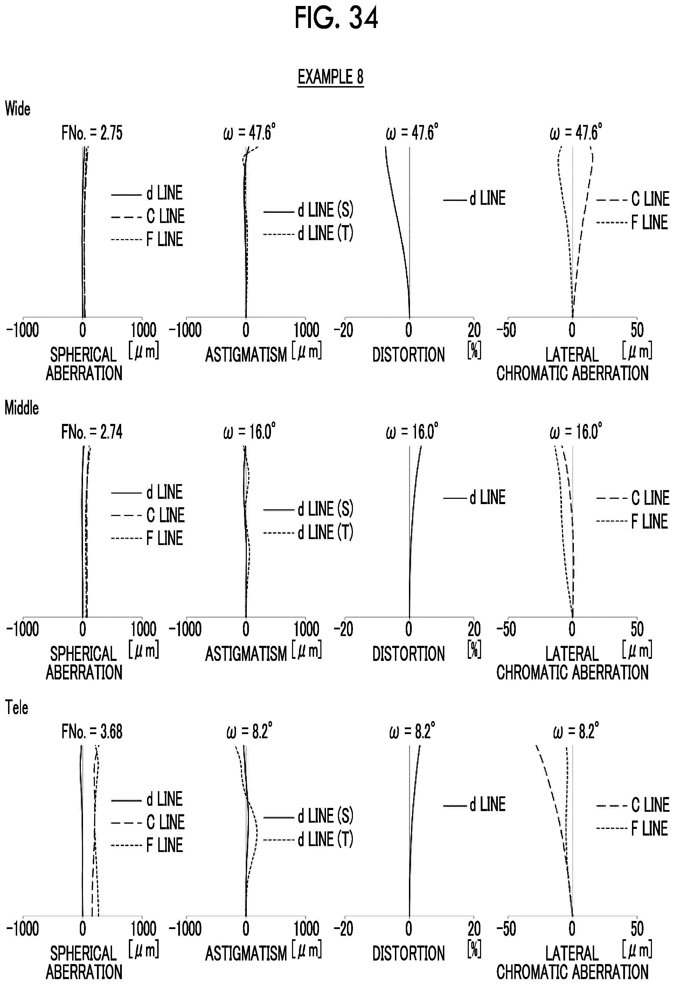

Regarding the zoom lens according to Example 8, Tables 43A and 43B show basic lens data, Table 44 shows specifications and variable surface spacings, Table 45 shows aspherical coefficients, and Fig. 34 shows each of the aberration diagrams.

Table 43A

| Example 8 | | | | | |
|---|---|---|---|---|---|
| Sn | R | D | Nd | vd | θg,F |
| *1 | 120.8422 | 1.5711 | 1.83441 | 37.28 | 0.57732 |
| 2 | 33.7772 | 30.8705 | | | |
| 3 | -89.1379 | 1.1593 | 1.51860 | 69.89 | 0.53184 |
| 4 | 149.3277 | 3.1773 | | | |
| 5 | 87.7079 | 5.9846 | 1.89286 | 20.36 | 0.63944 |
| 6 | ∞ | 4.0597 | | | |
| 7 | -116.7329 | 1.1422 | 1.74400 | 44.79 | 0.56560 |
| 8 | 392.7371 | 0.8969 | | | |
| 9 | 136.4430 | 9.8933 | 1.53775 | 74.70 | 0.53936 |
| *10 | -70.8885 | 4.5966 | | | |
| 11 | 336.3778 | 1.7207 | 1.85451 | 25.15 | 0.61031 |
| 12 | 55.3762 | 8.8280 | 1.43875 | 94.66 | 0.53402 |
| 13 | 580.7668 | 0.9083 | | | |
| 14 | 99.6641 | 9.5020 | 1.43875 | 94.66 | 0.53402 |
| 15 | -134.3340 | 0.1210 | | | |
| 16 | 396.1249 | 7.9108 | 1.69680 | 55.53 | 0.54341 |
| *17 | -86.4971 | DD[17] | | | |

(continued)

| Example 8 | | | | | |
|---|---|---|---|---|---|
| Sn | R | D | Nd | vd | θg,F |
| 18 | 465.9621 | 2.4174 | 1.48749 | 70.24 | 0.53007 |
| 19 | -447.2455 | DD[19] | | | |
| *20 | -165.8040 | 0.8444 | 1.77250 | 49.60 | 0.55212 |
| 21 | 41.6928 | 3.0713 | | | |
| 22 | -109.1789 | 0.8108 | 1.72916 | 54.68 | 0.54451 |
| 23 | 52.0658 | 4.1618 | 1.78880 | 28.43 | 0.60092 |
| 24 | -54.7222 | 0.7890 | | | |
| 25 | -38.4949 | 0.5000 | 1.69680 | 55.53 | 0.54341 |
| 26 | 90.0948 | DD[26] | | | |
| 27 | -46.0692 | 0.8101 | 1.75500 | 52.32 | 0.54757 |
| 28 | 73.0308 | 2.1416 | 1.80518 | 25.42 | 0.61616 |
| 29 | ∞ | DD[29] | | | |
| *30 | 64.5347 | 4.9192 | 1.75500 | 52.32 | 0.54757 |
| 31 | -78.0894 | DD[31] | | | |

Table 43B

| Example 8 | | | | | |
|---|---|---|---|---|---|
| Sn | R | D | Nd | vd | θg,F |
| 32(St) | ∞ | 1.0004 | | | |
| 33 | 131.8706 | 4.4241 | 1.65160 | 58.54 | 0.53901 |
| 34 | -58.5368 | 0.9992 | 1.61772 | 49.81 | 0.56035 |
| 35 | -78.9419 | 0.1248 | | | |
| 36 | ∞ | 4.6035 | 1.59522 | 67.73 | 0.54426 |
| 37 | -40.5049 | 0.9788 | 1.91650 | 31.60 | 0.59117 |
| 38 | ∞ | 36.9014 | | | |
| 39 | 101.3309 | 5.8513 | 1.57135 | 52.95 | 0.55544 |
| 40 | -58.7038 | 5.0404 | | | |
| 41 | ∞ | 4.0124 | 1.80809 | 22.76 | 0.63073 |
| 42 | -47.7221 | 1.1999 | 1.95375 | 32.32 | 0.59056 |
| 43 | 542.0212 | 6.5359 | | | |
| 44 | 195.3637 | 7.5401 | 1.43875 | 94.66 | 0.53402 |
| 45 | -24.6287 | 0.8939 | 2.00100 | 29.14 | 0.59974 |
| 46 | -139.9530 | 1.1599 | | | |
| 47 | 98.4716 | 7.6799 | 1.43875 | 94.66 | 0.53402 |
| 48 | -31.6431 | 2.1882 | | | |
| 49 | -38.4869 | 0.9347 | 1.85150 | 40.78 | 0.56958 |
| 50 | -156.8564 | 3.0338 | 1.80809 | 22.76 | 0.63073 |
| 51 | -50.0062 | 20.0000 | | | |

(continued)

| Example 8 | | | | | |
|---|---|---|---|---|---|
| Sn | R | D | Nd | vd | θg,F |
| 52 | ∞ | 5.7000 | 1.51633 | 64.14 | 0.53531 |
| 53 | ∞ | 18.9150 | | | |

Table 44

| Example 8 | | | |
|---|---|---|---|
| | Wide | Middle | Tele |
| Zr | 1.0 | 3.4 | 6.8 |
| f | 14.10 | 47.90 | 96.34 |
| FNo. | 2.75 | 2.74 | 3.68 |
| 2ω[°] | 95.2 | 32.0 | 16.4 |
| DD[17] | 0.8707 | 11.4537 | 12.4399 |
| DD[19] | 1.2151 | 34.9401 | 48.6612 |
| DD[26] | 39.8438 | 4.4021 | 3.7245 |
| DD[29] | 3.2270 | 8.5529 | 0.7606 |
| DD[31] | 21.7077 | 7.5154 | 1.2781 |

Table 45

| Example 8 | | | |
|---|---|---|---|
| Sn | 1 | 10 | 17 |
| KA | -1.5258842E+01 | 9.7636382E-01 | 7.9629465E-01 |
| A4 | 2.0959904E-06 | 1.6375359E-06 | -8.4215761E-08 |
| A6 | 5.1042187E-10 | 2.4816624E-10 | 1.5846800E-10 |
| A8 | -3.7780705E-12 | -3.1277741E-12 | 4.8787315E-13 |
| A10 | 9.0898744E-15 | 1.0316926E-14 | -1.3139011E-15 |
| A12 | -1.2455989E-17 | -2.1650192E-17 | 1.5169746E-18 |
| A14 | 1.0383984E-20 | 2.8966522E-20 | -4.6421598E-22 |
| A16 | -5.1948294E-24 | -2.4096004E-23 | -7.2159347E-25 |
| A18 | 1.4351936E-27 | 1.1397991E-26 | 7.6428966E-28 |
| A20 | -1.6840964E-31 | -2.3453532E-30 | -2.2373370E-31 |

| Sn | 20 | 30 |
|---|---|---|
| KA | -2.9089306E+01 | -7.1022010E-01 |
| A4 | 2.6325811E-06 | -2.9800765E-06 |
| A6 | 9.9578373E-09 | 2.3581737E-09 |
| A8 | -1.8878371E-10 | -1.9314624E-11 |
| A10 | 1.4094278E-12 | 2.9309678E-13 |
| A12 | 1.8081907E-15 | -2.5503429E-15 |
| A14 | -1.1847466E-16 | 1.3151628E-17 |

(continued)

| Sn | 20 | 30 |
|---|---|---|
| A16 | 9.2226208E-19 | -4.0198571E-20 |
| A18 | -3.1423398E-21 | 6.7331024E-23 |
| A20 | 4.1283509E-24 | -4.7591324E-26 |

Example 8-1

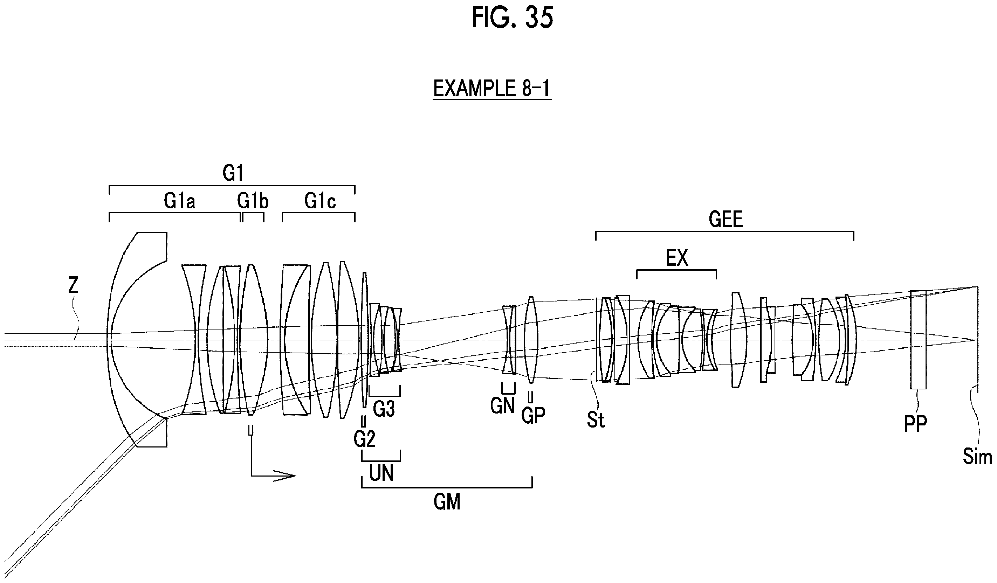

Example 8-1 is an example in which the EX group EX is inserted into the zoom lens according to Example 8. Fig. 35 is a cross-sectional view showing a configuration of the zoom lens according to Example 8-1 and luminous fluxes in the wide angle end state. The zoom lens according to Example 8-1 includes the final lens group GEE in which the EX group EX is inserted into the final lens group GE according to Example 8, instead of the final lens group GE according to Example 8. The other lens groups and the configurations of the groups in Example 8-1 are the same as those of the zoom lens according to Example 8.

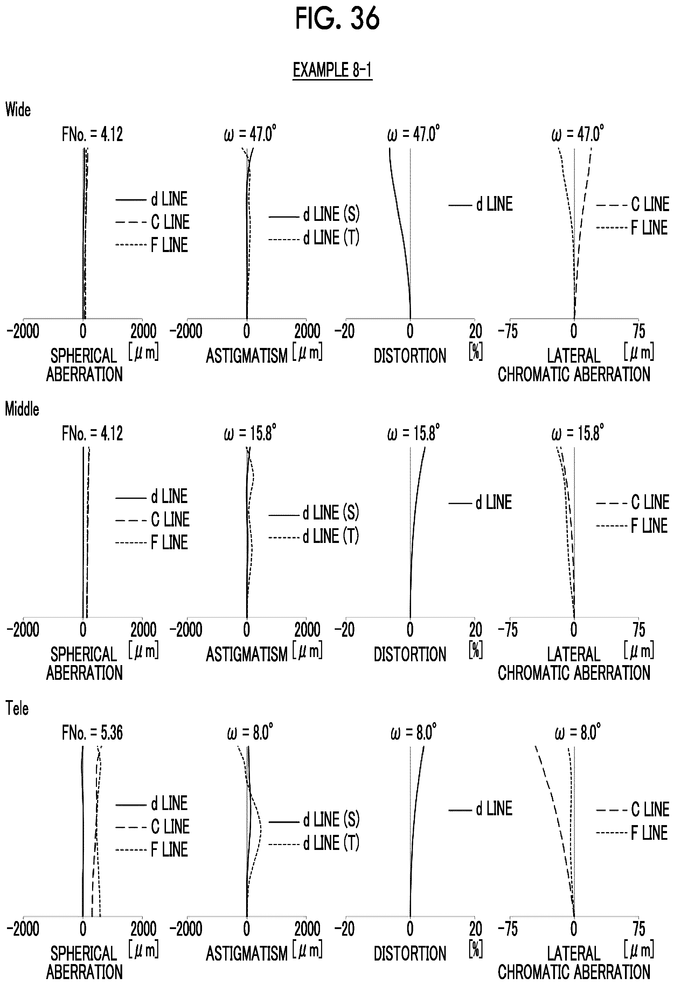

Regarding the zoom lens according to Example 8-1, Tables 46A and 46B show basic lens data, Table 47 shows specifications and variable surface spacings, Table 48 shows aspherical coefficients, and Fig. 36 shows each of the aberration diagrams.

Table 46A

| Example 8-1 | | | | | |
|---|---|---|---|---|---|
| Sn | R | D | Nd | vd | θg,F |
| *1 | 120.8422 | 1.5711 | 1.83441 | 37.28 | 0.57732 |
| 2 | 33.7772 | 30.8705 | | | |
| 3 | -89.1379 | 1.1593 | 1.51860 | 69.89 | 0.53184 |
| 4 | 149.3277 | 3.1773 | | | |
| 5 | 87.7079 | 5.9846 | 1.89286 | 20.36 | 0.63944 |
| 6 | ∞ | 4.0597 | | | |
| 7 | -116.7329 | 1.1422 | 1.74400 | 44.79 | 0.56560 |
| 8 | 392.7371 | 0.8969 | | | |
| 9 | 136.4430 | 9.8933 | 1.53775 | 74.70 | 0.53936 |
| *10 | -70.8885 | 4.5966 | | | |
| 11 | 336.3778 | 1.7207 | 1.85451 | 25.15 | 0.61031 |
| 12 | 55.3762 | 8.8280 | 1.43875 | 94.66 | 0.53402 |
| 13 | 580.7668 | 0.9083 | | | |
| 14 | 99.6641 | 9.5020 | 1.43875 | 94.66 | 0.53402 |
| 15 | -134.3340 | 0.1210 | | | |
| 16 | 396.1249 | 7.9108 | 1.69680 | 55.53 | 0.54341 |
| *17 | -86.4971 | DD[17] | | | |
| 18 | 465.9621 | 2.4174 | 1.48749 | 70.24 | 0.53007 |
| 19 | -447.2455 | DD[19] | | | |
| *20 | -165.8040 | 0.8444 | 1.77250 | 49.60 | 0.55212 |
| 21 | 41.6928 | 3.0713 | | | |
| 22 | -109.1789 | 0.8108 | 1.72916 | 54.68 | 0.54451 |
| 23 | 52.0658 | 4.1618 | 1.78880 | 28.43 | 0.60092 |
| 24 | -54.7222 | 0.7890 | | | |

(continued)

| Example 8-1 | | | | | |
|---|---|---|---|---|---|
| Sn | R | D | Nd | vd | θg,F |
| 25 | -38.4949 | 0.5000 | 1.69680 | 55.53 | 0.54341 |
| 26 | 90.0948 | DD[26] | | | |
| 27 | -46.0692 | 0.8101 | 1.75500 | 52.32 | 0.54757 |
| 28 | 73.0308 | 2.1416 | 1.80518 | 25.42 | 0.61616 |
| 29 | ∞ | DD[29] | | | |
| *30 | 64.5347 | 4.9192 | 1.75500 | 52.32 | 0.54757 |
| 31 | -78.0894 | DD[31] | | | |

Table 46B

| Example 8-1 | | | | | |
|---|---|---|---|---|---|
| Sn | R | D | Nd | vd | θg,F |
| 32(St) | ∞ | 1.0004 | | | |
| 33 | 131.8706 | 4.4241 | 1.65160 | 58.54 | 0.53901 |
| 34 | -58.5368 | 0.9992 | 1.61772 | 49.81 | 0.56035 |
| 35 | -78.9419 | 0.1248 | | | |
| 36 | ∞ | 4.6035 | 1.59522 | 67.73 | 0.54426 |
| 37 | -40.5049 | 0.9788 | 1.91650 | 31.60 | 0.59117 |
| 38 | ∞ | 2.9029 | | | |
| 39 | 29.4126 | 5.1341 | 1.63246 | 63.77 | 0.54215 |
| 40 | 130.6209 | 0.4668 | | | |
| 41 | 39.5904 | 1.3446 | 2.00100 | 29.13 | 0.59952 |
| 42 | 19.6078 | 8.3044 | 1.56732 | 42.82 | 0.57309 |
| 43 | -229.9442 | 0.0855 | | | |
| 44 | -209.5892 | 0.9057 | 1.83400 | 37.16 | 0.57759 |
| 45 | 17.4699 | 7.5231 | 1.69895 | 30.05 | 0.60282 |
| 46 | -80.5678 | 0.7748 | | | |
| 47 | -88.5302 | 0.8010 | 1.76385 | 48.49 | 0.55898 |
| 48 | 25.3848 | 1.8082 | 1.76182 | 26.52 | 0.61361 |
| 49 | 33.3874 | 6.8503 | | | |
| 50 | 101.3309 | 5.8513 | 1.57135 | 52.95 | 0.55544 |
| 51 | -58.7038 | 5.0404 | | | |
| 52 | ∞ | 4.0124 | 1.80809 | 22.76 | 0.63073 |
| 53 | -47.7221 | 1.1999 | 1.95375 | 32.32 | 0.59056 |
| 54 | 542.0212 | 6.5359 | | | |
| 55 | 195.3637 | 7.5401 | 1.43875 | 94.66 | 0.53402 |
| 56 | -24.6287 | 0.8939 | 2.00100 | 29.14 | 0.59974 |
| 57 | -139.9530 | 1.1599 | | | |
| 58 | 98.4716 | 7.6799 | 1.43875 | 94.66 | 0.53402 |

(continued)

| Example 8-1 | | | | | |
|---|---|---|---|---|---|
| Sn | R | D | Nd | vd | θg,F |
| 59 | -31.6431 | 2.1882 | | | |
| 60 | -38.4869 | 0.9347 | 1.85150 | 40.78 | 0.56958 |
| 61 | -156.8564 | 3.0338 | 1.80809 | 22.76 | 0.63073 |
| 62 | -50.0062 | 20.0000 | | | |
| 63 | ∞ | 5.7000 | 1.51633 | 64.14 | 0.53531 |
| 64 | ∞ | 18.8909 | | | |

Table 47

| Example 8-1 | | | |
|---|---|---|---|
| | Wide | Middle | Tele |
| Zr | 1.0 | 3.4 | 6.8 |
| f | 20.56 | 69.83 | 140.44 |
| FNo. | 4.12 | 4.12 | 5.36 |
| 2ω[°] | 94.0 | 31.6 | 16.0 |
| DD[17] | 0.8707 | 11.4537 | 12.4399 |
| DD[19] | 1.2151 | 34.9401 | 48.6612 |
| DD[26] | 39.8438 | 4.4021 | 3.7245 |
| DD[29] | 3.2270 | 8.5529 | 0.7606 |
| DD[31] | 21.7077 | 7.5154 | 1.2781 |

Table 48

| Example 8-1 | | | |
|---|---|---|---|
| Sn | 1 | 10 | 17 |
| KA | -1.5258842E+01 | 9.7636382E-01 | 7.9629465E-01 |
| A4 | 2.0959904E-06 | 1.6375359E-06 | -8.4215761E-08 |
| A6 | 5.1042187E-10 | 2.4816624E-10 | 1.5846800E-10 |
| A8 | -3.7780705E-12 | -3.1277741E-12 | 4.8787315E-13 |
| A10 | 9.0898744E-15 | 1.0316926E-14 | -1.3139011E-15 |
| A12 | -1.2455989E-17 | -2.1650192E-17 | 1.5169746E-18 |
| A14 | 1.0383984E-20 | 2.8966522E-20 | -4.6421598E-22 |
| A16 | -5.1948294E-24 | -2.4096004E-23 | -7.2159347E-25 |
| A18 | 1.4351936E-27 | 1.1397991E-26 | 7.6428966E-28 |
| A20 | -1.6840964E-31 | -2.3453532E-30 | -2.2373370E-31 |

| Sn | 20 | 30 |
|---|---|---|
| KA | -2.9089306E+01 | -7.1022010E-01 |
| A4 | 2.6325811E-06 | -2.9800765E-06 |
| A6 | 9.9578373E-09 | 2.3581737E-09 |

(continued)

| Sn | 20 | 30 |
|---|---|---|
| A8 | -1.8878371E-10 | -1.9314624E-11 |
| A10 | 1.4094278E-12 | 2.9309678E-13 |
| A12 | 1.8081907E-15 | -2.5503429E-15 |
| A14 | -1.1847466E-16 | 1.3151628E-17 |
| A16 | 9.2226208E-19 | -4.0198571E-20 |
| A18 | -3.1423398E-21 | 6.7331024E-23 |
| A20 | 4.1283509E-24 | -4.7591324E-26 |

Example 9

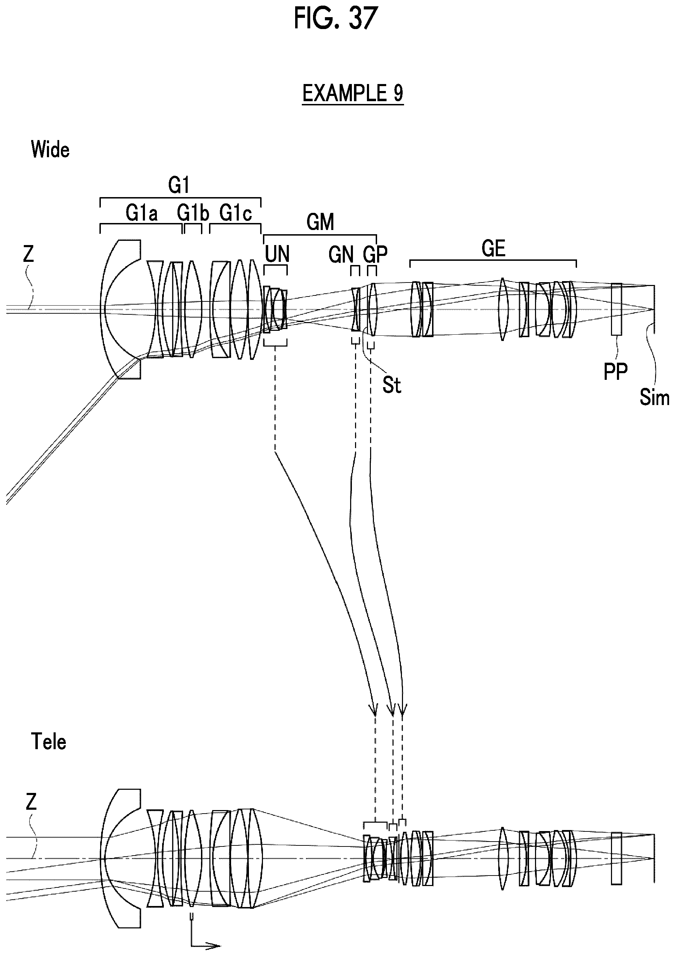

Fig. 37 shows a configuration of a zoom lens according to Example 9 and movement loci thereof. The zoom lens according to Example 9 consists of a first lens group G1 having a positive refractive power, a middle group GM, and a final lens group GE having a positive refractive power in order from an object side to an image side. The middle group GM consists of a negative group UN, an N lens group GN having a negative refractive power, and a P lens group GP having a positive refractive power in order from the object side to the image side. The negative group UN consists of one lens group having a negative refractive power.

During changing magnification from the wide angle end to the telephoto end, the first lens group G1 and the final lens group GE are fixed to the image plane Sim, and the negative group UN, the N lens group GN, and the P lens group GP move along an optical axis Z while changing spacings between adjacent lens groups.

The first lens group G1 consists of a first a partial group G1a having a negative refractive power, a first b partial group G1b having a positive refractive power, and a first c partial group G1c having a positive refractive power in order from the object side to the image side. The focusing group consists of the first b partial group G1b. The first b partial group G1b consists of one lens that is the fifth lens from the object side. During focusing from the infinite distance object to the close distance object, the first a partial group G1a and the first c partial group G1c are fixed to the image plane Sim, and the first b partial group G1b moves toward the image side.

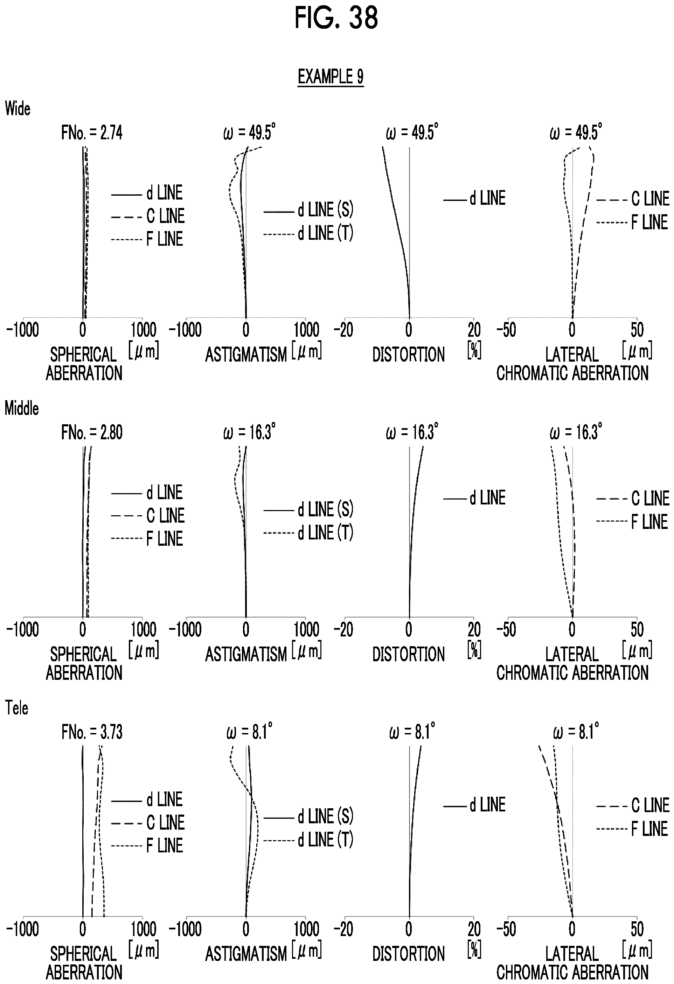

Regarding the zoom lens according to Example 9, Tables 49A and 49B show basic lens data, Table 50 shows specifications and variable surface spacings, Table 51 shows aspherical coefficients, and Fig. 38 shows each of the aberration diagrams.

Table 49A

| Example 9 | | | | | |
|---|---|---|---|---|---|
| Sn | R | D | Nd | vd | θg,F |
| *1 | 138.6080 | 2.5513 | 1.83441 | 37.28 | 0.57732 |
| 2 | 33.3940 | 28.7955 | | | |
| 3 | -91.4595 | 1.1762 | 1.53996 | 59.46 | 0.54418 |
| 4 | 131.9873 | 2.7028 | | | |
| 5 | 88.3497 | 5.9255 | 1.89286 | 20.36 | 0.63944 |
| 6 | ∞ | 3.4442 | | | |
| 7 | -123.8096 | 1.1475 | 1.69680 | 55.53 | 0.54341 |
| 8 | 452.1659 | 2.1987 | | | |
| 9 | 134.1711 | 9.7432 | 1.55032 | 75.50 | 0.54001 |
| *10 | -70.6611 | 4.4986 | | | |
| 11 | 257.8720 | 1.7523 | 1.85451 | 25.15 | 0.61031 |
| 12 | 53.3606 | 9.6831 | 1.43875 | 94.66 | 0.53402 |
| 13 | 1993.4760 | 0.3155 | | | |

(continued)

| Example 9 | | | | | |
|---|---|---|---|---|---|
| Sn | R | D | Nd | vd | θg,F |
| 14 | 97.5108 | 9.8857 | 1.43875 | 94.66 | 0.53402 |
| 15 | -120.0509 | 0.1208 | | | |
| 16 | 275.1150 | 8.1747 | 1.69560 | 59.05 | 0.54348 |
| *17 | -87.5462 | DD[17] | | | |
| *18 | -249.3051 | 0.8480 | 1.81600 | 46.62 | 0.55682 |
| 19 | 38.0807 | 3.4139 | | | |
| 20 | -111.4187 | 0.8100 | 1.72916 | 54.68 | 0.54451 |
| 21 | 23.0842 | 5.7540 | 1.73037 | 32.23 | 0.58996 |
| 22 | -67.8385 | 0.9795 | | | |
| 23 | -38.4666 | 0.5000 | 1.60300 | 65.44 | 0.54022 |
| 24 | 111.4613 | DD[24] | | | |
| 25 | -45.7767 | 0.8105 | 1.75500 | 52.32 | 0.54757 |
| 26 | 73.1472 | 1.9916 | 1.80518 | 25.42 | 0.61616 |
| 27 | ∞ | DD[27] | | | |
| 28(St) | ∞ | 1.0008 | | | |
| *29 | 64.0730 | 4.4921 | 1.77250 | 49.60 | 0.55212 |
| 30 | -78.5715 | DD[30] | | | |

Table 49B

| Example 9 | | | | | |
|---|---|---|---|---|---|
| Sn | R | D | Nd | vd | θg,F |
| 31 | 129.5565 | 5.4594 | 1.60300 | 65.44 | 0.54022 |
| 32 | -56.4773 | 1.0026 | 1.63980 | 34.47 | 0.59233 |
| 33 | -79.9120 | 0.1994 | | | |
| 34 | ∞ | 4.8055 | 1.59522 | 67.73 | 0.54426 |
| 35 | -41.2970 | 0.9827 | 1.91650 | 31.60 | 0.59117 |
| 36 | ∞ | 37.4337 | | | |
| 37 | 93.4152 | 5.5150 | 1.57135 | 52.95 | 0.55544 |
| 38 | -59.2241 | 6.3606 | | | |
| 39 | ∞ | 4.0018 | 1.80809 | 22.76 | 0.63073 |
| 40 | -48.5873 | 1.0546 | 1.95375 | 32.32 | 0.59056 |
| 41 | 597.0901 | 4.1035 | | | |
| 42 | 230.0813 | 7.8547 | 1.43875 | 94.66 | 0.53402 |
| 43 | -24.0404 | 0.9652 | 2.00100 | 29.14 | 0.59974 |
| 44 | -141.3416 | 0.5009 | | | |
| 45 | 85.3417 | 8.0715 | 1.43875 | 94.66 | 0.53402 |
| 46 | -31.4403 | 1.5014 | | | |
| 47 | -38.5866 | 0.9414 | 1.85150 | 40.78 | 0.56958 |

(continued)

| Example 9 | | | | | |
|---|---|---|---|---|---|
| Sn | R | D | Nd | vd | θg,F |
| 48 | -321.8311 | 3.4494 | 1.80809 | 22.76 | 0.63073 |
| 49 | -51.6334 | 20.0000 | | | |
| 50 | ∞ | 5.7000 | 1.51633 | 64.14 | 0.53531 |
| 51 | ∞ | 18.6679 | | | |

Table 50

| Example 9 | | | |
|---|---|---|---|
| | Wide | Middle | Tele |
| Zr | 1.0 | 3.5 | 7.2 |
| f | 13.29 | 46.87 | 96.32 |
| FNo. | 2.74 | 2.80 | 3.73 |
| 2ω[°] | 99.0 | 32.6 | 16.2 |
| DD[17] | 1.0925 | 43.8497 | 57.7357 |
| DD[24] | 38.9073 | 3.7243 | 3.4807 |
| DD[27] | 4.3564 | 9.4606 | 1.0905 |
| DD[30] | 19.3392 | 6.6608 | 1.3885 |

Table 51

| Example 9 | | | |
|---|---|---|---|
| Sn | 1 | 10 | 17 |
| KA | -1.3791246E+01 | 6.8507134E-01 | 9.1293569E-01 |
| A4 | 1.9083025E-06 | 1.7429002E-06 | -1.2568534E-07 |
| A6 | -5.5230663E-10 | -3.8491237E-10 | 3.5146936E-10 |
| A8 | 5.5390404E-13 | 3.9479659E-13 | -5.1088883E-14 |
| A10 | -2.7910976E-17 | -2.3976302E-15 | -3.7067330E-17 |
| A12 | -3.5552916E-19 | 7.1786867E-18 | -3.8136973E-19 |
| A14 | 7.9251100E-23 | -1.1677633E-20 | 1.0180221E-21 |
| A16 | 2.0650677E-25 | 1.0761495E-23 | -1.1589049E-24 |
| A18 | -1.4044578E-28 | -5.3327124E-27 | 6.7064136E-28 |
| A20 | 2.6536555E-32 | 1.1127835E-30 | -1.6093416E-31 |

| Sn | 18 | 29 |
|---|---|---|
| KA | -6.6323619E+01 | 9.5234151E-02 |
| A4 | 3.1920814E-06 | -3.2429277E-06 |
| A6 | -1.2588134E-08 | 6.9525337E-09 |
| A8 | 1.1840973E-11 | -1.3626981E-10 |
| A10 | 3.6916233E-12 | 2.0805066E-12 |
| A12 | -7.4577182E-14 | -1.9245952E-14 |

(continued)

| Sn | 18 | 29 |
|---|---|---|
| A14 | 6.9998178E-16 | 1.0874780E-16 |
| A16 | -3.5364957E-18 | -3.6737635E-19 |
| A18 | 9.2490925E-21 | 6.8144729E-22 |
| A20 | -9.7930596E-24 | -5.3382458E-25 |

Example 9-1

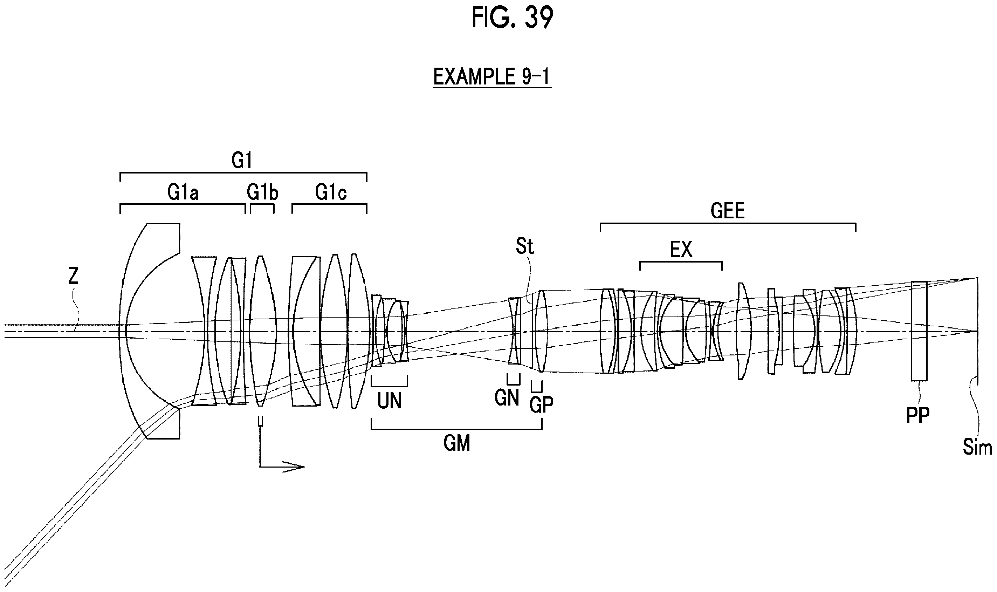

Example 9-1 is an example in which the EX group EX is inserted into the zoom lens according to Example 9. Fig. 39 is a cross-sectional view showing a configuration of the zoom lens according to Example 9-1 and luminous fluxes in the wide angle end state. The zoom lens according to Example 9-1 includes the final lens group GEE in which the EX group EX is inserted into the final lens group GE according to Example 9, instead of the final lens group GE according to Example 9. The other lens groups and the configurations of the groups in Example 9-1 are the same as those of the zoom lens according to Example 9.

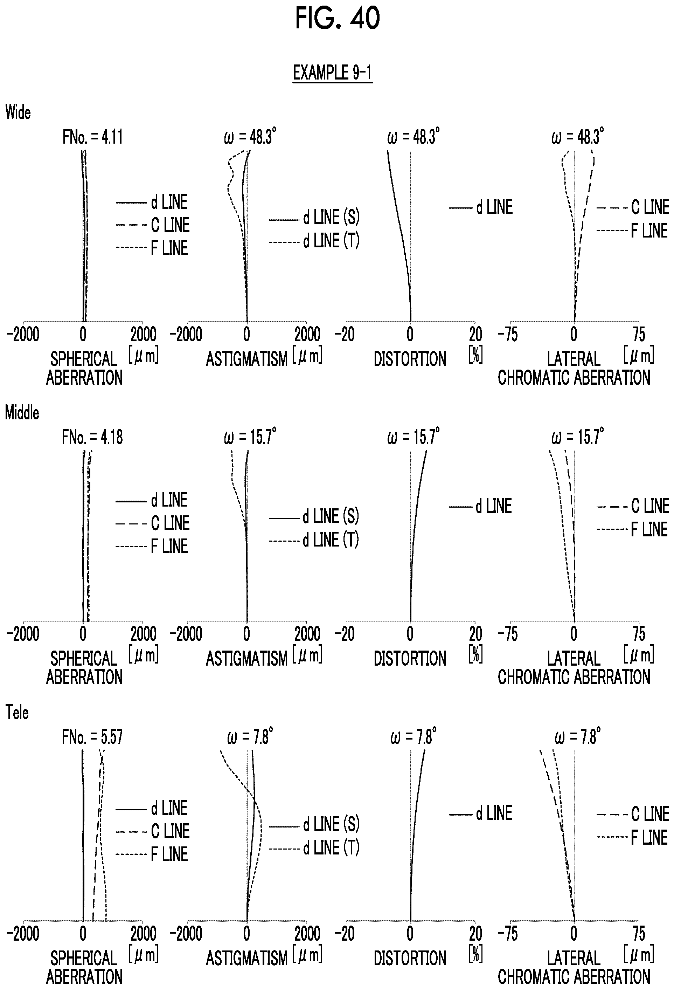

Regarding the zoom lens according to Example 9-1, Tables 52A and 52B show basic lens data, Table 53 shows specifications and variable surface spacings, Table 54 shows aspherical coefficients, and Fig. 40 shows each of the aberration diagrams.

Table 52A

| Example 9-1 | | | | | |
|---|---|---|---|---|---|
| Sn | R | D | Nd | vd | θg,F |
| *1 | 138.6080 | 2.5513 | 1.83441 | 37.28 | 0.57732 |
| 2 | 33.3940 | 28.7955 | | | |
| 3 | -91.4595 | 1.1762 | 1.53996 | 59.46 | 0.54418 |
| 4 | 131.9873 | 2.7028 | | | |
| 5 | 88.3497 | 5.9255 | 1.89286 | 20.36 | 0.63944 |
| 6 | ∞ | 3.4442 | | | |
| 7 | -123.8096 | 1.1475 | 1.69680 | 55.53 | 0.54341 |
| 8 | 452.1659 | 2.1987 | | | |
| 9 | 134.1711 | 9.7432 | 1.55032 | 75.50 | 0.54001 |
| *10 | -70.6611 | 4.4986 | | | |
| 11 | 257.8720 | 1.7523 | 1.85451 | 25.15 | 0.61031 |
| 12 | 53.3606 | 9.6831 | 1.43875 | 94.66 | 0.53402 |
| 13 | 1993.4760 | 0.3155 | | | |
| 14 | 97.5108 | 9.8857 | 1.43875 | 94.66 | 0.53402 |
| 15 | -120.0509 | 0.1208 | | | |
| 16 | 275.1150 | 8.1747 | 1.69560 | 59.05 | 0.54348 |
| *17 | -87.5462 | DD[17] | | | |
| *18 | -249.3051 | 0.8480 | 1.81600 | 46.62 | 0.55682 |
| 19 | 38.0807 | 3.4139 | | | |
| 20 | -111.4187 | 0.8100 | 1.72916 | 54.68 | 0.54451 |
| 21 | 23.0842 | 5.7540 | 1.73037 | 32.23 | 0.58996 |
| 22 | -67.8385 | 0.9795 | | | |
| 23 | -38.4666 | 0.5000 | 1.60300 | 65.44 | 0.54022 |

(continued)

| Example 9-1 | | | | | |
|---|---|---|---|---|---|
| Sn | R | D | Nd | vd | θg,F |
| 24 | 111.4613 | DD[24] | | | |
| 25 | -45.7767 | 0.8105 | 1.75500 | 52.32 | 0.54757 |
| 26 | 73.1472 | 1.9916 | 1.80518 | 25.42 | 0.61616 |
| 27 | ∞ | DD[27] | | | |
| 28(St) | ∞ | 1.0008 | | | |
| *29 | 64.0730 | 4.4921 | 1.77250 | 49.60 | 0.55212 |
| 30 | -78.5715 | DD[30] | | | |

Table 52B

| Example 9-1 | | | | | |
|---|---|---|---|---|---|
| Sn | R | D | Nd | vd | θg,F |
| 31 | 129.5565 | 5.4594 | 1.60300 | 65.44 | 0.54022 |
| 32 | -56.4773 | 1.0026 | 1.63980 | 34.47 | 0.59233 |
| 33 | -79.9120 | 0.1994 | | | |
| 34 | ∞ | 4.8055 | 1.59522 | 67.73 | 0.54426 |
| 35 | -41.2970 | 0.9827 | 1.91650 | 31.60 | 0.59117 |
| 36 | ∞ | 2.5507 | | | |
| 37 | 28.7827 | 4.8989 | 1.63246 | 63.77 | 0.54215 |
| 38 | 125.9162 | 1.1531 | | | |
| 39 | 39.5531 | 0.9203 | 2.00100 | 29.13 | 0.59952 |
| 40 | 19.1357 | 8.4888 | 1.56732 | 42.82 | 0.57309 |
| 41 | -243.9620 | 0.0855 | | | |
| 42 | -220.6294 | 0.8706 | 1.83400 | 37.16 | 0.57759 |
| 43 | 16.8809 | 7.6435 | 1.69895 | 30.05 | 0.60282 |
| 44 | -91.5929 | 1.5583 | | | |
| 45 | -99.0456 | 0.8009 | 1.76385 | 48.49 | 0.55898 |
| 46 | 23.3317 | 1.8834 | 1.76182 | 26.52 | 0.61361 |
| 47 | 33.5582 | 6.5797 | | | |
| 48 | 93.4152 | 5.5150 | 1.57135 | 52.95 | 0.55544 |
| 49 | -59.2241 | 6.3606 | | | |
| 50 | ∞ | 4.0018 | 1.80809 | 22.76 | 0.63073 |
| 51 | -48.5873 | 1.0546 | 1.95375 | 32.32 | 0.59056 |
| 52 | 597.0901 | 4.1035 | | | |
| 53 | 230.0813 | 7.8547 | 1.43875 | 94.66 | 0.53402 |
| 54 | -24.0404 | 0.9652 | 2.00100 | 29.14 | 0.59974 |
| 55 | -141.3416 | 0.5009 | | | |
| 56 | 85.3417 | 8.0715 | 1.43875 | 94.66 | 0.53402 |
| 57 | -31.4403 | 1.5014 | | | |

(continued)

| Example 9-1 | | | | | |
|---|---|---|---|---|---|
| Sn | R | D | Nd | vd | θg,F |
| 58 | -38.5866 | 0.9414 | 1.85150 | 40.78 | 0.56958 |
| 59 | -321.8311 | 3.4494 | 1.80809 | 22.76 | 0.63073 |
| 60 | -51.6334 | 20.0000 | | | |
| 61 | ∞ | 5.7000 | 1.51633 | 64.14 | 0.53531 |
| 62 | ∞ | 18.6511 | | | |

Table 53

| Example 9-1 | | | |
|---|---|---|---|
| | Wide | Middle | Tele |
| Zr | 1.0 | 3.5 | 7.2 |
| f | 19.82 | 69.92 | 143.69 |
| FNo. | 4.11 | 4.18 | 5.57 |
| 2ω[°] | 96.6 | 31.4 | 15.6 |
| DD[17] | 1.0925 | 43.8497 | 57.7357 |
| DD[24] | 38.9073 | 3.7243 | 3.4807 |
| DD[27] | 4.3564 | 9.4606 | 1.0905 |
| DD[30] | 19.3392 | 6.6608 | 1.3885 |

Table 54

| Example 9-1 | | | |
|---|---|---|---|
| Sn | 1 | 10 | 17 |
| KA | -1.3791246E+01 | 6.8507134E-01 | 9.1293569E-01 |
| A4 | 1.9083025E-06 | 1.7429002E-06 | -1.2568534E-07 |
| A6 | -5.5230663E-10 | -3.8491237E-10 | 3.5146936E-10 |
| A8 | 5.5390404E-13 | 3.9479659E-13 | -5.1088883E-14 |
| A10 | -2.7910976E-17 | -2.3976302E-15 | -3.7067330E-17 |
| A12 | -3.5552916E-19 | 7.1786867E-18 | -3.8136973E-19 |
| A14 | 7.9251100E-23 | -1.1677633E-20 | 1.0180221E-21 |
| A16 | 2.0650677E-25 | 1.0761495E-23 | -1.1589049E-24 |
| A18 | -1.4044578E-28 | -5.3327124E-27 | 6.7064136E-28 |
| A20 | 2.6536555E-32 | 1.1127835E-30 | -1.6093416E-31 |

| Sn | 18 | 29 |
|---|---|---|
| KA | -6.6323619E+01 | 9.5234151E-02 |
| A4 | 3.1920814E-06 | -3.2429277E-06 |
| A6 | -1.2588134E-08 | 6.9525337E-09 |
| A8 | 1.1840973E-11 | -1.3626981E-10 |
| A10 | 3.6916233E-12 | 2.0805066E-12 |

(continued)

| Sn | 18 | 29 |
|----|----|----|
| A12 | -7.4577182E-14 | -1.9245952E-14 |
| A14 | 6.9998178E-16 | 1.0874780E-16 |
| A16 | -3.5364957E-18 | -3.6737635E-19 |
| A18 | 9.2490925E-21 | 6.8144729E-22 |
| A20 | -9.7930596E-24 | -5.3382458E-25 |

Example 10

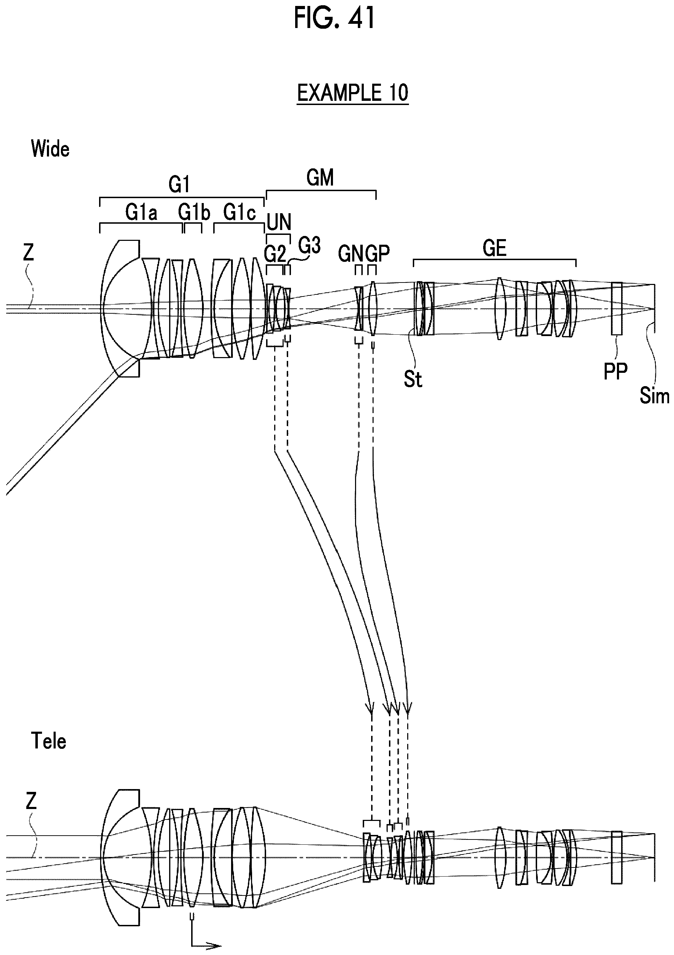

Fig. 41 shows a configuration of a zoom lens according to Example 10 and movement loci thereof. The zoom lens according to Example 10 consists of a first lens group G1 having a positive refractive power, a middle group GM, and a final lens group GE having a positive refractive power in order from an object side to an image side. The middle group GM consists of a negative group UN having a negative refractive power as a whole, an N lens group GN having a negative refractive power, and a P lens group GP having a positive refractive power in order from the object side to the image side. The negative group UN consists of a second lens group G2 having a negative refractive power and a third lens group G3 having a negative refractive power in order from the object side to the image side.

During changing magnification from the wide angle end to the telephoto end, the first lens group G1 and the final lens group GE are fixed to the image plane Sim, and the second lens group G2, the third lens group G3, the negative group UN, the N lens group GN, and the P lens group GP move along an optical axis Z while changing spacings between adjacent lens groups.

The first lens group G1 consists of a first a partial group G1a having a negative refractive power, a first b partial group G1b having a positive refractive power, and a first c partial group G1c having a positive refractive power in order from the object side to the image side. The focusing group consists of the first b partial group G1b. The first b partial group G1b consists of one lens that is the fifth lens from the object side. During focusing from the infinite distance object to the close distance object, the first a partial group G1a and the first c partial group G1c are fixed to the image plane Sim, and the first b partial group G1b moves toward the image side.

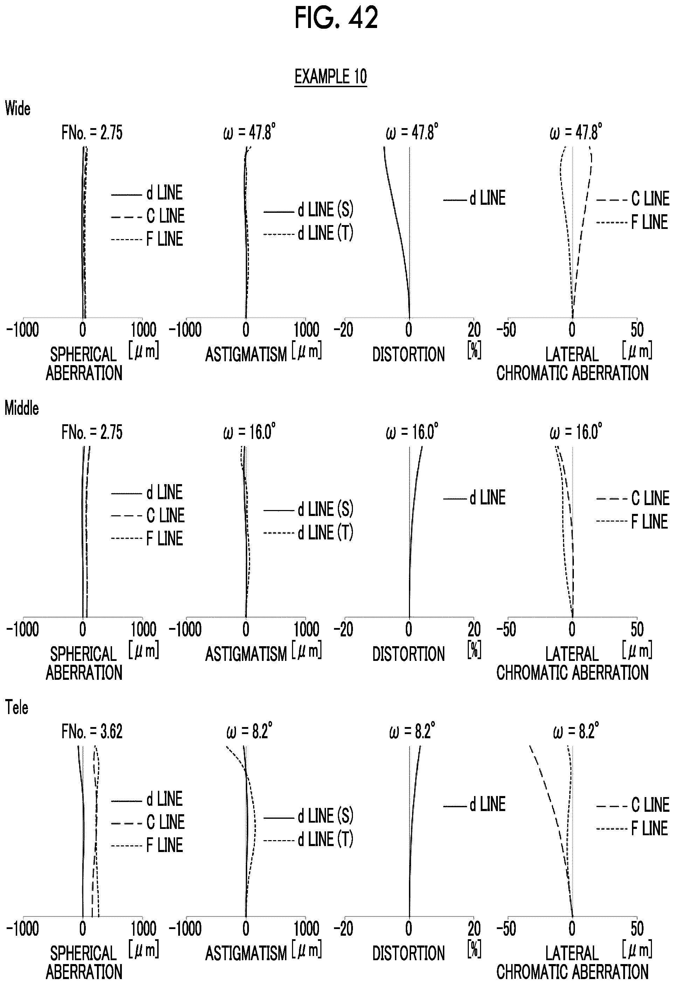

Regarding the zoom lens according to Example 10, Tables 55A and 55B show basic lens data, Table 56 shows specifications and variable surface spacings, Table 57 shows aspherical coefficients, and Fig. 42 shows each of the aberration diagrams.

Table 55A

| Example 10 | | | | | |
|----|----|----|----|----|----|
| Sn | R | D | Nd | vd | θg,F |
| *1 | 127.4108 | 1.6302 | 1.83441 | 37.28 | 0.57732 |
| 2 | 33.6395 | 27.2891 | | | |
| 3 | -88.4515 | 1.1906 | 1.51633 | 64.14 | 0.53531 |
| 4 | 138.8223 | 2.6984 | | | |
| 5 | 87.4210 | 6.4076 | 1.89286 | 20.36 | 0.63944 |
| 6 | ∞ | 4.8064 | | | |
| 7 | -123.0389 | 1.5349 | 1.69930 | 51.11 | 0.55523 |
| 8 | 418.6259 | 1.7781 | | | |
| 9 | 126.2041 | 10.7059 | 1.53775 | 74.70 | 0.53936 |
| *10 | -72.8046 | 4.7328 | | | |
| 11 | 273.6934 | 1.7572 | 1.85451 | 25.15 | 0.61031 |
| 12 | 53.9078 | 9.9212 | 1.43875 | 94.66 | 0.53402 |
| 13 | 2777.0761 | 0.3156 | | | |
| 14 | 95.3274 | 10.4524 | 1.43875 | 94.66 | 0.53402 |

(continued)

| Example 10 | | | | | |
|---|---|---|---|---|---|
| Sn | R | D | Nd | vd | θg,F |
| 15 | -116.4440 | 0.3221 | | | |
| 16 | 327.8390 | 8.1735 | 1.69680 | 55.53 | 0.54341 |
| *17 | -86.9425 | DD[17] | | | |
| *18 | -224.5999 | 0.8835 | 1.80400 | 46.58 | 0.55730 |
| 19 | 40.1560 | 3.2653 | | | |
| 20 | -121.1551 | 0.8106 | 1.72916 | 54.68 | 0.54451 |
| 21 | 31.7375 | 5.0648 | 1.77047 | 29.74 | 0.59514 |
| 22 | -73.8794 | DD[22] | | | |
| 23 | -39.7524 | 0.5002 | 1.65160 | 58.54 | 0.53901 |
| 24 | 107.3017 | DD[24] | | | |
| 25 | -45.9567 | 0.8109 | 1.74100 | 52.64 | 0.54676 |
| 26 | 88.2461 | 1.9120 | 1.80518 | 25.42 | 0.61616 |
| 27 | -3153.4230 | DD[27] | | | |
| *28 | 64.9014 | 4.5739 | 1.77250 | 49.60 | 0.55212 |
| 29 | -77.5418 | DD[29] | | | |

Table 55B

| Example 10 | | | | | |
|---|---|---|---|---|---|
| Sn | R | D | Nd | vd | θg,F |
| 30(St) | ∞ | 1.0048 | | | |
| 31 | 129.3579 | 3.8837 | 1.60300 | 65.44 | 0.54022 |
| 32 | -67.8085 | 0.9523 | 1.63980 | 34.47 | 0.59233 |
| 33 | -79.4395 | 0.1209 | | | |
| 34 | ∞ | 4.2251 | 1.59522 | 67.73 | 0.54426 |
| 35 | -41.2673 | 0.9435 | 1.91650 | 31.60 | 0.59117 |
| 36 | ∞ | 34.9005 | | | |
| 37 | 94.8026 | 6.0985 | 1.57135 | 52.95 | 0.55544 |
| 38 | -59.6568 | 5.9861 | | | |
| 39 | ∞ | 5.1648 | 1.8080 | 22.76 | 0.63073 |
| 40 | -49.9073 | 0.9821 | 1.95375 | 32.32 | 0.59056 |
| 41 | 698.9007 | 5.2692 | | | |
| 42 | 218.5362 | 8.3351 | 1.43875 | 94.66 | 0.53402 |
| 43 | -24.2386 | 0.9992 | 2.00100 | 29.14 | 0.59974 |
| 44 | -137.9794 | 0.5180 | | | |
| 45 | 91.8306 | 7.6826 | 1.43875 | 94.66 | 0.53402 |
| 46 | -31.4152 | 0.9787 | | | |
| 47 | -38.7278 | 1.0071 | 1.85150 | 40.78 | 0.56958 |
| 48 | -246.6761 | 3.3666 | 1.80809 | 22.76 | 0.63073 |

(continued)

| Example 10 | | | | | |
|---|---|---|---|---|---|
| Sn | R | D | Nd | vd | θg,F |
| 49 | -50.9852 | 20.0000 | | | |
| 50 | ∞ | 5.7000 | 1.51633 | 64.14 | 0.53531 |
| 51 | ∞ | 18.7842 | | | |

Table 56

| Example 10 | | | |
|---|---|---|---|
| | Wide | Middle | Tele |
| Zr | 1.0 | 3.4 | 6.9 |
| f | 14.05 | 47.86 | 96.44 |
| FNo. | 2.75 | 2.75 | 3.62 |
| 2ω[°] | 95.6 | 32.0 | 16.4 |
| DD[17] | 1.0224 | 42.5664 | 55.8361 |
| DD[22] | 1.8985 | 3.2279 | 4.8935 |
| DD[24] | 38.8387 | 4.1612 | 3.5362 |
| DD[27] | 3.5020 | 8.6747 | 0.7741 |
| DD[29] | 21.1988 | 7.8302 | 1.4204 |

Table 57

| Example 10 | | | |
|---|---|---|---|
| Sn | 1 | 10 | 17 |
| KA | -1.8252342E+01 | 7.0754195E-01 | 6.8568981E-01 |
| A4 | 2.1079500E-06 | 1.7702704E-06 | -1.5206015E-07 |
| A6 | 3.6052362E-10 | -6.2444883E-10 | 6.8605257E-10 |
| A8 | -3.0022664E-12 | 1.0903438E-12 | -1.5035156E-12 |
| A10 | 7.4155436E-15 | -1.6639951E-15 | 3.3881696E-15 |
| A12 | -1.0483688E-17 | 6.9760393E-19 | -5.8048975E-18 |
| A14 | 9.0339061E-21 | 1.5399127E-21 | 6.9692926E-21 |
| A16 | -4.6677311E-24 | -2.7299877E-24 | -5.4655644E-24 |
| A18 | 1.3295807E-27 | 1.7997947E-27 | 2.4921274E-27 |
| A20 | -1.6052518E-31 | -4.5048056E-31 | -4.9770829E-31 |

| Sn | 18 | 28 |
|---|---|---|
| KA | -5.5089454E+01 | -2.2512189E-01 |
| A4 | 1.9812590E-06 | -3.1278043E-06 |
| A6 | 2.0209237E-08 | 2.8233475E-09 |
| A8 | -4.5143460E-10 | -3.6562212E-11 |
| A10 | 5.8469547E-12 | 5.3898772E-13 |
| A12 | -4.7391377E-14 | -4.5815464E-15 |

(continued)

| Sn | 18 | 28 |
|---|---|---|
| A14 | 2.3612643E-16 | 2.3319126E-17 |
| A16 | -6.7691769E-19 | -7.0614660E-20 |
| A18 | 9.5007367E-22 | 1.1738995E-22 |
| A20 | -3.9740355E-25 | -8.2457716E-26 |

Example 10-1

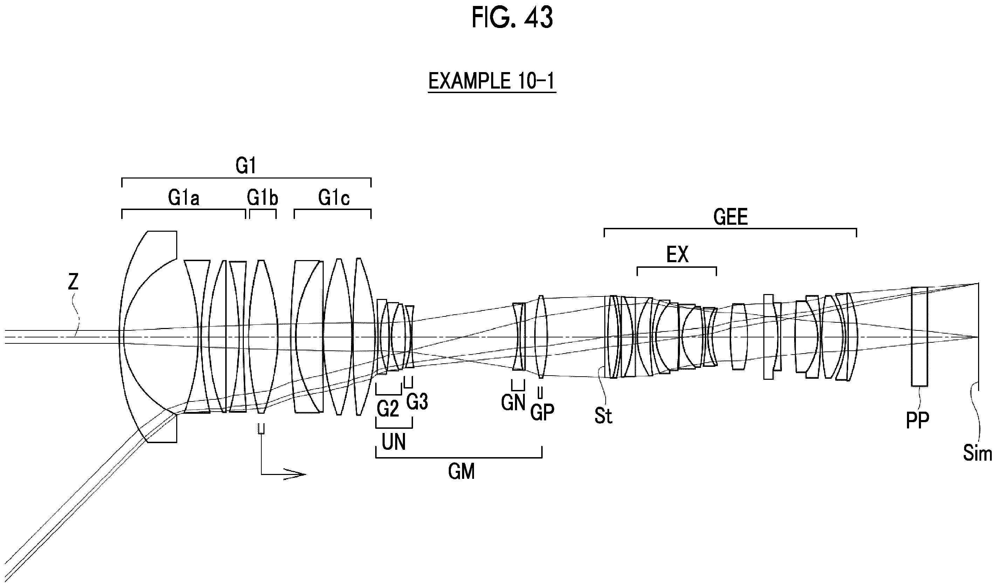

Example 10-1 is an example in which the EX group EX is inserted into the zoom lens according to Example 10. Fig. 43 is a cross-sectional view showing a configuration of the zoom lens according to Example 10-1 and luminous fluxes in the wide angle end state. The zoom lens according to Example 10-1 includes the final lens group GEE in which the EX group EX is inserted into the final lens group GE according to Example 10, instead of the final lens group GE according to Example 10. The other lens groups and the configurations of the groups in Example 10-1 are the same as those of the zoom lens according to Example 10.

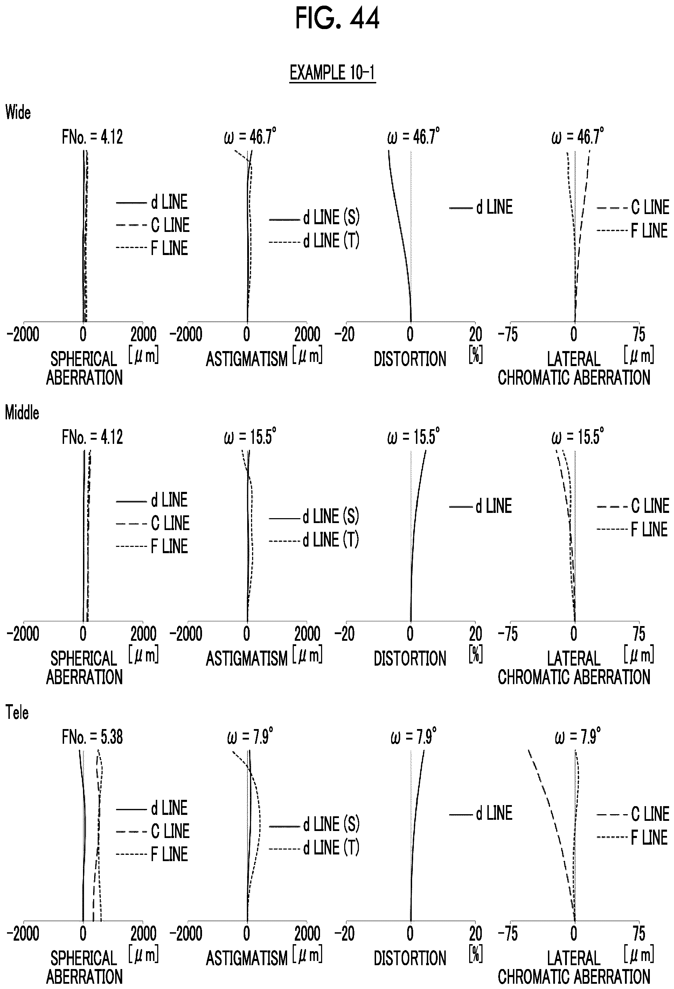

Regarding the zoom lens according to Example 10-1, Tables 58A and 58B show basic lens data, Table 59 shows specifications and variable surface spacings, Table 60 shows aspherical coefficients, and Fig. 44 shows each of the aberration diagrams.

Table 58A

| Example 10-1 | | | | | |
|---|---|---|---|---|---|
| Sn | R | D | Nd | vd | θg,F |
| *1 | 127.4108 | 1.6302 | 1.83441 | 37.28 | 0.57732 |
| 2 | 33.6395 | 27.2891 | | | |
| 3 | -88.4515 | 1.1906 | 1.51633 | 64.14 | 0.53531 |
| 4 | 138.8223 | 2.6984 | | | |
| 5 | 87.4210 | 6.4076 | 1.89286 | 20.36 | 0.63944 |
| 6 | ∞ | 4.8064 | | | |
| 7 | -123.0389 | 1.5349 | 1.69930 | 51.11 | 0.55523 |
| 8 | 418.6259 | 1.7781 | | | |
| 9 | 126.2041 | 10.7059 | 1.53775 | 74.70 | 0.53936 |
| *10 | -72.8046 | 4.7328 | | | |
| 11 | 273.6934 | 1.7572 | 1.85451 | 25.15 | 0.61031 |
| 12 | 53.9078 | 9.9212 | 1.43875 | 94.66 | 0.53402 |
| 13 | 2777.0761 | 0.3156 | | | |
| 14 | 95.3274 | 10.4524 | 1.43875 | 94.66 | 0.53402 |
| 15 | -116.4440 | 0.3221 | | | |
| 16 | 327.8390 | 8.1735 | 1.69680 | 55.53 | 0.54341 |
| *17 | -86.9425 | DD[17] | | | |
| *18 | -224.5999 | 0.8835 | 1.80400 | 46.58 | 0.55730 |
| 19 | 40.1560 | 3.2653 | | | |
| 20 | -121.1551 | 0.8106 | 1.72916 | 54.68 | 0.54451 |
| 21 | 31.7375 | 5.0648 | 1.77047 | 29.74 | 0.59514 |
| 22 | -73.8794 | DD[22] | | | |
| 23 | -39.7524 | 0.5002 | 1.65160 | 58.54 | 0.53901 |

(continued)

| Example 10-1 | | | | | |
|---|---|---|---|---|---|
| Sn | R | D | Nd | vd | θg,F |
| 24 | 107.3017 | DD[24] | | | |
| 25 | -45.9567 | 0.8109 | 1.74100 | 52.64 | 0.54676 |
| 26 | 88.2461 | 1.9120 | 1.80518 | 25.42 | 0.61616 |
| 27 | -3153.4230 | DD[27] | | | |
| *28 | 64.9014 | 4.5739 | 1.77250 | 49.60 | 0.55212 |
| 29 | -77.5418 | DD[29] | | | |

Table 58B

| Example 10-1 | | | | | |
|---|---|---|---|---|---|
| Sn | R | D | Nd | vd | θg,F |
| 30(St) | ∞ | 1.0048 | | | |
| 31 | 129.3579 | 3.8837 | 1.60300 | 65.44 | 0.54022 |
| 32 | -67.8085 | 0.9523 | 1.63980 | 34.47 | 0.59233 |
| 33 | -79.4395 | 0.1209 | | | |
| 34 | ∞ | 4.2251 | 1.59522 | 67.73 | 0.54426 |
| 35 | -41.2673 | 0.9435 | 1.91650 | 31.60 | 0.59117 |
| 36 | ∞ | 0.8000 | | | |
| 37 | 28.9820 | 4.6707 | 1.63246 | 63.77 | 0.54215 |
| 38 | 130.3019 | 0.7639 | | | |
| 39 | 39.4319 | 1.3062 | 2.00100 | 29.13 | 0.59952 |
| 40 | 19.5762 | 8.4240 | 1.56732 | 42.82 | 0.57309 |
| 41 | -221.2816 | 0.2484 | | | |
| 42 | -208.3303 | 0.9402 | 1.83400 | 37.16 | 0.57759 |
| 43 | 16.7492 | 7.6101 | 1.69895 | 30.05 | 0.60282 |
| 44 | -81.5731 | 0.9662 | | | |
| 45 | -86.6377 | 0.8103 | 1.76385 | 48.49 | 0.55898 |
| 46 | 24.7496 | 1.7274 | 1.76182 | 26.52 | 0.61361 |
| 47 | 33.2004 | 6.6332 | | | |
| 48 | 94.8026 | 6.0985 | 1.57135 | 52.95 | 0.55544 |
| 49 | -59.6568 | 5.9861 | | | |
| 50 | ∞ | 5.1648 | 1.80809 | 22.76 | 0.63073 |
| 51 | -49.9073 | 0.9821 | 1.95375 | 32.32 | 0.59056 |
| 52 | 698.9007 | 5.2692 | | | |
| 53 | 218.5362 | 8.3351 | 1.43875 | 94.66 | 0.53402 |
| 54 | -24.2386 | 0.9992 | 2.00100 | 29.14 | 0.59974 |
| 55 | -137.9794 | 0.5180 | | | |
| 56 | 91.8306 | 7.6826 | 1.43875 | 94.66 | 0.53402 |
| 57 | -31.4152 | 0.9787 | | | |

(continued)

| Example 10-1 | | | | | |
|---|---|---|---|---|---|
| Sn | R | D | Nd | vd | θg,F |
| 58 | -38.7278 | 1.0071 | 1.85150 | 40.78 | 0.56958 |
| 59 | -246.6761 | 3.3666 | 1.80809 | 22.76 | 0.63073 |
| 60 | -50.9852 | 20.0000 | | | |
| 61 | ∞ | 5.7000 | 1.51633 | 64.14 | 0.53531 |
| 62 | ∞ | 18.7587 | | | |

Table 59

| Example 10-1 | | | |
|---|---|---|---|
| | Wide | Middle | Tele |
| Zr | 1.0 | 3.4 | 6.9 |
| f | 20.90 | 71.22 | 143.50 |
| FNo. | 4.12 | 4.12 | 5.38 |
| 2ω[°] | 93.4 | 31.0 | 15.8 |
| DD[17] | 1.0224 | 42.5664 | 55.8361 |
| DD[22] | 1.8985 | 3.2279 | 4.8935 |
| DD[24] | 38.8387 | 4.1612 | 3.5362 |
| DD[27] | 3.5020 | 8.6747 | 0.7741 |
| DD[29] | 21.1988 | 7.8302 | 1.4204 |

Table 60

| Example 10-1 | | | |
|---|---|---|---|
| Sn | 1 | 10 | 17 |
| KA | -1.8252342E+01 | 7.0754195E-01 | 6.8568981E-01 |
| A4 | 2.1079500E-06 | 1.7702704E-06 | -1.5206015E-07 |
| A6 | 3.6052362E-10 | -6.2444883E-10 | 6.8605257E-10 |
| A8 | -3.0022664E-12 | 1.0903438E-12 | -1.5035156E-12 |
| A10 | 7.4155436E-15 | -1.6639951E-15 | 3.3881696E-15 |
| A12 | -1.0483688E-17 | 6.9760393E-19 | -5.8048975E-18 |
| A14 | 9.0339061E-21 | 1.5399127E-21 | 6.9692926E-21 |
| A16 | -4.6677311E-24 | -2.7299877E-24 | -5.4655644E-24 |
| A18 | 1.3295807E-27 | 1.7997947E-27 | 2.4921274E-27 |
| A20 | -1.6052518E-31 | -4.5048056E-31 | -4.9770829E-31 |

| Sn | 18 | 28 |
|---|---|---|
| KA | -5.5089454E+01 | -2.2512189E-01 |
| A4 | 1.9812590E-06 | -3.1278043E-06 |
| A6 | 2.0209237E-08 | 2.8233475E-09 |
| A8 | -4.5143460E-10 | -3.6562212E-11 |

(continued)

| Sn | 18 | 28 |
|---|---|---|
| A10 | 5.8469547E-12 | 5.3898772E-13 |
| A12 | -4.7391377E-14 | -4.5815464E-15 |
| A14 | 2.3612643E-16 | 2.3319126E-17 |
| A16 | -6.7691769E-19 | -7.0614660E-20 |
| A18 | 9.5007367E-22 | 1.1738995E-22 |
| A20 | -3.9740355E-25 | -8.2457716E-26 |

Tables 61 and 62 show the corresponding values of Conditional Expressions (1) to (31) and (36) to (40) and the corresponding values of IHw and ErL1 regarding the zoom lenses according to Examples 1 to 10. The corresponding values of Conditional Expressions (1) to (31) and (36) to (40) are values in a state where the EX group EX is not inserted. Tables 63 and 64 show the corresponding values of Conditional Expressions (32) to (35) regarding the zoom lenses according to Examples 1-1 to 10-1. Preferable ranges of the conditional expressions may be set by using the corresponding values of the examples shown in Tables 61 to 64 as the upper or lower limits of the conditional expressions.

Table 61

| Expression No. | | Example 1 | Example 2 | Example 3 | Example 4 | Example 5 |
|---|---|---|---|---|---|---|
| (1) | fw/f1 | 0.3224 | 0.3145 | 0.3182 | 0.3432 | 0.3508 |
| (2) | H1f/Hft | 0.3917 | 0.4059 | 0.3670 | 0.3527 | 0.4442 |
| (3) | HD1/f1 | 1.9061 | 1.8402 | 1.8026 | 2.1836 | 1.6357 |
| (4) | f1/f1b | 0.5179 | 0.4595 | 0.4564 | 0.4921 | 0.5304 |
| (5) | H1r/f1 | 1.0825 | 1.1195 | 1.0490 | 1.1655 | 0.9635 |
| (6) | H1f/f1 | 1.2573 | 1.2424 | 1.2521 | 1.3062 | 1.1869 |
| (7) | N1p | 1.89286 | 1.94594 | 1.92286 | 1.85896 | 1.89286 |
| (8) | v1p | 20.36 | 17.98 | 20.88 | 22.73 | 20.36 |
| (9) | N1n | 1.69680 | - | - | - | 1.66755 |
| (10) | v1n | 55.53 | - | - | - | 41.87 |
| (11) | v1nave | 51.55 | 44.75 | 55.25 | 42.60 | 49.80 |
| (12) | θ1nave | 0.5550 | 0.5659 | 0.5522 | 0.5693 | 0.5608 |
| (13) | Denw/fw | 2.7429 | 2.6882 | 2.7748 | 2.6753 | 2.4498 |
| (14) | f1/f1a | -1.2736 | -1.1934 | -1.1173 | -1.1163 | -1.2468 |
| (15) | f1/f1c | 0.6192 | 0.6740 | 0.6644 | 0.6052 | 0.6595 |
| (16) | (R2 - R3)/(R2 + R3) | -2.2226 | -2.3885 | -1.1070 | -2.6573 | -2.2326 |
| (17) | d1R/IHw | 0.0684 | 0.0631 | 0.0544 | 0.0689 | 0.0702 |
| (18) | Denw/f1 | 0.8844 | 0.8454 | 0.8830 | 0.9183 | 0.8595 |
| (19) | Dent/f1 | 2.2306 | 2.2078 | 2.2366 | 2.3432 | 1.9913 |
| (20) | HD1/DG1 | 0.9160 | 0.9374 | 0.8987 | 0.9394 | 0.8798 |
| (21) | FNot × ω1 | 29.7245 | 30.1557 | 29.5294 | 30.7252 | 30.3423 |
| (22) | Denw/IHw | 2.7398 | 2.6508 | 2.7738 | 2.5724 | 2.6991 |
| (23) | Bfw/IHw | 2.9188 | 3.2387 | 2.7623 | 3.2378 | 2.7579 |
| (24) | ωW | 47.0869 | 47.4305 | 46.9856 | 48.0341 | 44.2685 |
| (25) | fw/ft | 0.1454 | 0.1454 | 0.1454 | 0.1450 | 0.1778 |

(continued)

| Expression No. | | Example 1 | Example 2 | Example 3 | Example 4 | Example 5 |
|---|---|---|---|---|---|---|
| (26) | IHw/Dexw | 0.0813 | 0.0893 | 0.0674 | 0.0641 | 0.1057 |
| (27) | βAmaxR | 0.2048 | 0.1761 | 0.1726 | 0.1874 | 0.1962 |
| (28) | D1a/DG1 | 0.4794 | 0.4375 | 0.4465 | 0.4111 | 0.4825 |
| (29) | D1b/DG1 | 0.1128 | 0.0907 | 0.0986 | 0.1057 | 0.1047 |
| (30) | D1c/DG1 | 0.3336 | 0.3572 | 0.3778 | 0.3894 | 0.3081 |
| (31) | tL1/ErL1 | 0.0615 | 0.0618 | 0.0611 | 0.0654 | 0.0597 |
| (36) | fN/f1 | -1.4126 | -1.3554 | -1.3066 | -1.7389 | -1.3780 |
| (37) | fUN/f1 | -0.5219 | -0.5459 | -0.5278 | -0.6238 | -0.5286 |
| (38) | fw/fUN | -0.6178 | -0.5761 | -0.6030 | -0.5503 | -0.6637 |
| (39) | fw/fE | 0.1824 | 0.1767 | 0.1873 | 0.1473 | 0.2236 |
| (40) | fw/fP | 0.3088 | 0.3035 | 0.3086 | 0.2651 | 0.3363 |
| | IHw | 14.5250 | 14.5250 | 14.5250 | 14.5250 | 14.5250 |
| | ErL1 | 40.9926 | 40.2911 | 40.9471 | 40.0018 | 37.8050 |

Table 62

| Expression No. | | Example 6 | Example 7 | Example 8 | Example 9 | Example 10 |
|---|---|---|---|---|---|---|
| (1) | fw/f1 | 0.3086 | 0.3759 | 0.2633 | 0.3128 | 0.3238 |
| (2) | H1f/Hft | 0.3911 | 0.4785 | 0.4366 | 0.3852 | 0.3885 |
| (3) | HD1/f1 | 1.8261 | 1.8648 | 1.7539 | 2.0286 | 1.9984 |
| (4) | f1/f1b | 0.5249 | 0.4497 | 0.6071 | 0.4965 | 0.4957 |
| (5) | H1r/f1 | 1.0711 | 0.8977 | 1.1850 | 1.1512 | 1.1156 |
| (6) | H1f/f1 | 1.2246 | 1.4004 | 1.1551 | 1.2915 | 1.2779 |
| (7) | N1p | 1.89286 | 1.89286 | 1.89286 | 1.89286 | 1.89286 |
| (8) | v1p | 20.36 | 20.36 | 20.36 | 20.36 | 20.36 |
| (9) | N1n | 1.67790 | 1.65253 | 1.74400 | 1.69680 | 1.69930 |
| (10) | v1n | 55.34 | 39.48 | 44.79 | 55.53 | 51.11 |
| (11) | v1nave | 51.48 | 49.00 | 50.65 | 50.76 | 50.85 |
| (12) | θ1nave | 0.5563 | 0.5602 | 0.5583 | 0.5550 | 0.5560 |
| (13) | Denw/fw | 2.7430 | 2.9712 | 2.8105 | 2.8235 | 2.7787 |
| (14) | f1/f1a | -1.3192 | -1.0637 | -1.5952 | -1.2817 | -1.2516 |
| (15) | f1/f1c | 0.6478 | 0.6483 | 0.6580 | 0.6046 | 0.6110 |
| (16) | (R2 - R3)/(R2 + R3) | -2.2374 | -2.2230 | -2.2203 | -2.1502 | -2.2274 |
| (17) | d1R/IHw | 0.0611 | 0.0643 | 0.0599 | 0.0752 | 0.0704 |
| (18) | Denw/f1 | 0.8464 | 1.1169 | 0.7399 | 0.8833 | 0.8998 |
| (19) | Dent/f1 | 2.1865 | 2.0868 | 1.7518 | 2.1368 | 2.2614 |
| (20) | HD1/DG1 | 0.9224 | 0.7877 | 1.0174 | 0.9353 | 0.9249 |
| (21) | FNot × ω1 | 29.6140 | 31.0084 | 30.6204 | 30.9672 | 30.0900 |
| (22) | Denw/IHw | 2.7424 | 3.2755 | 2.7287 | 2.5827 | 2.6868 |
| (23) | Bfw/IHw | 2.5475 | 2.7544 | 2.9370 | 2.9199 | 2.9281 |

(continued)

| Expression No. | | Example 6 | Example 7 | Example 8 | Example 9 | Example 10 |
|---|---|---|---|---|---|---|
| (24) | ωW | 47.1552 | 44.2765 | 48.0836 | 50.0502 | 48.3277 |
| (25) | fw/ft | 0.1454 | 0.2002 | 0.1465 | 0.1380 | 0.1457 |
| (26) | IHw/Dexw | 0.0807 | 0.1004 | 0.0758 | 0.0333 | 0.0810 |
| (27) | βAmaxR | 0.2101 | 0.1925 | 0.2156 | 0.2170 | 0.1819 |
| (28) | D1a/DG1 | 0.4833 | 0.5018 | 0.5194 | 0.4966 | 0.4861 |
| (29) | D1b/DG1 | 0.1078 | 0.0912 | 0.1071 | 0.1058 | 0.1142 |
| (30) | D1c/DG1 | 0.3402 | 0.3371 | 0.3139 | 0.3249 | 0.3302 |
| (31) | tL1/ErL1 | 0.0622 | 0.0714 | 0.0379 | 0.0606 | 0.0395 |
| (36) | fN/f1 | -1.3867 | -1.7548 | -1.1894 | -1.4900 | -1.5239 |
| (37) | fUN/f1 | -0.5086 | -0.5678 | -0.4656 | -0.5269 | -0.5286 |
| (38) | fw/fUN | -0.6068 | -0.6620 | -0.5655 | -0.5937 | -0.6126 |
| (39) | fw/fE | 0.1857 | 0.3997 | 0.1827 | 0.1656 | 0.1820 |
| (40) | fw/fP | 0.2996 | - | 0.2969 | 0.2868 | 0.3028 |
| | IHw | 14.5250 | 14.5250 | 14.5250 | 14.5250 | 14.5250 |
| | ErL1 | 41.0000 | 42.0000 | 41.4899 | 42.1071 | 41.2617 |

Table 63

| Expression No. | | Example 1-1 | Example 2-1 | Example 3-1 | Example 4-1 | Example 5-1 |
|---|---|---|---|---|---|---|
| (32) | $(ft \times tan\omega t)/(fEXt \times tan\omega EXt)$ | 0.6866 | 0.7033 | 0.6997 | 0.6975 | 0.7026 |
| (33) | DEX/TLw | 0.0920 | 0.0926 | 0.0916 | 0.0913 | 0.1012 |
| (34) | Bfw/fLEXe | -1.1038 | -1.5029 | -1.1590 | -0.9912 | -1.2887 |
| (35) | NEX1 | 1.6956 | 1.6325 | 1.6204 | 1.5347 | 1.6325 |

Table 64

| Expression No. | | Example 6-1 | Example 7-1 | Example 8-1 | Example 9-1 | Example 10-1 |
|---|---|---|---|---|---|---|
| (32) | $(ft \times tan\omega t)/(fEXt \times tan\omega EXt)$ | 0.6987 | 0.7041 | 0.7014 | 0.7002 | 0.7005 |
| (33) | DEX/TLw | 0.0918 | 0.0982 | 0.0928 | 0.0970 | 0.0945 |
| (34) | Bfw/fLEXe | -1.2068 | -1.3131 | -1.3574 | -1.3050 | -1.3669 |
| (35) | NEX1 | 1.6567 | 1.6325 | 1.6325 | 1.6325 | 1.6325 |

While being configured to have a small size, the zoom lenses according to Examples 1 to 10 have a maximum image height of 14.5 or more in a state where the infinite distance object is in focus at the wide angle end, and have a large image circle. In addition, in the zoom lenses according to Examples 1 to 10, the maximum half angle of view in a state where the infinite distance object is in focus at the wide angle end is 40 degrees or more, the angle of view is configured to be wide, various aberrations are favorably corrected, and a high optical performance is maintained.

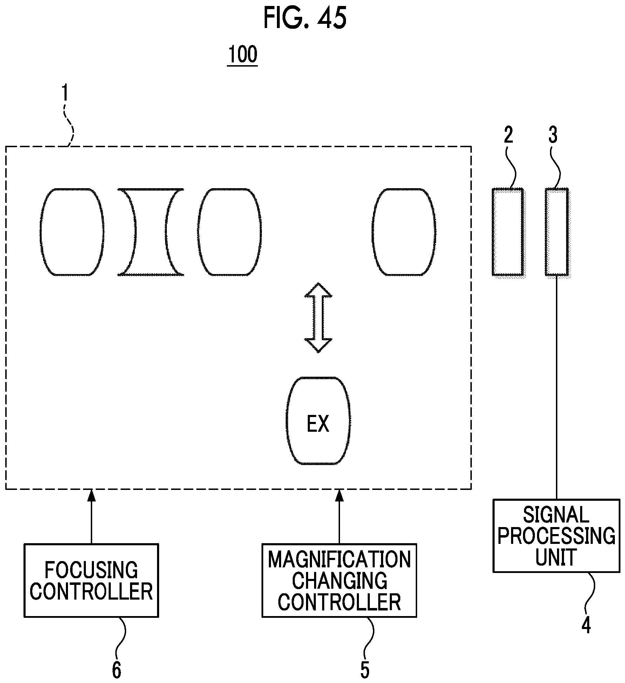

Next, an imaging apparatus according to an embodiment of the present disclosure will be described. Fig. 45 is a schematic configuration diagram showing an imaging apparatus 100 according to an embodiment of the present disclosure. The imaging apparatus 100 is configured to include a zoom lens 1 according to an embodiment of the present disclosure. Examples of the imaging apparatus 100 may include a film making camera, a broadcasting camera, a surveillance camera, a digital camera, and a video camera.

The imaging apparatus 100 includes the zoom lens 1, a filter 2 disposed on the image side of the zoom lens 1, and an imaging element 3 disposed on the image side of the filter 2. The zoom lens 1 in Fig. 45 is conceptually shown. The zoom lens 1 includes the EX group EX that is inserted into and removed from the optical path to change the focal length of the zoom lens while keeping an imaging position constant.

The imaging element 3 converts an optical image formed by the zoom lens 1 into an electric signal, and for example, a charge coupled device (CCD) or a complementary metal oxide semiconductor (CMOS) or the like can be used. The imaging element 3 is disposed such that an imaging surface thereof matches with the image plane of the zoom lens 1. In addition, although only one imaging element 3 is shown in Fig. 45, the imaging apparatus 100 may be a so-called three-plate type imaging apparatus including three imaging elements.

The imaging apparatus 100 further includes a signal processing unit 4, a magnification changing controller 5, and a focusing controller 6. The signal processing unit 4 performs arithmetic processing on an output signal from the imaging element 3. The magnification changing controller 5 controls magnification changing of the zoom lens 1. The focusing controller 6 controls focusing of the zoom lens 1.

The present disclosed technology has been hitherto described through the embodiments and the examples, but the present disclosed technology is not limited to the above-described embodiments and examples, and may be modified into various forms. For example, the curvature radius, the surface spacing, the refractive index, the Abbe number, the aspherical coefficient, and the like of each of the lenses are not limited to the values shown in the examples, and different values may be used therefor.

Regarding the above-described embodiments and examples, the following supplementary notes will be further disclosed.

Supplementary Note 1

A zoom lens comprising:

a first lens group having a positive refractive power that is disposed closest to an object side;
a middle group that includes a plurality of lens groups; and
a final lens group that is disposed closest to an image side,
in which all of spacings between adjacent lens groups change during changing magnification,
the first lens group includes two negative lenses consecutively arranged in order from a position closest to the object side to the image side,
among the two negative lenses, a negative lens closer to the object side is a meniscus lens that has a convex surface facing the object side, and
in a case where a focal length of a whole system in a state where an infinite distance object is in focus at a wide angle end is represented by fw, and
a focal length of the first lens group is represented by f1,
Conditional Expression (1) represented by

$$0.1 < \mathrm{fw}/\mathrm{f1} < 0.8 \quad (1)$$

is satisfied.

Supplementary Note 2

The zoom lens according to Supplementary Note 1,

in which in a case where a distance on an optical axis from a lens surface closest to the object side in the first lens group to an object side principal point position of the first lens group in a state where the infinite distance object is in focus is represented by H1f,
a distance on the optical axis from the lens surface closest to the object side in the first lens group to an object side principal point position of the whole system in a state where the infinite distance object is in focus at a telephoto end is represented by Hft, and
the object side is negative and the image side is positive regarding signs of H1f and Hft with reference to the lens surface closest to the object side in the first lens group,
Conditional Expression (2) represented by

$$0.1 < H1f/Hft < 0.95 \quad (2)$$

is satisfied.

Supplementary Note 3

The zoom lens according to Supplementary Note 1 or 2,
in which an L1n lens having a negative refractive power is disposed adjacent to the image side of an L1p lens that is a positive lens closest to the object side among positive lenses in the first lens group.

Supplementary Note 4

The zoom lens according to any one of Supplementary Notes 1 to 3,

in which in a case where a distance on an optical axis from a lens surface closest to the object side in the first lens group to an object side principal point position of the first lens group in a state where the infinite distance object is in focus is represented by H1f,
a distance on an optical axis from the lens surface closest to the object side in the first lens group to an object side principal point position of the whole system in a state where the infinite distance object is in focus at a telephoto end is represented by Hft, and
the object side is negative and the image side is positive regarding signs of H1f and Hft with reference to the lens surface closest to the object side in the first lens group,
Conditional Expression (2-1) represented by

$$0.28 < H1f/Hft < 0.7 \quad (2\text{-}1)$$

is satisfied.

Supplementary Note 5

The zoom lens according to any one of Supplementary Notes 1 to 4,

in which in a case where a spacing on an optical axis between an object side principal point position of the first lens group and an image side principal point position of the first lens group in a state where the infinite distance object is in focus is represented by HD1,
Conditional Expression (3) represented by

$$1.4 < HD1/f1 < 2.16 \quad (3)$$

is satisfied.

Supplementary Note 6

The zoom lens according to any one of Supplementary Notes 1 to 5,

in which the first lens group consists of a first a partial group, a first b partial group, and a first c partial group in order from the object side to the image side, and
during focusing, a spacing between the first a partial group and the first b partial group changes and a spacing between the first b partial group and the first c partial group changes.

Supplementary Note 7

The zoom lens according to Supplementary Note 6,

in which in a case where a focal length of the first b partial group is represented by f1b,
Conditional Expression (4) represented by

$$0.3 < f1/f1b < 1 \quad (4)$$

is satisfied.

Supplementary Note 8

The zoom lens according to Supplementary Note 6 or 7,
in which a lens closest to the image side in the first a partial group is a negative lens.

Supplementary Note 9

The zoom lens according to Supplementary Note 8,
in which a positive lens is disposed adjacent to the object side of the negative lens closest to the image side in the first a partial group.

Supplementary Note 10

The zoom lens according to any one of Supplementary Notes 6 to 9,
in which the first a partial group has a negative refractive power.

Supplementary Note 11

The zoom lens according to any one of Supplementary Notes 6 to 10,
in which the first b partial group has a positive refractive power.

Supplementary Note 12

The zoom lens according to any one of Supplementary Notes 6 to 11,
in which the first c partial group has a positive refractive power.

Supplementary Note 13

The zoom lens according to any one of Supplementary Notes 6 to 12,
in which during focusing from the infinite distance object to a close distance object, the first a partial group and the first c partial group are fixed to an image plane and the first b partial group moves toward the image side.

Supplementary Note 14

The zoom lens according to any one of Supplementary Notes 1 to 13,
in which during changing magnification, the first lens group is fixed to an image plane.

Supplementary Note 15

The zoom lens according to any one of Supplementary Notes 1 to 14,
in which during changing magnification, the final lens group is fixed to an image plane.

Supplementary Note 16

The zoom lens according to any one of Supplementary Notes 1 to 15,
in which the first lens group includes six or more lenses.

Supplementary Note 17

The zoom lens according to any one of Supplementary Notes 1 to 16, comprising:
an aperture stop that is fixed to an image plane during changing magnification.

Supplementary Note 18

The zoom lens according to any one of Supplementary Notes 1 to 17,

in which in a case where a distance on an optical axis from a lens surface closest to the image side in the first lens group to an image side principal point position of the first lens group in a state where the infinite distance object is in focus is represented by H1r, and
the object side is negative and the image side is positive regarding a sign of H1r with reference to the lens surface closest to the image side in the first lens group,
Conditional Expression (5) represented by

$$0.7 < H1r/f1 < 1.5 \quad (5)$$

is satisfied.

Supplementary Note 19

The zoom lens according to any one of Supplementary Notes 1 to 18,

in which in a case where a distance on an optical axis from a lens surface closest to the object side in the first lens group to an object side principal point position of the first lens group in a state where the infinite distance object is in focus is represented by H1f,
the object side is negative and the image side is positive regarding a sign of H1f with reference to the lens surface closest to the object side in the first lens group,
Conditional Expression (6) represented by

$$0.7 < H1f/f1 < 2 \quad (6)$$

is satisfied.

Supplementary Note 20

The zoom lens according to Supplementary Note 3,

in which in a case where a refractive index of the L1p lens with respect to a d line is represented by N1p,
Conditional Expression (7) represented by

$$1.7 < N1p < 2.1 \quad (7)$$

is satisfied.

Supplementary Note 21

The zoom lens according to Supplementary Note 3 or 20,

in which in a case where an Abbe number of the L1p lens with respect to a d line is represented by v1p,
Conditional Expression (8) represented by

$$15 < v1p < 30 \quad (8)$$

is satisfied.

Supplementary Note 22

The zoom lens according to Supplementary Note 3,

in which in a case where a refractive index of the L1n lens with respect to a d line is represented by N1n, Conditional Expression (9) represented by

$$1.43 < N1n < 1.85 \quad (9)$$

is satisfied.

Supplementary Note 23

The zoom lens according to Supplementary Note 3 or 22,

in which in a case where an Abbe number of the L1n lens with respect to a d line is represented by v1n, Conditional Expression (10) represented by

$$30 < v1n < 60 \ (10)$$

is satisfied.

Supplementary Note 24

The zoom lens according to Supplementary Note 3,

in which in a case where an average value of Abbe numbers of all of negative lenses closer to the object side than the L1p lens with respect to a d line is represented by v1nave, Conditional Expression (11) represented by

$$35 < v1nave < 60 \quad (11)$$

is satisfied.

Supplementary Note 25

The zoom lens according to Supplementary Note 3,

in which in a case where an average value of partial dispersion ratios between a g line and a F line in all of negative lenses closer to the object side than the L1p lens is represented by θ1nave, Conditional Expression (12) represented by

$$0.5 < \theta 1nave < 0.6 \quad (12)$$

is satisfied.

Supplementary Note 26

The zoom lens according to any one of Supplementary Notes 1 to 25,

in which in a case where a distance on an optical axis from a lens surface closest to the object side in the first lens group to a paraxial entrance pupil position in a state where the infinite distance object is in focus at the wide angle end is represented by Denw, Conditional Expression (13) represented by

$$2 < Denw/fw < 3.5 \quad (13)$$

is satisfied.

Supplementary Note 27

The zoom lens according to Supplementary Note 6,

in which in a case where a focal length of the first a partial group is represented by f1a,
Conditional Expression (14) represented by

$$-2 < f1/f1a < 0 \quad (14)$$

is satisfied.

Supplementary Note 28

The zoom lens according to Supplementary Note 6,

in which in a case where a focal length of the first c partial group is represented by f1c,
Conditional Expression (15) represented by

$$0.3 < f1/f1c < 0.8 \quad (15)$$

is satisfied.

Supplementary Note 29

The zoom lens according to any one of Supplementary Notes 1 to 28,

in which in a case where a paraxial curvature radius of an image side surface of a lens closest to the object side in the first lens group is represented by R2, and
a paraxial curvature radius of an object side surface of a second lens from the object side of the first lens group is R3,
Conditional Expression (16) represented by

$$-3 < (R2 - R3)/(R2 + R3) < 0 \quad (16)$$

is satisfied.

Supplementary Note 30

The zoom lens according to any one of Supplementary Notes 1 to 29,

in which in a case where an air spacing having a longest distance among air spacings on an optical axis in the final lens group in a state where the infinite distance object is in focus at the wide angle end is defined as a longest air spacing, an EX group that is inserted into an optical path of the longest air spacing to change a focal length of the zoom lens while keeping an imaging position constant is insertably and removably disposed.

Supplementary Note 31

The zoom lens according to Supplementary Note 30,
in which the EX group is inserted and removed to change a maximum image height.

Supplementary Note 32

The zoom lens according to any one of Supplementary Notes 1 to 31,

in a case where a distance on an optical axis from a lens surface closest to the image side in the first lens group to a lens surface adjacent to the image side of the lens surface closest to the image side in the first lens group in a state where the infinite distance object is in focus at the wide angle end is represented by d1R, and
a maximum image height in a state where the infinite distance object is in focus at the wide angle end is represented by IHw,
Conditional Expression (17) represented by

$$0.03 < d1R/IHw < 0.097 \quad (17)$$

is satisfied.

Supplementary Note 33

An imaging apparatus comprising:

the zoom lens according to any one of Supplementary Notes 1 to 32.

Explanation of References

1: zoom lens
2: filter
3: imaging element
4: signal processing unit
5: magnification changing controller
6: focusing controller
100: imaging apparatus
D1a: thickness
D1b: thickness
D1c: thickness
d1R: distance
DAmax: longest air spacing
Dent: distance
Denw: distance
DEX: thickness
Dexw: distance
DG1: thickness
Er: effective radius
ErL1: effective radius
EX: EX group
G1: first lens group
G1a: first a partial group
G1b: first b partial group
G1c: first c partial group
G2: second lens group
G3: third lens group
GE: final lens group
GEE: final lens group
GM: middle group
GN: N lens group
GP: P lens group
H1f: distance
H1r: distance
HD1: spacing
Hft: distance
IHEw: maximum image height
IHw: maximum image height
L11 to L19: lens
Lx: lens
Pent: paraxial entrance pupil position

Penw: paraxial entrance pupil position
Pexw: paraxial exit pupil position
PH1f: object side principal point position
PH1r: image side principal point position
PHft: object side principal point position
PP: optical member
Px: position
Sim: image plane
St: aperture stop
tL1: center thickness
UN: negative group
Xa: on-axis luminous flux
Xb: off-axis luminous flux
Xb1: ray
Z: optical axis
ωEXt: maximum half angle of view
ωEXw: maximum half angle of view
ωt: maximum half angle of view
ωw: maximum half angle of view

**Claims**

1.  A zoom lens comprising:

    a first lens group having a positive refractive power that is disposed closest to an object side;
    a middle group that includes a plurality of lens groups; and
    a final lens group that is disposed closest to an image side,
    wherein all of spacings between adjacent lens groups change during changing magnification,
    the first lens group includes two negative lenses consecutively arranged in order from a position closest to the object side to the image side,
    among the two negative lenses, a negative lens closer to the object side is a meniscus lens that has a convex surface facing the object side, and
    in a case where a focal length of the zoom lens in a state where an infinite distance object is in focus at a wide angle end is represented by fw, and
    a focal length of the first lens group is represented by f1,
    Conditional Expression (1) represented by

$$0.1 < \mathrm{fw/f1} < 0.8 \quad (1)$$

    is satisfied.

2.  The zoom lens according to claim 1,

    wherein in a case where a distance on an optical axis from a lens surface closest to the object side in the first lens group to an object side principal point position of the first lens group in a state where the infinite distance object is in focus is represented by H1f,
    a distance on the optical axis from the lens surface closest to the object side in the first lens group to an object side principal point position of the zoom lens in a state where the infinite distance object is in focus at a telephoto end is represented by Hft, and
    the object side is negative and the image side is positive regarding signs of H1f and Hft with reference to the lens surface closest to the object side in the first lens group,
    Conditional Expression (2) represented by

$$0.1 < \mathrm{H1f/Hft} < 0.95 \quad (2)$$

    is satisfied.

3. The zoom lens according to claim 1 or 2,
   wherein an L1n lens having a negative refractive power is disposed adjacent to the image side of an L1p lens that is a positive lens closest to the object side among positive lenses in the first lens group.

4. The zoom lens according to any one of claims 1 to 3,

   wherein in a case where a distance on an optical axis from a lens surface closest to the object side in the first lens group to an object side principal point position of the first lens group in a state where the infinite distance object is in focus is represented by H1f,
   a distance on an optical axis from the lens surface closest to the object side in the first lens group to an object side principal point position of the zoom lens in a state where the infinite distance object is in focus at a telephoto end is represented by Hft, and
   the object side is negative and the image side is positive regarding signs of H1f and Hft with reference to the lens surface closest to the object side in the first lens group,
   Conditional Expression (2-1) represented by

$$0.28 < \text{H1f/Hft} < 0.7 \quad (2\text{-}1)$$

   is satisfied.

5. The zoom lens according to any one of claims 1 to 4,

   wherein in a case where a spacing on an optical axis between an object side principal point position of the first lens group and an image side principal point position of the first lens group in a state where the infinite distance object is in focus is represented by HD1,
   Conditional Expression (3) represented by

$$1.4 < \text{HD1/f1} < 2.16 \quad (3)$$

   is satisfied.

6. The zoom lens according to any one of claims 1 to 5,

   wherein the first lens group consists of a first a partial group, a first b partial group, and a first c partial group in order from the object side to the image side, and
   during focusing, a spacing between the first a partial group and the first b partial group changes and a spacing between the first b partial group and the first c partial group changes.

7. The zoom lens according to claim 6,

   wherein in a case where a focal length of the first b partial group is represented by f1b,
   Conditional Expression (4) represented by

$$0.3 < \text{f1/f1b} < 1 \quad (4)$$

   is satisfied.

8. The zoom lens according to claim 6 or 7,
   wherein a lens closest to the image side in the first a partial group is a negative lens.

9. The zoom lens according to claim 8,
   wherein a positive lens is disposed adjacent to the object side of the negative lens closest to the image side in the first a partial group.

10. The zoom lens according to any one of claims 6 to 9,
    wherein the first a partial group has a negative refractive power.

11. The zoom lens according to any one of claims 6 to 10,
wherein the first b partial group has a positive refractive power.

12. The zoom lens according to any one of claims 6 to 11,
wherein the first c partial group has a positive refractive power.

13. The zoom lens according to any one of claims 6 to 12,
wherein during focusing from the infinite distance object to a close distance object, the first a partial group and the first c partial group are fixed to an image plane and the first b partial group moves toward the image side.

14. The zoom lens according to any one of claims 1 to 13,
wherein during changing magnification, the first lens group is fixed to an image plane.

15. The zoom lens according to any one of claims 1 to 14,
wherein during changing magnification, the final lens group is fixed to an image plane.

16. The zoom lens according to any one of claims 1 to 15,
wherein the first lens group includes six or more lenses.

17. The zoom lens according to any one of claims 1 to 16, comprising:
an aperture stop that is fixed to an image plane during changing magnification.

18. The zoom lens according to any one of claims 1 to 17,

wherein in a case where a distance on an optical axis from a lens surface closest to the image side in the first lens group to an image side principal point position of the first lens group in a state where the infinite distance object is in focus is represented by H1r, and
the object side is negative and the image side is positive regarding a sign of H1r with reference to the lens surface closest to the image side in the first lens group,
Conditional Expression (5) represented by

$$0.7 < H1r/f1 < 1.5 \quad (5)$$

is satisfied.

19. The zoom lens according to any one of claims 1 to 18,

wherein in a case where a distance on an optical axis from a lens surface closest to the object side in the first lens group to an object side principal point position of the first lens group in a state where the infinite distance object is in focus is represented by H1f,
the object side is negative and the image side is positive regarding a sign of H1f with reference to the lens surface closest to the object side in the first lens group,
Conditional Expression (6) represented by

$$0.7 < H1f/f1 < 2 \quad (6)$$

is satisfied.

20. The zoom lens according to claim 3,

wherein in a case where a refractive index of the L1p lens with respect to a d line is represented by N1p,
Conditional Expression (7) represented by

$$1.7 < N1p < 2.1 \quad (7)$$

is satisfied.

21. The zoom lens according to claim 3 or 20,

wherein in a case where an Abbe number of the L1p lens with respect to a d line is represented by v1p, Conditional Expression (8) represented by

$$15 < v1p < 30 \quad (8)$$

is satisfied.

22. The zoom lens according to claim 3,

wherein in a case where a refractive index of the L1n lens with respect to a d line is represented by N1n, Conditional Expression (9) represented by

$$1.43 < N1n < 1.85 \quad (9)$$

is satisfied.

23. The zoom lens according to claim 3 or 22,

wherein in a case where an Abbe number of the L1n lens with respect to a d line is represented by v1n, Conditional Expression (10) represented by

$$30 < v1n < 60 \quad (10)$$

is satisfied.

24. The zoom lens according to claim 3,

wherein in a case where an average value of Abbe numbers of all of negative lenses closer to the object side than the L1p lens with respect to a d line is represented by v1nave, Conditional Expression (11) represented by

$$35 < v1nave < 60 \quad (11)$$

is satisfied.

25. The zoom lens according to claim 3,

wherein in a case where an average value of partial dispersion ratios between a g line and a F line in all of negative lenses closer to the object side than the L1p lens is represented by θ1nave, Conditional Expression (12) represented by

$$0.5 < \theta 1nave < 0.6 \quad (12)$$

is satisfied.

26. The zoom lens according to any one of claims 1 to 25,

wherein in a case where a distance on an optical axis from a lens surface closest to the object side in the first lens group to a paraxial entrance pupil position in a state where the infinite distance object is in focus at the wide angle end is represented by Denw, Conditional Expression (13) represented by

$$2 < Denw/fw < 3.5 \quad (13)$$

is satisfied.

**27.** The zoom lens according to claim 6,

wherein in a case where a focal length of the first a partial group is represented by f1a,
Conditional Expression (14) represented by

$$-2 < f1/f1a < 0 \quad (14)$$

is satisfied.

**28.** The zoom lens according to claim 6,

wherein in a case where a focal length of the first c partial group is represented by f1c,
Conditional Expression (15) represented by

$$0.3 < f1/f1c < 0.8 \quad (15)$$

is satisfied.

**29.** The zoom lens according to any one of claims 1 to 28,

wherein in a case where a paraxial curvature radius of an image side surface of a lens closest to the object side in the first lens group is represented by R2, and
a paraxial curvature radius of an object side surface of a second lens from the object side of the first lens group is R3,
Conditional Expression (16) represented by

$$-3 < (R2 - R3)/(R2 + R3) < 0 \quad (16)$$

is satisfied.

**30.** The zoom lens according to any one of claims 1 to 29,

wherein in a case where an air spacing having a longest distance among air spacings on an optical axis in the final lens group in a state where the infinite distance object is in focus at the wide angle end is defined as a longest air spacing,
an EX group that is inserted into an optical path of the longest air spacing to change a focal length of the zoom lens while keeping an imaging position constant is insertably and removably disposed.

**31.** The zoom lens according to claim 30,
wherein the EX group is inserted and removed to change a maximum image height.

**32.** The zoom lens according to any one of claims 1 to 31,

wherein in a case where a distance on an optical axis from a lens surface closest to the image side in the first lens group to a lens surface adjacent to the image side of the lens surface closest to the image side in the first lens group in a state where the infinite distance object is in focus at the wide angle end is represented by d1R, and
a maximum image height in a state where the infinite distance object is in focus at the wide angle end is represented by IHw,
Conditional Expression (17) represented by

$$0.03 < d1R/IHw < 0.097 \quad (17)$$

is satisfied.

**33.** An imaging apparatus comprising:
the zoom lens according to any one of claims 1 to 32.

# FIG. 1

## EXAMPLE 1

# FIG. 2

FIG. 3

EP 4 617 759 A1

# FIG. 4

EP 4 617 759 A1

# FIG. 5

# FIG. 6

## EXAMPLE 1-1

# FIG. 7

EXAMPLE 1

# FIG. 8

EXAMPLE 1-1

Wide

Middle

Tele

# FIG. 9

## EXAMPLE 2

Wide

G1
G1a G1b G1c
GM
Z
UN GN GP
GE
St
PP
Sim

Tele
Z

# FIG. 10

EXAMPLE 2

Wide

Middle

Tele

FIG. 11

EXAMPLE 2-1

# FIG. 12

EXAMPLE 2-1

# FIG. 13

## EXAMPLE 3

# FIG. 14

EXAMPLE 3

Wide

Middle

Tele

FIG. 15

EXAMPLE 3-1

EP 4 617 759 A1

# FIG. 16

EXAMPLE 3-1

**Wide**

FNo. = 4.11 / ω = 45.4° / ω = 45.4° / ω = 45.4°

SPHERICAL ABERRATION [μm] / ASTIGMATISM [μm] / DISTORTION [%] / LATERAL CHROMATIC ABERRATION [μm]

**Middle**

FNo. = 4.11 / ω = 15.0° / ω = 15.0° / ω = 15.0°

SPHERICAL ABERRATION [μm] / ASTIGMATISM [μm] / DISTORTION [%] / LATERAL CHROMATIC ABERRATION [μm]

**Tele**

FNo. = 5.48 / ω = 7.6° / ω = 7.6° / ω = 7.6°

SPHERICAL ABERRATION [μm] / ASTIGMATISM [μm] / DISTORTION [%] / LATERAL CHROMATIC ABERRATION [μm]

111

# FIG. 17

## EXAMPLE 4

# FIG. 18

EXAMPLE 4

# FIG. 19

## EXAMPLE 4-1

# FIG. 20

EXAMPLE 4-1

Wide

FNo. = 3.99　　　　ω = 47.1°　　　　ω = 47.1°　　　　ω = 47.1°

—— d LINE
——- C LINE
------- F LINE

—— d LINE (S)
------- d LINE (T)

—— d LINE

——- C LINE
------- F LINE

-2000　0　2000　-2000　0　2000　-20　0　20　-75　0　75

SPHERICAL [μm]　ASTIGMATISM [μm]　DISTORTION [%]　LATERAL [μm]
ABERRATION　　　　　　　　　　　　　　　　　CHROMATIC ABERRATION

Middle

FNo. = 3.99　　　　ω = 15.9°　　　　ω = 15.9°　　　　ω = 15.9°

—— d LINE
——- C LINE
------- F LINE

—— d LINE (S)
------- d LINE (T)

—— d LINE

——- C LINE
------- F LINE

-2000　0　2000　-2000　0　2000　-20　0　20　-75　0　75

SPHERICAL [μm]　ASTIGMATISM [μm]　DISTORTION [%]　LATERAL [μm]
ABERRATION　　　　　　　　　　　　　　　　　CHROMATIC ABERRATION

Tele

FNo. = 5.37　　　　ω = 8.1°　　　　ω = 8.1°　　　　ω = 8.1°

—— d LINE
——- C LINE
------- F LINE

—— d LINE (S)
------- d LINE (T)

—— d LINE

——- C LINE
------- F LINE

-2000　0　2000　-2000　0　2000　-20　0　20　-75　0　75

SPHERICAL [μm]　ASTIGMATISM [μm]　DISTORTION [%]　LATERAL [μm]
ABERRATION　　　　　　　　　　　　　　　　　CHROMATIC ABERRATION

# FIG. 21

## EXAMPLE 5

# FIG. 22

EXAMPLE 5

## FIG. 23

EXAMPLE 5-1

EP 4 617 759 A1

# FIG. 24

EXAMPLE 5-1

Wide

Middle

Tele

# FIG. 25

## EXAMPLE 6

Wide

G1

G1a  G1b  G1c

GM

UN   GN GP

GE

Z

St

PP

Sim

Tele

Z

# FIG. 26

EXAMPLE 6

FIG. 27

EXAMPLE 6-1

EP 4 617 759 A1

# FIG. 28

EXAMPLE 6-1

Wide

FNo. = 4.12

—— d LINE
––– C LINE
------- F LINE

-2000    0    2000
SPHERICAL [μm]
ABERRATION

ω = 45.8°

—— d LINE (S)
------- d LINE (T)

-2000    0    2000
ASTIGMATISM [μm]

ω = 45.8°

—— d LINE

-20    0    20
DISTORTION [%]

ω = 45.8°

––– C LINE
------- F LINE

-75    0    75
LATERAL [μm]
CHROMATIC ABERRATION

Middle

FNo. = 4.12

—— d LINE
––– C LINE
------- F LINE

-2000    0    2000
SPHERICAL [μm]
ABERRATION

ω = 15.1°

—— d LINE (S)
------- d LINE (T)

-2000    0    2000
ASTIGMATISM [μm]

ω = 15.1°

—— d LINE

-20    0    20
DISTORTION [%]

ω = 15.1°

––– C LINE
------- F LINE

-75    0    75
LATERAL [μm]
CHROMATIC ABERRATION

Tele

FNo. = 5.47

—— d LINE
––– C LINE
------- F LINE

-2000    0    2000
SPHERICAL [μm]
ABERRATION

ω = 7.7°

—— d LINE (S)
------- d LINE (T)

-2000    0    2000
ASTIGMATISM [μm]

ω = 7.7°

—— d LINE

-20    0    20
DISTORTION [%]

ω = 7.7°

––– C LINE
------- F LINE

-75    0    75
LATERAL [μm]
CHROMATIC ABERRATION

# FIG. 29

## EXAMPLE 7

# FIG. 30

EXAMPLE 7

Wide

Middle

Tele

# FIG. 31

EXAMPLE 7-1

EP 4 617 759 A1

# FIG. 32

## EXAMPLE 7-1

Wide

Middle

Tele

# FIG. 33

## EXAMPLE 8

# FIG. 34

EXAMPLE 8

Wide

FNo. = 2.75 | ω = 47.6° | ω = 47.6° | ω = 47.6°

—— d LINE
--- C LINE
······ F LINE

—— d LINE (S)
······ d LINE (T)

—— d LINE

--- C LINE
······ F LINE

-1000  0  1000   -1000  0  1000   -20  0  20   -50  0  50

SPHERICAL [μm]    ASTIGMATISM [μm]    DISTORTION [%]    LATERAL [μm]
ABERRATION                                              CHROMATIC ABERRATION

Middle

FNo. = 2.74 | ω = 16.0° | ω = 16.0° | ω = 16.0°

—— d LINE
--- C LINE
······ F LINE

—— d LINE (S)
······ d LINE (T)

—— d LINE

--- C LINE
······ F LINE

-1000  0  1000   -1000  0  1000   -20  0  20   -50  0  50

SPHERICAL [μm]    ASTIGMATISM [μm]    DISTORTION [%]    LATERAL [μm]
ABERRATION                                              CHROMATIC ABERRATION

Tele

FNo. = 3.68 | ω = 8.2° | ω = 8.2° | ω = 8.2°

—— d LINE
--- C LINE
······ F LINE

—— d LINE (S)
······ d LINE (T)

—— d LINE

--- C LINE
······ F LINE

-1000  0  1000   -1000  0  1000   -20  0  20   -50  0  50

SPHERICAL [μm]    ASTIGMATISM [μm]    DISTORTION [%]    LATERAL [μm]
ABERRATION                                              CHROMATIC ABERRATION

# FIG. 35

EXAMPLE 8-1

Z

G1

G1a  G1b  G1c

GEE

EX

G3

G2

UN

GM

GN  GP

St

PP

Sim

# FIG. 36

EXAMPLE 8-1

Wide

FNo. = 4.12

—— d LINE
––– C LINE
······· F LINE

-2000　0　2000
SPHERICAL [μm]
ABERRATION

ω = 47.0°

—— d LINE (S)
······· d LINE (T)

-2000　0　2000
ASTIGMATISM [μm]

ω = 47.0°

—— d LINE

-20　0　20
DISTORTION [%]

ω = 47.0°

––– C LINE
······· F LINE

-75　0　75
LATERAL [μm]
CHROMATIC ABERRATION

Middle

FNo. = 4.12

—— d LINE
––– C LINE
······· F LINE

-2000　0　2000
SPHERICAL [μm]
ABERRATION

ω = 15.8°

—— d LINE (S)
······· d LINE (T)

-2000　0　2000
ASTIGMATISM [μm]

ω = 15.8°

—— d LINE

-20　0　20
DISTORTION [%]

ω = 15.8°

––– C LINE
······· F LINE

-75　0　75
LATERAL [μm]
CHROMATIC ABERRATION

Tele

FNo. = 5.36

—— d LINE
––– C LINE
······· F LINE

-2000　0　2000
SPHERICAL [μm]
ABERRATION

ω = 8.0°

—— d LINE (S)
······· d LINE (T)

-2000　0　2000
ASTIGMATISM [μm]

ω = 8.0°

—— d LINE

-20　0　20
DISTORTION [%]

ω = 8.0°

––– C LINE
······· F LINE

-75　0　75
LATERAL [μm]
CHROMATIC ABERRATION

# FIG. 37

## EXAMPLE 9

# FIG. 38

EXAMPLE 9

Wide

FNo. = 2.74

ω = 49.5°

ω = 49.5°

ω = 49.5°

—— d LINE
--- C LINE
······ F LINE

—— d LINE (S)
······ d LINE (T)

—— d LINE

--- C LINE
······ F LINE

-1000    0    1000   -1000    0    1000   -20    0    20   -50    0    50

SPHERICAL [μm]     ASTIGMATISM [μm]     DISTORTION [%]     LATERAL [μm]
ABERRATION                                                CHROMATIC ABERRATION

Middle

FNo. = 2.80

ω = 16.3°

ω = 16.3°

ω = 16.3°

—— d LINE
--- C LINE
······ F LINE

—— d LINE (S)
······ d LINE (T)

—— d LINE

--- C LINE
······ F LINE

-1000    0    1000   -1000    0    1000   -20    0    20   -50    0    50

SPHERICAL [μm]     ASTIGMATISM [μm]     DISTORTION [%]     LATERAL [μm]
ABERRATION                                                CHROMATIC ABERRATION

Tele

FNo. = 3.73

ω = 8.1°

ω = 8.1°

ω = 8.1°

—— d LINE
--- C LINE
······ F LINE

—— d LINE (S)
······ d LINE (T)

—— d LINE

--- C LINE
······ F LINE

-1000    0    1000   -1000    0    1000   -20    0    20   -50    0    50

SPHERICAL [μm]     ASTIGMATISM [μm]     DISTORTION [%]     LATERAL [μm]
ABERRATION                                                CHROMATIC ABERRATION

FIG. 39

EXAMPLE 9-1

# FIG. 40

EXAMPLE 9-1

Wide

FNo. = 4.11   ω = 48.3°   ω = 48.3°   ω = 48.3°

—— d LINE
——- C LINE
------- F LINE

—— d LINE (S)
------- d LINE (T)

—— d LINE

——- C LINE
------- F LINE

-2000　0　2000　-2000　0　2000　-20　0　20　-75　0　75

SPHERICAL [μm]　ASTIGMATISM [μm]　DISTORTION [%]　LATERAL [μm]
ABERRATION　　　　　　　　　　　　　　　　　　CHROMATIC ABERRATION

Middle

FNo. = 4.18   ω = 15.7°   ω = 15.7°   ω = 15.7°

—— d LINE
——- C LINE
------- F LINE

—— d LINE (S)
------- d LINE (T)

—— d LINE

——- C LINE
------- F LINE

-2000　0　2000　-2000　0　2000　-20　0　20　-75　0　75

SPHERICAL [μm]　ASTIGMATISM [μm]　DISTORTION [%]　LATERAL [μm]
ABERRATION　　　　　　　　　　　　　　　　　　CHROMATIC ABERRATION

Tele

FNo. = 5.57   ω = 7.8°   ω = 7.8°   ω = 7.8°

—— d LINE
——- C LINE
------- F LINE

—— d LINE (S)
------- d LINE (T)

—— d LINE

——- C LINE
------- F LINE

-2000　0　2000　-2000　0　2000　-20　0　20　-75　0　75

SPHERICAL [μm]　ASTIGMATISM [μm]　DISTORTION [%]　LATERAL [μm]
ABERRATION　　　　　　　　　　　　　　　　　　CHROMATIC ABERRATION

# FIG. 41

## EXAMPLE 10

# FIG. 42

EXAMPLE 10

Wide

FNo. = 2.75

—— d LINE
--- C LINE
------ F LINE

-1000    0    1000
SPHERICAL [μm]
ABERRATION

ω = 47.8°

—— d LINE (S)
------ d LINE (T)

-1000    0    1000
ASTIGMATISM [μm]

ω = 47.8°

—— d LINE

-20    0    20
DISTORTION [%]

ω = 47.8°

--- C LINE
------ F LINE

-50    0    50
LATERAL [μm]
CHROMATIC ABERRATION

Middle

FNo. = 2.75

—— d LINE
--- C LINE
------ F LINE

-1000    0    1000
SPHERICAL [μm]
ABERRATION

ω = 16.0°

—— d LINE (S)
------ d LINE (T)

-1000    0    1000
ASTIGMATISM [μm]

ω = 16.0°

—— d LINE

-20    0    20
DISTORTION [%]

ω = 16.0°

--- C LINE
------ F LINE

-50    0    50
LATERAL [μm]
CHROMATIC ABERRATION

Tele

FNo. = 3.62

—— d LINE
--- C LINE
------ F LINE

-1000    0    1000
SPHERICAL [μm]
ABERRATION

ω = 8.2°

—— d LINE (S)
------ d LINE (T)

-1000    0    1000
ASTIGMATISM [μm]

ω = 8.2°

—— d LINE

-20    0    20
DISTORTION [%]

ω = 8.2°

--- C LINE
------ F LINE

-50    0    50
LATERAL [μm]
CHROMATIC ABERRATION

# FIG. 43

## EXAMPLE 10-1

EP 4 617 759 A1

# FIG. 44

EXAMPLE 10-1

## FIG. 45

<u>100</u>

1

2  3

EX

FOCUSING CONTROLLER

6

MAGNIFICATION CHANGING CONTROLLER

5

SIGNAL PROCESSING UNIT

4

Europäisches
Patentamt

European
Patent Office

Office européen
des brevets

## EUROPEAN SEARCH REPORT

**Application Number**

EP 25 16 2706

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/048655 A1 (SHIMOMURA KAZUYA [JP]) 18 February 2021 (2021-02-18) | 1-29,32, 33 | INV. G02B15/14 |
| A | * par. 1; par. 72; fig. 1; fig. 1, lens groups L2, L3 and L4; par. 71 and 120, table "Numerical Value Embodiment 1", par. 71, par. 9 - 50; p. 11, upper right table; p. 11, lower left table; par. 75; fig. 7; fig. 1 and par. 72; par. 73; par. 78 * ----- | 30,31 | G02B15/167 G02B15/20 |
| A | US 9 588 323 B2 (CANON KK [JP]) 7 March 2017 (2017-03-07) * col. 13, table "NUMERIC EXAMPLE 1" * ----- | 1-31 | |

**TECHNICAL FIELDS SEARCHED (IPC)**

G02B

The present search report has been drawn up for all claims

| Place of search | Date of completion of the search | Examiner |
|---|---|---|
| Munich | 6 August 2025 | Thieme, Markus |

## ANNEX TO THE EUROPEAN SEARCH REPORT
## ON EUROPEAN PATENT APPLICATION NO.

EP 25 16 2706

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2025

| Patent document cited in search report | Publication date | Patent family member(s) | Publication date |
|---|---|---|---|
| US 2021048655 A1 | 18-02-2021 | JP 7344714 B2<br>JP 2021032924 A<br>US 2021048655 A1 | 14-09-2023<br>01-03-2021<br>18-02-2021 |
| US 9588323 B2 | 07-03-2017 | EP 2921896 A1<br>JP 6153488 B2<br>JP 2015176118 A<br>US 2015268456 A1 | 23-09-2015<br>28-06-2017<br>05-10-2015<br>24-09-2015 |

EPO FORM P0459

For more details about this annex : see Official Journal of the European Patent Office, No. 12/82

**REFERENCES CITED IN THE DESCRIPTION**

**Patent documents cited in the description**

- JP 2019078849 A